# EUROPEAN PATENT SPECIFICATION

(11) **EP 4 529 143 B1**
(45) Date of publication and mention of the grant of the patent: **08.07.2026**
(21) Application number: 23870843.2
(22) Date of filing: 26.09.2023
(51) Int. Cl.: H04M 1/02

(54) **ELECTRONIC DEVICE AND FOLDABLE MECHANISM**
ELEKTRONISCHE VORRICHTUNG UND KLAPPMECHANISMUS
DISPOSITIF ÉLECTRONIQUE ET MÉCANISME PLIABLE

(30) Priority: 30.09.2022 CN 202211211048
(43) Date of publication of application: 26.03.2025
(60) Divisional application: 26170174.2
(73) Proprietor: Huawei Technologies Co., Ltd., Shenzhen, Guangdong 518129 (CN)
(72) Inventor: TANG, Zecheng, Shenzhen, Guangdong 518129 (CN); XU, Zhengyi, Shenzhen, Guangdong 518129 (CN); YAN, Huiyin, Shenzhen, Guangdong 518129 (CN); LI, Chengyao, Shenzhen, Guangdong 518129 (CN)
(74) Representative: Körber, Martin Hans
(86) International application number: PCT/CN2023/121648
(87) International publication number: WO 2024/067615

(56) References cited:
- WO-A1-2021/121104
- CN-A- 107 165 506
- CN-A- 113 225 412
- CN-A- 114 697 416
- CN-U- 209 724 954
- CN-U- 219 268 892
- US-A1- 2021 011 527

## Description

### TECHNICAL FIELD

The present invention relates to the field of foldable electronic product technologies, and in particular, to an electronic device and a foldable mechanism.

### BACKGROUND

With development of a flexible display technology, a foldable electronic device that is based on a flexible display becomes a new technological innovation in the current industry. Currently, a foldable device with a flexible display tends to be miniaturized, and it is important to ensure synchronization of the foldable device in limited space.

In an existing synchronous gear, a tip circle of a single synchronous gear is the same. As a result, space occupation of the synchronous gear is not flexible enough, and some tooth parts of the synchronous gear have a problem of pressing against the flexible display or obstructing movement of a door plate. Consequently, it is likely to damage the flexible display or affect movement of a foldable mechanism.

Prior art is disclosed in CN219268892 U and WO2021/121104 A1.

### SUMMARY

Embodiments of this application provide an electronic device and a foldable mechanism. In this application, a synchronous gear includes two tooth parts, and radii of tip circles of the two tooth parts are different, so that space of the foldable mechanism occupied by the synchronous gear is flexibly configured, to prevent the synchronous gear in a folded state from pressing against a flexible display to damage the flexible display or obstructing movement of a door plate to affect folding or unfolding of the electronic device.

According to a first aspect, an embodiment of this application provides an electronic device. The electronic device includes a first housing, a second housing, a foldable mechanism, and a flexible display, where the first housing, the second housing, and the foldable mechanism jointly carry the flexible display. The foldable mechanism includes a main shaft, a first bracket, a second bracket, a first swing arm, a second swing arm, a first synchronous gear, and a second synchronous gear, where the first swing arm includes a first rotating end and a first sliding end, the first rotating end is rotatably connected to the main shaft, the first sliding end is slidably connected to the first bracket, and the first housing is fastened to the first bracket; and the second swing arm includes a second rotating end and a second sliding end, the second rotating end is rotatably connected to the main shaft, the second sliding end is slidably connected to the second bracket, and the second housing is fastened to the second bracket. It may be understood that the foldable mechanism is located between the first housing and the second housing. The first synchronous gear and the second synchronous gear are configured to enable the first swing arm and the second swing arm to move synchronously; the first synchronous gear is rotatably connected to the main shaft, the first synchronous gear includes a first tooth part and a second tooth part, and a radius of a tip circle of the first tooth part is different from a radius of a tip circle of the second tooth part; and the second synchronous gear is rotatably connected to the main shaft, the second synchronous gear includes a third tooth part and a fourth tooth part, a radius of a tip circle of the third tooth part is different from a radius of a tip circle of the fourth tooth part, and the third tooth part is engaged with the second tooth part.

The tip circle is a circle in which a tip is located. A radius of the tip circle is a distance from the top of a tooth to a rotation center. In embodiments of this application, the first rotating end of the first swing arm and the second rotating end of the second swing arm are in meshed connection through the first synchronous gear and the second synchronous gear, so that a rotation angle of the first rotating end of the first swing arm and a rotation angle of the second rotating end of the second swing arm have a same size and opposite directions, and rotation actions of the first swing arm and the second swing arm are kept synchronous relative to the main shaft, that is, the first swing arm and the second swing arm are synchronously close to or away from each other.

It may be understood that the radius of the tip circle of the first tooth part may be greater than or less than the radius of the tip circle of the second tooth part, and the radius of the tip circle of the fourth tooth part may be greater than or less than the radius of the tip circle of the third tooth part.

In this implementation of this application, the first synchronous gear includes two tooth parts: the first tooth part and the second tooth part, and the second synchronous gear includes two tooth parts: the third tooth part and the fourth tooth part. Tip circles of the two tooth parts of the first synchronous gear may be different in size, and tip circles of the two tooth parts of the second synchronous gear may be different in size. This helps adjust sizes of different tooth parts of the synchronous gear, adjust a rotation center of the first synchronous gear, and adjust a rotation center of the second synchronous gear based on space of the foldable mechanism and a structure of the foldable mechanism, so that the first synchronous gear and the second synchronous gear occupy the space of the foldable mechanism more flexibly, to help sufficiently utilize internal space of the foldable mechanism. It may be understood that, with miniaturization of the electronic device and the foldable mechanism, the internal space of the foldable mechanism is limited. In this application, the sizes of the tip circles of the two tooth parts of the first synchronous gear are different, and the sizes of the tip circles of the two tooth parts of the second synchronous gear are different, so that in limited space, a rotation center of the first rotating end, the rotation center of the first synchronous gear, the rotation center of the second synchronous gear, and a rotation center of the second rotating end can also be properly configured, to maximize space utilization. For example, in some implementations, if display accommodating space in a folded state is limited, the tip circle of the second tooth part and the tip circle of the third tooth part may be set to be small in size, to prevent the second tooth part and the third tooth part from pressing against the flexible display in the folded state. When the foldable mechanism moves, the tip circle of the first tooth part and the tip circle of the fourth tooth part may be set to be small in size, to avoid a door plate.

In a possible implementation, the first tooth part is engaged with the first rotating end, and the fourth tooth part is engaged with the second rotating end.

In a possible implementation, the main shaft includes a first side and a second side that are disposed opposite to each other, the first side is an appearance side of the main shaft, and the second side is closer to the flexible display than the first side; the radius of the tip circle of the first tooth part is greater than the radius of the tip circle of the second tooth part, and the radius of the tip circle of the fourth tooth part is greater than the radius of the tip circle of the third tooth part; and in a process in which the foldable mechanism is folded from an unfolded state to a folded state, the second tooth part moves in a direction close to the second side, and the third tooth part moves in a direction close to the second side.

In embodiments of this application, the radius of the tip circle of the first tooth part is set to be greater than the radius of the tip circle of the second tooth part, and the radius of the tip circle of the fourth tooth part is set to be greater than the radius of the tip circle of the third tooth part. This helps use as few synchronous gears as possible, so that the swing arm and the second swing arm move synchronously, and the first bracket and the second bracket move synchronously. In addition, this avoids a case in which the second tooth part of the first synchronous gear and the third tooth part of the second synchronous gear press against the flexible display to damage the flexible display when the foldable mechanism is in a folded state, so that display accommodating space can be increased. In addition, in this application, the tip circle of the first tooth part is greater in size, and the first tooth part whose tip circle is greater in size is engaged with the first swing arm; and the tip circle of the fourth tooth part is greater in size, and the fourth tooth part whose tip circle is greater in size is engaged with the second swing arm. Disposing of the first tooth part whose tip circle is greater in size and the fourth tooth part whose tip circle is greater in size helps reduce a quantity of synchronous gears and improve motion accuracy. In other words, in embodiments of this application, as few synchronous gears as possible may be used to provide as large display accommodating space as possible. In this way, when the electronic device tends to be miniaturized, it can be ensured that the first bracket and the second bracket of the foldable mechanism can be folded or unfolded synchronously in limited space without damaging the flexible display. A smaller quantity of synchronous gears indicates a larger size of the synchronous gear and a smaller accumulated transmission error of the synchronous gear, which helps improve motion accuracy.

In a possible implementation, the radius of the tip circle of the first tooth part is greater than the radius of the tip circle of the first rotating end, and the radius of the tip circle of the fourth tooth part is greater than the radius of the tip circle of the second rotating end, so that in a process of folding or unfolding the foldable mechanism, a rotation angle of the first tooth part is less than a rotation angle of the first swing arm, and a rotation angle of the fourth tooth part is less than a rotation angle of the second swing arm. This helps prevent the first tooth part whose tip circle is greater in size and the fourth tooth part whose tip circle is greater in size from obstructing movement of the first door plate and the second door plate and obstructing unfolding or folding of the foldable mechanism when the rotation angles are excessively large during rotation.

In a possible implementation, a spacing from a rotation center of the first rotating end to a rotation center of the first synchronous gear is a first spacing, a spacing from the rotation center of the first synchronous gear to a rotation center of the second synchronous gear is a second spacing, and the first spacing is greater than the second spacing. This helps reserve sufficient space for disposing the first rotating end and the first tooth part of the first synchronous gear. The size of the tip circle of the first tooth part may be increased according to a requirement to reduce a rotation angle of the first tooth part in a process of folding or unfolding the foldable mechanism, so as to prevent the first tooth part from touching the first door plate in a rotation process. In addition, the spacing from the rotation center of the first rotating end to the rotation center of the first synchronous gear is set to be large. In this case, when the foldable mechanism is in the folded state, the rotation center of the first rotating end is located on a side that is of a plane on which the first door plate is located and that is away from the flexible display. This helps avoid collision between the first tooth part and the first door plate, and helps increase display accommodating space of the foldable mechanism.

In a possible implementation, a spacing from a rotation center of the second rotating end to a rotation center of the second synchronous gear is a third spacing, a spacing from the rotation center of the first synchronous gear to the rotation center of the second synchronous gear is a second spacing, and the third spacing is greater than the second spacing.

In a possible implementation, the first synchronous gear includes a first non-tooth part and a second non-tooth part, the first tooth part and the second tooth part are spaced apart, both the first non-tooth part and the second non-tooth part are located between the first tooth part and the second tooth part and are spaced apart relative to each other, the first non-tooth part is closer to the first side than the second non-tooth part, the second non-tooth part is closer to the second side than the first non-tooth part, and a radian of the first non-tooth part is greater than a radian of the second non-tooth part. The radian of the first non-tooth part is set to be greater than the radian of the second non-tooth part, so that when the foldable mechanism is in the unfolded state, a plurality of teeth of the second tooth part press against the bottom of an outer cover. This helps reduce space occupied by the first synchronous gear in the unfolded state in a thickness direction of the electronic device.

In a possible implementation, the first synchronous gear includes a first non-tooth part and a second non-tooth part, the first tooth part and the second tooth part are spaced apart, both the first non-tooth part and the second non-tooth part are located between the first tooth part and the second tooth part and are spaced apart relative to each other, the first non-tooth part is closer to the first side than the second non-tooth part, and the second non-tooth part is closer to the second side than the first non-tooth part; a tooth that is of the first tooth part and that is connected to the first non-tooth part is a first tooth, a tooth that is of the second tooth part and that is connected to the first non-tooth part is a second tooth, a tooth that is of the first tooth part and that is connected to the second non-tooth part is a third tooth, a tooth that is of the second tooth part and that is connected to the second non-tooth part is a fourth tooth, and a spacing between a tip of the first tooth and a tip of the second tooth is greater than a spacing between a tip of the third tooth and a tip of the fourth tooth.

In a possible implementation, the foldable mechanism includes a first door plate and a second door plate, and the first door plate and the second door plate are located on the second side; when the foldable mechanism is in the unfolded state, a first support surface of the first door plate is flush with a second support surface of the second door plate; and when the foldable mechanism is in the folded state, the first support surface of the first door plate and the second support surface of the second door plate are disposed opposite to each other, and are away from each other in a direction close to the main shaft; and when the foldable mechanism is in the folded state, the rotation center of the first rotating end is located on a side that is of a plane on which the first door plate is located and that is away from the flexible display, and a rotation center of the second rotating end is located on a side that is of a plane on which the second door plate is located and that is away from the flexible display. In this implementation of this application, the rotation center of the rotating end is disposed on the side that is of the door plate and that is away from the flexible display. This helps form water drop-shaped display accommodating space in the folded state and helps increase the display accommodating space. In a process of relatively folding from the unfolded state to the folded state, a rotation angle of the door plate is generally greater than that of the swing arm. If the rotation center of the rotating end is on a side that is of the door plate and that faces the flexible display, the door plate needs to rotate at a greater angle (compared with that in a case in which the rotation center of the rotating end is on the side that is of the door plate and that is away from the flexible display) when the electronic device is folded to the same state. This reduces the display accommodating space. In addition, if the rotation center of the rotating end is on the side that is of the door plate and that faces the flexible display, the swing arm is more likely to interfere with the door plate. This leads to a higher requirement for avoiding the swing arm and the door plate. In this implementation of this application, the rotation center of the rotating end is always disposed to be on the side that is of the door plate and that is away from the flexible display, and therefore, there is a low probability that interference occurs between the rotating end and the door plate.

In a possible implementation, the foldable mechanism includes the first door plate and the second door plate, and the first door plate and the second door plate are located on the second side; when the foldable mechanism is in the unfolded state, the first support surface of the first door plate is flush with the second support surface of the second door plate; and when the foldable mechanism is in the folded state, the first support surface of the first door plate and the second support surface of the second door plate are disposed opposite to each other, and are away from each other in a direction close to the main shaft; and when the foldable mechanism is in the unfolded state, a vertical projection, on the plane on which the first door plate is located, of the first synchronous gear at least partially overlaps the first door plate, a vertical projection, on the plane on which the second door plate is located, of the second synchronous gear at least partially overlaps the second door plate, and in the process in which the foldable mechanism is folded from the unfolded state to the folded state, the first tooth part moves toward the first side, and the fourth tooth part moves toward the first side. When the foldable mechanism is folded from the unfolded state to the folded state, the first tooth part rotates in a direction close to the first side of the main shaft and away from the flexible display, and the fourth tooth part rotates in a direction close to the first side of the main shaft and away from the flexible display, to avoid the first door plate, the second door plate, and the flexible display.

In a possible implementation, the foldable mechanism includes the first door plate, the second door plate, a first moving member, and a second moving member, where the first moving member is rotatably connected to the main shaft and rotatably connected to the first bracket, the second rotating pair is rotatably connected to the main shaft and rotatably connected to the second bracket, the first door plate is fastened to the first moving member, and the second door plate is fastened to the second moving member. The first door plate is fastened to the first moving member, and the second door plate is fastened to the second moving member. Therefore, in a relative unfolding or folding process of the foldable mechanism, the first door plate does not rotate relative to the first moving member, and the second door plate does not rotate relative to the second moving member. This can avoid a case in which the first tooth part whose tip circle is greater in size presses against the first door plate and obstructs movement of the first door plate, or can avoid a case in which the fourth tooth part whose tip circle is greater in size presses against the second door plate and obstructs movement of the second door plate during relative folding or unfolding of the foldable mechanism, so that the first door plate and the second door plate can avoid the first tooth part and the fourth tooth part in a process in which the foldable mechanism is folded or unfolded relatively.

In a possible implementation, the main shaft includes an outer cover, and the first side is an outer side of the outer cover; the foldable mechanism includes a first clamping member, a second clamping member, a fastening element, and an elastic piece, where the second clamping member is located between the first clamping member and the fastening element, the first synchronous gear and the second synchronous gear are located between the first clamping member and the second clamping member, the elastic piece is located between the second clamping member and the fastening element, and both the first clamping member and the fastening element are fastened to the outer cover. A damping mechanism includes a first clamping member, a second clamping member, a fastening element, and an elastic piece. In this application, both the first clamping member and the fastening element are fastened to the outer cover. In a process of rotating a swing arm, only the second clamping member moves, and neither the first clamping member nor the fastening element moves, so that the damping mechanism in this implementation of this application is stable.

In a possible implementation, a surface that is of the first clamping member and that faces the second clamping member is a smooth surface; a plurality of bump groups that are spaced apart are disposed at an end that is of the second clamping member and that faces the first clamping member, where each bump group includes a plurality of bumps, the plurality of bumps are arranged in an annular shape and are spaced apart, and a first clamping slot is formed between adjacent bumps; and a plurality of first protrusions are disposed at an end that is of the first synchronous gear and that faces the second clamping member, a plurality of second protrusions are disposed on a side that is of the second synchronous gear and that faces the second clamping member, where the plurality of first protrusions are clamped into the first clamping slots of one bump group, and the plurality of second protrusions are clamped into the first clamping slots of another bump group. That a surface that is of the first clamping member and that faces the second clamping member is a smooth surface may be understood as that no protruding structure is disposed on a surface on a side that is of the first clamping member and that faces the second clamping member, and the surface on the side that is of the first clamping member and that faces the second clamping member may include a plurality of parts, and each part is smooth. In this implementation of this application, the surface that is of the first clamping member and that faces the second clamping member is disposed as the smooth surface, and the plurality of bump groups that are spaced apart are disposed at the end that is of the second clamping member and that faces the first clamping member, to reduce rotation resistance.

In a possible implementation, the first clamping member includes a body and a convex part, and the convex part is located on a side that is of the body and that faces the second clamping member; and a side that is of the first rotating end and that faces the first clamping member includes a first pressing part and a second pressing part, where the second pressing part protrudes from the first pressing part, the second pressing part presses against the body, a part of the first pressing part presses against the convex part, and a gap exists between another part of the first pressing part and the body. In this implementation of this application, a gap exists between the first clamping member and a partial structure that is of the first rotating end and that faces the first clamping member, so that a contact area can be reduced, and friction can be reduced. An area of contact between the end that is of the first rotating end and that faces the first clamping member and the first clamping member is excessively small, and consequently, there is no touch feeling during folding or unfolding. An area of contact between the end that is of the first rotating end and that faces the first clamping member and the first clamping member is excessively large, and consequently, folding or unfolding is uneasy. In this application, the gap between the end that is of the first rotating end and that faces the first clamping member and the first clamping member may be adjusted, to adjust a contact area, and control a touch feeling of folding or unfolding the electronic device.

In a possible implementation, the foldable mechanism includes a first moving member, the first moving member is rotatably connected to the first bracket, and the first moving member is rotatably connected to the main shaft.

In a possible implementation, the first moving member is slidably connected to the first bracket. The first moving member is rotatably connected to the first bracket and is slidably connected to the first bracket, so that a connection between the first bracket and the first moving member is more stable.

In a possible implementation, the foldable mechanism includes a first moving member, the first moving member is slidably connected to the first bracket, and the first moving member is rotatably connected to the main shaft.

In a possible implementation, a third arc-shaped slot and a first hole that are spaced part are provided at an end of the first moving member, a first arc-shaped bar and a first shaft are disposed at an end of the first bracket, the first arc-shaped bar fits the third arc-shaped slot and is capable of moving in the third arc-shaped slot, the first shaft passes through the first hole, and the first shaft is capable of sliding in the first hole. The first shaft fits the first hole, so that the first arc-shaped bar of the first bracket can be prevented from being detached when moving in the third arc-shaped slot of the first moving member, and relative folding or unfolding of the first bracket and the first moving member is not affected.

In a possible implementation, the first door plate includes a first plate edge and a second plate edge that are disposed opposite to each other. When the foldable mechanism is in the unfolded state, the second plate edge is close to the second door plate, the second plate edge includes a first avoidance structure, and the first avoidance structure is located on a side that is of the first door plate and that is away from the flexible display. Disposing of the first avoidance mechanism helps avoid collision between the first tooth part and the first door plate and collision between the fourth tooth part and the second door plate.

In a possible implementation, the first avoidance structure includes an oblique surface, and the oblique surface faces the side that is of the first door plate and that is away from the flexible display. In another implementation, the first avoidance structure may be an L-shaped concave part, and the second avoidance structure may be an L-shaped concave part. Specific structures of the first avoidance structure and the second avoidance structure are not limited in this application.

According to a second aspect, this application provides a foldable mechanism, including a main shaft, a first bracket, a second bracket, a first swing arm, a second swing arm, a first synchronous gear, and a second synchronous gear, where the first swing arm includes a first rotating end and a first sliding end, the first rotating end is rotatably connected to the main shaft, and the first sliding end is slidably connected to the first bracket; and the second swing arm includes a second rotating end and a second sliding end, the second rotating end is rotatably connected to the main shaft, and the second sliding end is slidably connected to the second bracket; the first synchronous gear and the second synchronous gear are configured to synchronously move the first swing arm and the second swing arm; the first synchronous gear is rotatably connected to the main shaft, the first synchronous gear includes a first tooth part and a second tooth part, and a radius of a tip circle of the first tooth part is different from a radius of a tip circle of the second tooth part; and the second synchronous gear is rotatably connected to the main shaft, the second synchronous gear includes a third tooth part and a fourth tooth part, a radius of a tip circle of the third tooth part is different from a radius of a tip circle of the fourth tooth part, and the third tooth part is engaged with the second tooth part.

In embodiments of this application, the first rotating end of the first swing arm and the second rotating end of the second swing arm are in meshed connection through the first synchronous gear and the second synchronous gear, so that a rotation angle of the first rotating end of the first swing arm and a rotation angle of the second rotating end of the second swing arm have a same size and opposite directions, and rotation actions of the first swing arm and the second swing arm are kept synchronous relative to the main shaft, that is, the first swing arm and the second swing arm are synchronously close to or away from each other.

It may be understood that the radius of the tip circle of the first tooth part may be greater than or less than the radius of the tip circle of the second tooth part, and the radius of the tip circle of the fourth tooth part may be greater than or less than the radius of the tip circle of the third tooth part.

In this implementation of this application, the first synchronous gear includes two tooth parts: the first tooth part and the second tooth part, and the second synchronous gear includes two tooth parts: the third tooth part and the fourth tooth part. Tip circles of the two tooth parts of the first synchronous gear may be different in size, and tip circles of the two tooth parts of the second synchronous gear may be different in size. This helps adjust sizes of different tooth parts of the synchronous gear, adjust a rotation center of the first synchronous gear, and adjust a rotation center of the second synchronous gear based on space of the foldable mechanism and a structure of the foldable mechanism, so that the first synchronous gear and the second synchronous gear occupy the space of the foldable mechanism more flexibly, to help sufficiently utilize internal space of the foldable mechanism. It may be understood that, with miniaturization of the electronic device and the foldable mechanism, the internal space of the foldable mechanism is limited. In this application, the sizes of the tip circles of the two tooth parts of the first synchronous gear are different, and the sizes of the tip circles of the two tooth parts of the second synchronous gear are different, so that in limited space, a rotation center of the first rotating end, the rotation center of the first synchronous gear, the rotation center of the second synchronous gear, and a rotation center of the second rotating end can also be properly configured, to maximize space utilization. For example, in some implementations, if display accommodating space in a folded state is limited, the tip circle of the second tooth part and the tip circle of the third tooth part may be set to be small in size, to prevent the second tooth part and the third tooth part from pressing against the flexible display in the folded state. When the foldable mechanism moves, the tip circle of the first tooth part and the tip circle of the fourth tooth part may be set to be small in size, to avoid a door plate.

In a possible implementation, the first tooth part is engaged with the first rotating end, and the fourth tooth part is engaged with the second rotating end.

In a possible implementation, the main shaft includes a first side and a second side that are disposed opposite to each other, the first side is an appearance side of the main shaft, and the second side is closer to the flexible display than the first side; the radius of the tip circle of the first tooth part is greater than the radius of the tip circle of the second tooth part, and the radius of the tip circle of the fourth tooth part is greater than the radius of the tip circle of the third tooth part; and in a process in which the foldable mechanism is folded from an unfolded state to a folded state, the second tooth part moves in a direction close to the second side, and the third tooth part moves in a direction close to the second side.

In embodiments of this application, the radius of the tip circle of the first tooth part is set to be greater than the radius of the tip circle of the second tooth part, and the radius of the tip circle of the fourth tooth part is set to be greater than the radius of the tip circle of the third tooth part. This helps use as few synchronous gears as possible, so that the swing arm and the second swing arm move synchronously, and the first bracket and the second bracket move synchronously. In addition, this avoids a case in which the second tooth part of the first synchronous gear and the third tooth part of the second synchronous gear press against the flexible display to damage the flexible display when the foldable mechanism is in a folded state, so that display accommodating space can be increased. In addition, in this application, the tip circle of the first tooth part is greater in size, and the first tooth part whose tip circle is greater in size is engaged with the first swing arm; and the tip circle of the fourth tooth part is greater in size, and the fourth tooth part whose tip circle is greater in size is engaged with the second swing arm. Disposing of the first tooth part whose tip circle is greater in size and the fourth tooth part whose tip circle is greater in size helps reduce a quantity of synchronous gears and improve motion accuracy. In other words, in embodiments of this application, as few synchronous gears as possible may be used to provide as large display accommodating space as possible. In this way, when the electronic device tends to be miniaturized, it can be ensured that the first bracket and the second bracket of the foldable mechanism can be folded or unfolded synchronously in limited space without damaging the flexible display. A smaller quantity of synchronous gears indicates a larger size of the synchronous gear and a smaller accumulated transmission error of the synchronous gear, which helps improve motion accuracy.

In a possible implementation, the radius of the tip circle of the first tooth part is greater than the radius of the tip circle of the first rotating end, and the radius of the tip circle of the fourth tooth part is greater than the radius of the tip circle of the second rotating end, so that in a process of folding or unfolding the foldable mechanism, a rotation angle of the first tooth part is less than a rotation angle of the first swing arm, and a rotation angle of the fourth tooth part is less than a rotation angle of the second swing arm. This helps prevent the first tooth part whose tip circle is greater in size and the fourth tooth part whose tip circle is greater in size from obstructing movement of the first door plate and the second door plate and obstructing unfolding or folding of the foldable mechanism when the rotation angles are excessively large during rotation.

In a possible implementation, a spacing from a rotation center of the first rotating end to a rotation center of the first synchronous gear is a first spacing, a spacing from the rotation center of the first synchronous gear to a rotation center of the second synchronous gear is a second spacing, and the first spacing is greater than the second spacing. This helps reserve sufficient space for disposing the first rotating end and the first tooth part of the first synchronous gear. The size of the tip circle of the first tooth part may be increased according to a requirement to reduce a rotation angle of the first tooth part in a process of folding or unfolding the foldable mechanism, so as to prevent the first tooth part from touching the first door plate in a rotation process. In addition, the spacing from the rotation center of the first rotating end to the rotation center of the first synchronous gear is set to be large. In this case, when the foldable mechanism is in the folded state, the rotation center of the first rotating end is located on a side that is of a plane on which the first door plate is located and that is away from the flexible display. This helps avoid collision between the first tooth part and the first door plate, and helps increase display accommodating space of the foldable mechanism.

In a possible implementation, a spacing from a rotation center of the second rotating end to a rotation center of the second synchronous gear is a third spacing, a spacing from the rotation center of the first synchronous gear to the rotation center of the second synchronous gear is a second spacing, and the third spacing is greater than the second spacing.

In a possible implementation, the first synchronous gear includes a first non-tooth part and a second non-tooth part, the first tooth part and the second tooth part are spaced apart, both the first non-tooth part and the second non-tooth part are located between the first tooth part and the second tooth part and are spaced apart relative to each other, the first non-tooth part is closer to the first side than the second non-tooth part, the second non-tooth part is closer to the second side than the first non-tooth part, and a radian of the first non-tooth part is greater than a radian of the second non-tooth part. The radian of the first non-tooth part is set to be greater than the radian of the second non-tooth part, so that when the foldable mechanism is in the unfolded state, a plurality of teeth of the second tooth part press against the bottom of an outer cover. This helps reduce space occupied by the first synchronous gear in the unfolded state in a thickness direction of the electronic device.

In a possible implementation, the first synchronous gear includes a first non-tooth part and a second non-tooth part, the first tooth part and the second tooth part are spaced apart, both the first non-tooth part and the second non-tooth part are located between the first tooth part and the second tooth part and are spaced apart relative to each other, the first non-tooth part is closer to the first side than the second non-tooth part, and the second non-tooth part is closer to the second side than the first non-tooth part; a tooth that is of the first tooth part and that is connected to the first non-tooth part is a first tooth, a tooth that is of the second tooth part and that is connected to the first non-tooth part is a second tooth, a tooth that is of the first tooth part and that is connected to the second non-tooth part is a third tooth, a tooth that is of the second tooth part and that is connected to the second non-tooth part is a fourth tooth, and a spacing between a tip of the first tooth and a tip of the second tooth is greater than a spacing between a tip of the third tooth and a tip of the fourth tooth.

In a possible implementation, the foldable mechanism includes a first door plate and a second door plate, and the first door plate and the second door plate are located on the second side; when the foldable mechanism is in the unfolded state, a first support surface of the first door plate is flush with a second support surface of the second door plate; and when the foldable mechanism is in the folded state, the first support surface of the first door plate and the second support surface of the second door plate are disposed opposite to each other, and are away from each other in a direction close to the main shaft; and when the foldable mechanism is in the folded state, the rotation center of the first rotating end is located on a side that is of a plane on which the first door plate is located and that is away from the flexible display, and a rotation center of the second rotating end is located on a side that is of a plane on which the second door plate is located and that is away from the flexible display. In this implementation of this application, the rotation center of the rotating end is disposed on the side that is of the door plate and that is away from the flexible display. This helps form water drop-shaped display accommodating space in the folded state and helps increase the display accommodating space. In a process of relatively folding from the unfolded state to the folded state, a rotation angle of the door plate is generally greater than that of the swing arm. If the rotation center of the rotating end is on a side that is of the door plate and that faces the flexible display, the door plate needs to rotate at a greater angle (compared with that in a case in which the rotation center of the rotating end is on the side that is of the door plate and that is away from the flexible display) when the electronic device is folded to the same state. This reduces the display accommodating space. In addition, if the rotation center of the rotating end is on the side that is of the door plate and that faces the flexible display, the swing arm is more likely to interfere with the door plate. This leads to a higher requirement for avoiding the swing arm and the door plate. In this implementation of this application, the rotation center of the rotating end is always disposed to be on the side that is of the door plate and that is away from the flexible display, and therefore, there is a low probability that interference occurs between the rotating end and the door plate.

In a possible implementation, the foldable mechanism includes the first door plate and the second door plate, and the first door plate and the second door plate are located on the second side; when the foldable mechanism is in the unfolded state, the first support surface of the first door plate is flush with the second support surface of the second door plate; and when the foldable mechanism is in the folded state, the first support surface of the first door plate and the second support surface of the second door plate are disposed opposite to each other, and are away from each other in a direction close to the main shaft; and when the foldable mechanism is in the unfolded state, a vertical projection, on the plane on which the first door plate is located, of the first synchronous gear at least partially overlaps the first door plate, a vertical projection, on the plane on which the second door plate is located, of the second synchronous gear at least partially overlaps the second door plate, and in the process in which the foldable mechanism is folded from the unfolded state to the folded state, the first tooth part moves toward the first side, and the fourth tooth part moves toward the first side. When the foldable mechanism is folded from the unfolded state to the folded state, the first tooth part rotates in a direction close to the first side of the main shaft and away from the flexible display, and the fourth tooth part rotates in a direction close to the first side of the main shaft and away from the flexible display, to avoid the first door plate, the second door plate, and the flexible display.

In a possible implementation, the foldable mechanism includes the first door plate, the second door plate, a first moving member, and a second moving member, where the first moving member is rotatably connected to the main shaft and rotatably connected to the first bracket, the second rotating pair is rotatably connected to the main shaft and rotatably connected to the second bracket, the first door plate is fastened to the first moving member, and the second door plate is fastened to the second moving member. The first door plate is fastened to the first moving member, and the second door plate is fastened to the second moving member. Therefore, in a relative unfolding or folding process of the foldable mechanism, the first door plate does not rotate relative to the first moving member, and the second door plate does not rotate relative to the second moving member. This can avoid a case in which the first tooth part whose tip circle is greater in size presses against the first door plate and obstructs movement of the first door plate, or can avoid a case in which the fourth tooth part whose tip circle is greater in size presses against the second door plate and obstructs movement of the second door plate during relative folding or unfolding of the foldable mechanism, so that the first door plate and the second door plate can avoid the first tooth part and the fourth tooth part in a process in which the foldable mechanism is folded or unfolded relatively.

In a possible implementation, the main shaft includes an outer cover, and the first side is an outer side of the outer cover; the foldable mechanism includes a first clamping member, a second clamping member, a fastening element, and an elastic piece, where the second clamping member is located between the first clamping member and the fastening element, the first synchronous gear and the second synchronous gear are located between the first clamping member and the second clamping member, the elastic piece is located between the second clamping member and the fastening element, and both the first clamping member and the fastening element are fastened to the outer cover. A damping mechanism includes a first clamping member, a second clamping member, a fastening element, and an elastic piece. In this application, both the first clamping member and the fastening element are fastened to the outer cover. In a process of rotating a swing arm, only the second clamping member moves, and neither the first clamping member nor the fastening element moves, so that the damping mechanism in this implementation of this application is stable.

In a possible implementation, a surface that is of the first clamping member and that faces the second clamping member is a smooth surface; a plurality of bump groups that are spaced apart are disposed at an end that is of the second clamping member and that faces the first clamping member, where each bump group includes a plurality of bumps, the plurality of bumps are arranged in an annular shape and are spaced apart, and a first clamping slot is formed between adjacent bumps; and a plurality of first protrusions are disposed at an end that is of the first synchronous gear and that faces the second clamping member, a plurality of second protrusions are disposed on a side that is of the second synchronous gear and that faces the second clamping member, where the plurality of first protrusions are clamped into the first clamping slots of one bump group, and the plurality of second protrusions are clamped into the first clamping slots of another bump group. That a surface that is of the first clamping member and that faces the second clamping member is a smooth surface may be understood as that no protruding structure is disposed on a surface on a side that is of the first clamping member and that faces the second clamping member, and the surface on the side that is of the first clamping member and that faces the second clamping member may include a plurality of parts, and each part is smooth. In this implementation of this application, the surface that is of the first clamping member and that faces the second clamping member is disposed as the smooth surface, and the plurality of bump groups that are spaced apart are disposed at the end that is of the second clamping member and that faces the first clamping member, to reduce rotation resistance.

In a possible implementation, the first clamping member includes a body and a convex part, and the convex part is located on a side that is of the body and that faces the second clamping member; and a side that is of the first rotating end and that faces the first clamping member includes a first pressing part and a second pressing part, where the second pressing part protrudes from the first pressing part, the second pressing part presses against the body, a part of the first pressing part presses against the convex part, and a gap exists between another part of the first pressing part and the body. In this implementation of this application, a gap exists between the first clamping member and a partial structure that is of the first rotating end and that faces the first clamping member, so that a contact area can be reduced, and friction can be reduced. An area of contact between the end that is of the first rotating end and that faces the first clamping member and the first clamping member is excessively small, and consequently, there is no touch feeling during folding or unfolding. An area of contact between the end that is of the first rotating end and that faces the first clamping member and the first clamping member is excessively large, and consequently, folding or unfolding is uneasy. In this application, the gap between the end that is of the first rotating end and that faces the first clamping member and the first clamping member may be adjusted, to adjust a contact area, and control a touch feeling of folding or unfolding the electronic device.

In a possible implementation, the foldable mechanism includes a first moving member, the first moving member is rotatably connected to the first bracket, and the first moving member is rotatably connected to the main shaft.

In a possible implementation, the first moving member is slidably connected to the first bracket. The first moving member is rotatably connected to the first bracket and is slidably connected to the first bracket, so that a connection between the first bracket and the first moving member is more stable.

In a possible implementation, the foldable mechanism includes a first moving member, the first moving member is slidably connected to the first bracket, and the first moving member is rotatably connected to the main shaft.

In a possible implementation, a third arc-shaped slot and a first hole that are spaced part are provided at an end of the first moving member, a first arc-shaped bar and a first shaft are disposed at an end of the first bracket, the first arc-shaped bar fits the third arc-shaped slot and is capable of moving in the third arc-shaped slot, the first shaft passes through the first hole, and the first shaft is capable of sliding in the first hole. The first shaft fits the first hole, so that the first arc-shaped bar of the first bracket can be prevented from being detached when moving in the third arc-shaped slot of the first moving member, and relative folding or unfolding of the first bracket and the first moving member is not affected.

In a possible implementation, the first door plate includes a first plate edge and a second plate edge that are disposed opposite to each other. When the foldable mechanism is in the unfolded state, the second plate edge is close to the second door plate, the second plate edge includes a first avoidance structure, and the first avoidance structure is located on a side that is of the first door plate and that is away from the flexible display. Disposing of the first avoidance mechanism helps avoid collision between the first tooth part and the first door plate and collision between the fourth tooth part and the second door plate.

In a possible implementation, the first avoidance structure includes an oblique surface, and the oblique surface faces the side that is of the first door plate and that is away from the flexible display. In another implementation, the first avoidance structure may be an L-shaped concave part, and the second avoidance structure may be an L-shaped concave part. Specific structures of the first avoidance structure and the second avoidance structure are not limited in this application.

### BRIEF DESCRIPTION OF DRAWINGS

To describe the technical solutions in embodiments of the present invention or in the background more clearly, the following briefly describes the accompanying drawings for describing embodiments of the present invention or the background.
FIG. 1 is a diagram of an exploded structure of an electronic device in an unfolded state according to an implementation of this application;
FIG. 2 is a diagram of an exploded structure of a housing apparatus in an unfolded state according to an implementation of this application;
FIG. 3 is a diagram of a structure of a housing apparatus in a folded state according to an implementation of this application;
FIG. 4A is a diagram of an exploded structure of a housing apparatus in a folded state according to an implementation of this application;
FIG. 4B is an enlarged view of a structure of the housing apparatus shown in FIG. 4A at A;
FIG. 5 is a diagram of an exploded structure of a foldable mechanism according to an implementation of this application;
FIG. 6 is a diagram of a structure of the assembled foldable mechanism shown in FIG. 5;
FIG. 7 is a cross-sectional view of the structure shown in FIG. 6 at A-A;
FIG. 8 is a diagram of a partial exploded structure of a main shaft according to an implementation of this application;
FIG. 9 is a diagram of the structure shown in FIG. 8 from another perspective;
FIG. 10A is a diagram of a structure of a fastening member of a main shaft according to an implementation of this application;
FIG. 10B is a diagram of a structure of the fastening member shown in FIG. 10A from another perspective;
FIG. 11 is a diagram of exploded structures of a damping assembly, a first synchronous gear, and a second synchronous gear according to an implementation of this application;
FIG. 12A is a diagram of structures of a first synchronous gear and a second synchronous gear according to an implementation of this application;
FIG. 12B is a diagram of structures of a first synchronous gear and a second synchronous gear according to an implementation of this application;
FIG. 13 is a diagram of a structure of a damping assembly, a first synchronous gear, and a second synchronous gear that are assembled according to an implementation of this application;
FIG. 14 is a diagram of a partial structure of a main shaft according to an implementation of this application;
FIG. 15 is a diagram of structures of a first bracket and a second bracket according to an implementation of this application;
FIG. 16 is a diagram of structures of the first bracket and the second bracket shown in FIG. 15 from another perspective;
FIG. 17 is a diagram of structures of a first moving member and a second moving member according to an implementation of this application;
FIG. 18 is a diagram of structures of the first moving member and the second moving member shown in FIG. 17 from another perspective;
FIG. 19 is a diagram of structures of a first swing arm and a second swing arm according to an implementation of this application;
FIG. 20 is a diagram of structures of the first swing arm and the second swing arm shown in FIG. 19 from another perspective;
FIG. 21 is a diagram of a structure in which a first swing arm and a second swing arm are assembled to a damping assembly according to an implementation of this application;
FIG. 22 is a diagram of exploded structures of a first bracket, a second bracket, a first moving member, a second moving member, a first swing arm, and a second swing arm according to an implementation of this application;
FIG. 23 is a diagram of a partial structure of a foldable mechanism according to an implementation of this application;
FIG. 24 is a diagram of structures of a first door plate and a second door plate according to an implementation of this application;
FIG. 25 is a diagram of a structure of a foldable mechanism shown in FIG. 7 in a folded state;
FIG. 26 is a diagram of a structure of the foldable mechanism shown in FIG. 25 and a flexible display that are assembled;
FIG. 27A is a diagram of exploded structures of a first swing arm, a first synchronous gear, a second synchronous gear, and a second swing arm according to an implementation of this application;
FIG. 27B is a diagram of a combined structure of a first swing arm, a first synchronous gear, a second synchronous gear, and a second swing arm according to an implementation of this application;
FIG. 28 is a cross-sectional view of the structure shown in FIG. 6 at B-B;
FIG. 29 is a diagram of the structure shown in FIG. 28 in another use state;
FIG. 30 is a cross-sectional view of the structure shown in FIG. 6 at C-C;
FIG. 31 is a diagram of the structure shown in FIG. 30 in a folded state;
FIG. 32 is a cross-sectional view of the structure shown in FIG. 6 at D-D; and
FIG. 33 is a diagram of the structure shown in FIG. 32 in a folded state.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

In the descriptions of embodiments of this application, unless otherwise specified and limited, the terms "mount" and "connect" should be understood in a broad sense. For example, a "connection" may be a detachable connection, or a nondetachable connection; may be a direct connection, or may be an indirect connection through an intermediate medium. A "fixed connection" means that two parts are connected to each other and a relative position relationship remains unchanged after the two parts are connected. A "rotatable connection" means that two parts are connected to each other and can rotate relative to each other after the two parts are connected to each other. A "slidable connection" means that two parts are connected to each other and can slide relative to each other after the two parts are connected to each other. Orientation terms mentioned in embodiments of this application, for example, "up", "down", "inside", and "outside", are merely directions based on the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application.

This application provides an electronic device. The electronic device may be a foldable electronic product like a mobile phone, a tablet computer, a notebook computer, or a wearable device. In embodiments of this application, descriptions are provided by using an example in which the electronic device is a mobile phone.

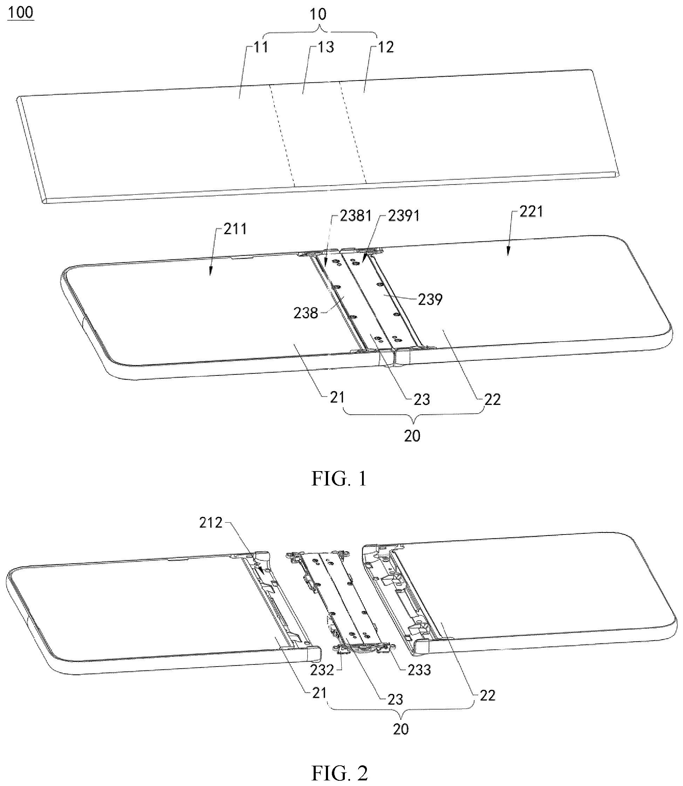

As shown in FIG. 1 and FIG. 2, FIG. 1 is a diagram of an exploded structure of an electronic device 100 in an unfolded state, and FIG. 2 is a diagram of an exploded structure of a housing apparatus 20 in an unfolded state. The electronic device 100 includes a flexible display 10 and the housing apparatus 20. The housing apparatus 20 is configured to carry the flexible display 10, and the housing apparatus 20 can drive the flexible display 10 to fold or unfold, so that a user can use the electronic device 100 or receive the electronic device 100.

The housing apparatus 20 includes a first housing 21, a second housing 22, and a foldable mechanism 23. The foldable mechanism 23 is located between the first housing 21 and the second housing 22, and is configured to enable the first housing 21 and the second housing 22 to be unfolded or folded relative to each other. The first housing 21 is fastened to the foldable mechanism 23, the second housing 22 is fastened to the foldable mechanism 23, and the first housing 21, the second housing 22, and the foldable mechanism 23 jointly carry the display 10.

It may be understood that the first housing 21 and the second housing 22 are housing components, are configured to: install and fasten other components of the electronic device 100, and have diversified structures. For example, the first housing 21 and the second housing 22 may be configured to install a battery, a mainboard, a camera module, a speaker, and the like, to implement a function of the electronic device 100. In embodiments of this application, only some structures of the first housing 21 and the second housing 22 are briefly described as examples, and the accompanying drawings are also simplified for illustration. Specific structures of the first housing 21 and the second housing 22 are not strictly limited in embodiments of this application.

The flexible display 10 includes a first non-bending part 11, a second non-bending part 12, and a bending part 13. The bending part 13 is connected between the first non-bending part 11 and the second non-bending part 12. The flexible display 10 is mounted on the housing apparatus 20. For example, the first non-bending part 11 is disposed corresponding to the first housing 21, the second non-bending part 12 is disposed corresponding to the second housing 22, and the bending part 13 is disposed corresponding to the foldable mechanism 23. The first non-bending part 11 is fastened to the first housing 21. For example, the first non-bending part 11 may be bonded to a support surface 211 of the first housing 21 through an adhesive layer. The second non-bending part 12 is fastened to the second housing 22. For example, the second non-bending part 12 may be bonded to a support surface 221 of the second housing 22 through an adhesive layer. The bending part 13 includes a first area close to the first non-bending part 11, a second area close to the second non-bending part 12, and a third area located between the first area and the second area. The foldable mechanism 23 includes a first door plate 238 and a second door plate 239. The first door plate 238 includes a first support surface 2381 configured to carry the flexible display 10, and the second door plate 239 includes a second support surface 2391 configured to carry the flexible display 10. The first area of the bending part 13 may be fastened to a partial area of the first support surface 2381 of the first door plate 238, for example, may be fastened through an adhesive layer. The second area of the bending part 13 may be fastened to a partial area of the second support surface 2391 of the second door plate 239, for example, may be fastened through an adhesive layer. The third part of the bending part 13 corresponds to another partial area of the first support surface 2381 of the first door plate 238 and another partial area of the second support surface 2391 of the second door plate 239. The third part of the bending part 13 may move relative to the another partial area of the first support surface 2381 of the first door plate 238 and the another partial area of the second support surface 2391 of the second door plate 239. The third part of the bending part 13 provides a size margin for deformation of the flexible display 10. In a process in which the foldable mechanism 23 is folded or unfolded relatively, it is ensured that the flexible display 10 is not damaged after being pulled.

When the foldable mechanism 23 is in an unfolded state, the first support surface 2381 of the first door plate 238 is flush with the second support surface 2391 of the second door plate 239, and is configured to carry the flexible display 10. When the foldable mechanism 23 is in a folded state, the first support surface 2381 of the first door plate 238 and the second support surface 2391 of the second door plate 239 are disposed opposite to each other, and are away from each other in a direction close to the main shaft of the foldable mechanism 23.

It may be understood that an adhesive layer between the first non-bending part 11 and the first housing 21, an adhesive layer between the second non-bending part 12 and the second housing 22, an adhesive layer between the first area of the bending part 13 and the support surface 2381 of the first door plate 238, and an adhesive layer between the second area of the bending part 13 and the support surface 2391 of the second door plate 239 may be continuous entire adhesive layers, or may be dot-break adhesive layers, or may be adhesive layers having hollow-out areas. A specific solution of the adhesive layer is not strictly limited in embodiments of this application.

Refer to FIG. 1. When the electronic device 100 is in the unfolded state, that is, the housing apparatus 20 is in the unfolded state, the flexible display 10 is unfolded along with the housing apparatus 20 to be in the unfolded state. For example, the foldable mechanism 23 may be on a same plane with the first housing 21 and the second housing 22. In other words, an included angle between the first housing 21 and the second housing 22 may be approximately 180°. In another implementation, when the housing apparatus 20 is in the unfolded state, the included angle between the first housing 21 and the second housing 22 may alternatively be 175°, 183°, 168°, or the like. That is, the included angle between the first housing 21 and the second housing 22 may have some deviation relative to 180°.

For example, when the housing apparatus 20 is in the unfolded state, the first housing 21 and the second housing 22 are assembled. The first housing 21 and the second housing 22 that are assembled may press against each other. The first housing 21 and the second housing 22 can be assembled to stop an unfolding action of the housing apparatus 20, to prevent the housing apparatus 20 from being excessively bent during unfolding to damage the flexible display 10 and the foldable mechanism 23. This improves reliability of the flexible display 10 and the electronic device 100. The first housing 21 and the second housing 22 are assembled to jointly form an appearance surface of the electronic device 100, and the appearance surface of the foldable mechanism 23 is shielded by the first housing 21 and the second housing 22.

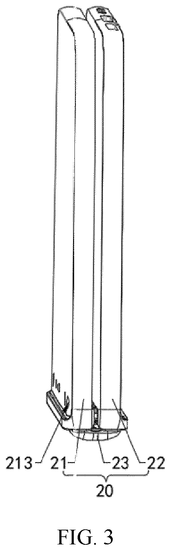

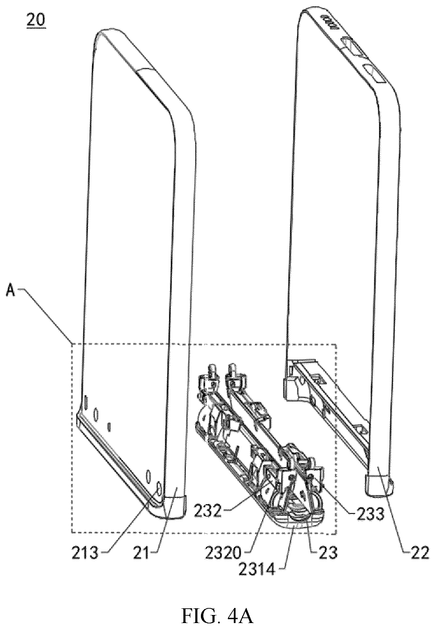

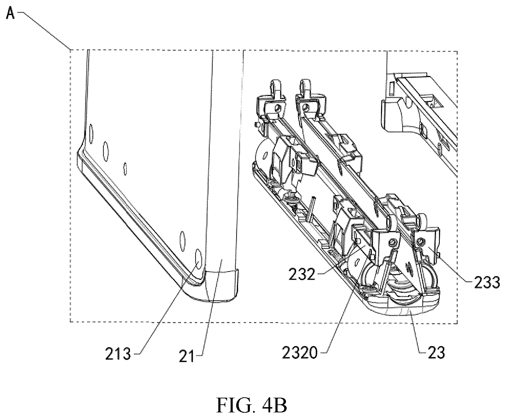

As shown in FIG. 3, FIG. 4A, and FIG. 4B, FIG. 3 is a diagram of a structure of the housing apparatus 20 in a folded state according to an embodiment of this application. FIG. 4A is a diagram of an exploded structure of the housing apparatus 20 in a folded state according to an embodiment of this application. FIG. 4B is an enlarged view of a structure of the housing apparatus 20 shown in FIG. 4A at A. When the electronic device 100 is in a folded state, that is, the housing apparatus 20 is in the folded state, the flexible display 10 (not shown in FIG. 3) is folded along with the housing apparatus 20 to be in the folded state. When the foldable mechanism 23 deforms, the first housing 21 and the second housing 22 can be driven to fold to a folded state, the flexible display (not shown in FIG. 3, FIG. 4A and FIG. 4B) is folded with the housing apparatus 20 to be in the folded state. The flexible display 10 is located inside the housing apparatus 20 and wrapped by the housing apparatus 20. In other words, the electronic device 100 may be a device with an inward-foldable flexible display. It may be understood that, when the user does not use the electronic device 100 and folds the electronic device 100, the housing apparatus 20 protects the inside flexible display 10, to avoid scratching, damage due to a collision, and the like of the flexible display 10. In another implementation, the electronic device 100 may alternatively be an outward-foldable device.

For example, in a process in which the first housing 21 and the second housing 22 are unfolded or folded relative to each other, the bending part 13 of the flexible display 10 deforms. The first housing 21 drives the first non-bending part 11 to move, and the second housing 22 drives the second non-bending part 12 to move, so that the first non-bending part 11 and the second non-bending part 12 are folded or unfolded relative to each other.

For example, when the housing apparatus 20 is in the folded state, the first housing 21 and the second housing 22 can be completely closed with no gap or a small gap between the first housing 21 and the second housing 22, to achieve good waterproof, dustproof, and foreign matter-proof effect, so as to improve reliability of the electronic device 100. The first housing 21 and the second housing 22 can be completely closed to expose the foldable mechanism 23, so that the first housing 21, the second housing 22, and the foldable mechanism 23 jointly form an appearance surface of the electronic device 100.

The first housing 21 and the second housing 22 may alternatively be unfolded or folded relative to each other to an intermediate state, so that the foldable mechanism 23 and the electronic device 100 are in the intermediate state, where the intermediate state may be any state between the unfolded state and the folded state. The flexible display 10 moves along with the housing apparatus 20.

Refer to FIG. 2, FIG. 3, FIG. 4A, and FIG. 4B. A connection between the first housing 21 and the foldable mechanism 23 is used as an example. The foldable mechanism 23 includes a first bracket 232, and the first housing 21 is fastened to the first bracket 232. A fastening groove 212 is provided on a side that is of the first housing 21 and that is close to the foldable mechanism 23, and the first bracket 232 is mounted in the fastening groove 212. For example, a first fastening hole 2320 is provided on the first bracket 232, and a second fastening hole 213 is disposed on the first housing 21. During mounting, the first fastening hole 2320 and the second fastening hole 213 are correspondingly provided, and a fastening structure (not shown in the figure) passes through the first fastening hole 2320 and the second fastening hole 213 to fasten the first housing 21 and the foldable mechanism 23. The fastening structure may be a screw, a bolt, and the like.

The second housing 22 and the first housing 21 are disposed opposite to each other, and the second housing 22 is fastened to the foldable mechanism 23. Specifically, the foldable mechanism 23 is provided with a second bracket 233. For a fastening manner of the second housing 22 and the second bracket 233 of the foldable mechanism 23, refer to a connection manner between the first housing 21 and the foldable mechanism 23. Details are not described herein again. The first housing 21 is fastened to the foldable mechanism 23, and the second housing 22 is fastened to the foldable mechanism 23 for jointing carrying the display 10.

It may be understood that, the first housing 21 and the foldable mechanism 23, and the second housing 22 and the foldable mechanism 23 are not limited to being fastened through a fastening structure, and may alternatively be fixedly mounted through welding, bonding, snap-fastening, and the like, to implement fastening of the first housing 21 and the foldable mechanism 23, and fastening of the second housing 22 and the foldable mechanism 23. In this way, in a process of unfolding or folding the foldable mechanism 23, the first housing 21 and the second housing 22 are driven to unfold or fold.

In embodiments of this application, in a process of folding and unfolding the housing apparatus 20, the first bracket 232 and the second bracket 233 can move synchronously, that is, synchronously approach each other or keep away from each other, to improve mechanism operation experience of the housing apparatus 20 and the electronic device 100.

In embodiments of this application, the flexible display 10 can be folded and unfolded along with the housing apparatus 20. When the electronic device 100 is in the unfolded state, the flexible display 10 is in the unfolded state, and the flexible display 10 can display for use by a user. It may be understood that the flexible display 10 may be a bezel-less display. In this way, the electronic device 100 has a large display area, to improve user experience. When the electronic device 100 is in the folded state, the flexible display 10 is folded, and an overall planar size of the electronic device 100 is small, so that it is convenient for a user to carry and receive the electronic device.

For example, the flexible display 10 may display an image. The flexible display 10 may be an organic light-emitting diode (organic light-emitting diode, OLED) display, an active-matrix organic light-emitting diode (active-matrix organic light-emitting diode, AMOLED) display, a mini organic light-emitting diode (mini organic light-emitting diode) display, a micro light-emitting diode (micro organic light-emitting diode) display, a micro organic light-emitting diode (micro organic light-emitting diode) display, or a quantum dot light-emitting diode (quantum dot light-emitting diode, QLED) display.

In some embodiments, the electronic device 100 may further include a plurality of modules (not shown in the figure), and the plurality of modules may be accommodated inside the housing apparatus 20. The plurality of modules of the electronic device 100 may include but are not limited to a mainboard, a processor, a memory, a battery, a camera module, an earpiece module, a speaker module, a microphone module, an antenna module, a sensor module, and the like. A quantity, types, locations, and the like of modules of the electronic device 100 are not specifically limited in embodiments of this application.

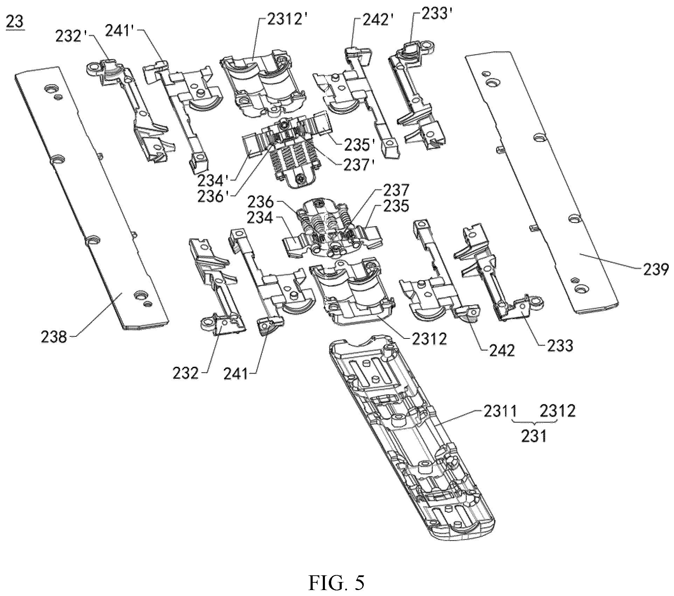

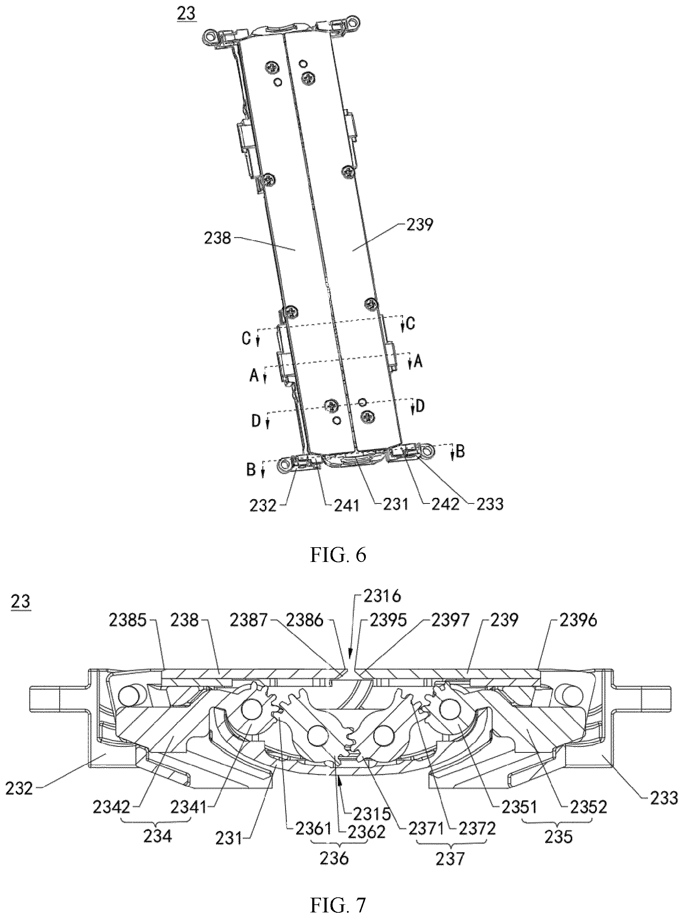

As shown in FIG. 5, FIG. 6, and FIG. 7, FIG. 5 is a diagram of exploded structures of the foldable mechanism 23, FIG. 6 is a diagram of a structure of the assembled foldable mechanism 23 shown in FIG. 5, and FIG. 7 is a sectional view of the structure shown in FIG. 6 at A-A. The foldable mechanism 23 includes a main shaft 231, a first bracket 232, a second bracket 233, a first swing arm 234, a second swing arm 235, a first synchronous gear 236, and a second synchronous gear 237. In some implementations, the foldable mechanism 23 further includes a first door plate 238, a second door plate 239, a first moving member 241, and a second moving member 242. The first bracket 232, the second bracket 233, the first swing arm 234, the second swing arm 235, the first synchronous gear 236, the second synchronous gear 237, the first moving member 241, and the second moving member 242 may jointly form a first rotating assembly. The foldable mechanism 23 may further include a second rotating assembly. The first rotating assembly and the second rotating assembly are both connected to the main shaft 231, the first door plate 238, and the second door plate 239. The first rotating assembly may be used as a rotating assembly at one end of the foldable mechanism 23, and the second rotating assembly may be used as a rotating assembly at the other end of the foldable mechanism 23.

The second rotating assembly and the first rotating assembly may be same or similar structures, symmetrical or partially symmetrical structures, or different structures. In some embodiments, the second rotating assembly and the first rotating assembly are centrosymmetric structures. For a basic design of a component structure of the second rotating assembly, a design of a connection relationship between components, and a design of a connection relationship between a component and another structure other than the assembly, refer to a related solution of the first rotating assembly. In addition, the second rotating assembly and the first rotating assembly are allowed to be slightly different in a detailed structure or a position arrangement of components.

For example, the second rotating assembly may include a first bracket 232', a second bracket 233', a first swing arm 234', a second swing arm 235', a first synchronous gear 236', a second synchronous gear 237', a first moving member 241', and a second moving member 242'. Structures of components of the second rotating assembly, an interconnection relationship between components, and a connection relationship between components and the main shaft 231, the first door plate 238, and the second door plate 239, refer to related descriptions of the first rotating assembly correspondingly. Details are not described again in embodiments of this application.

The first bracket 232 of the first rotating assembly and the first bracket 232' of the second rotating assembly may be mechanical parts independent of each other, or may be two parts of an integrated mechanical part. The second bracket 233 of the first rotating assembly and the second bracket 233' of the second rotating assembly may be mechanical parts independent of each other, or may be two parts of an integrated mechanical part. In some other embodiments, the foldable mechanism 23 may alternatively include a first rotating assembly and another rotating assembly. A structure of the another rotating assembly may be the same as or different from a structure of the first rotating assembly. This is not strictly limited in this application.

In some embodiments, the first bracket 232 may be connected to the main shaft 231, the second bracket 233 may be connected to the main shaft 231, and the first bracket 232 and the second bracket 233 are distributed on two opposite sides of the main shaft 231. For example, one end of the first swing arm 234 is rotatably connected to the main shaft 231, the other end of the first swing arm 234 is slidably connected to the first bracket 232, one end of the first moving member 241 is rotatably connected to the main shaft 231, the other end of the first moving member 241 is rotatably connected to the first bracket 232, and the first bracket 232 can rotate relative to the main shaft 231. One end of the second swing arm 235 is rotatably connected to the main shaft 231, the other end of the second swing arm 235 is slidably connected to the second bracket 233, one end of the second moving member 242 is rotatably connected to the main shaft 231, the other end of the second moving member 242 is rotatably connected to the second bracket 233, and the second bracket 233 can rotate relative to the main shaft 231.

In another embodiment, the first bracket 232 may alternatively be rotatably connected to the main shaft 231 directly. For example, an arc-shaped arm may be disposed on the first bracket 232, an arc-shaped slot may be provided on the main shaft 231, and the arc-shaped arm on the first bracket 232 fits the arc-shaped slot of the main shaft 231, to implement a rotatable connection between the first bracket 232 and the main shaft 231. The second bracket 233 may alternatively be rotatably connected to the main shaft 231 directly. For example, an arc-shaped arm may be disposed on the second bracket 233, an arc-shaped slot may be provided on the main shaft 231, and the arc-shaped arm on the second bracket 233 fits the arc-shaped slot of the main shaft 231, to implement a rotatable connection between the second bracket 233 and the main shaft 231.

It may be understood that the first bracket 232 may be connected to the main shaft 231 through the first swing arm 234 and the first moving member 241, and the second bracket 233 may be connected to the main shaft 231 through the second swing arm 235 and the second moving member 242. Because the first bracket 232 is fastened to the first housing 21, and the second bracket 233 is fastened to the second housing 22 (refer to FIG. 1 and FIG. 2), when the first bracket 232 rotates relative to the main shaft 231 and the second bracket 233 rotates relative to the main shaft 231, the first housing 21 rotates relative to the second housing 22, and the first housing 21 and the second housing 22 can be folded or unfolded relative to each other.

In some embodiments, both the first synchronous gear 236 and the second synchronous gear 237 are rotatably connected to the main shaft 231. One end of the first swing arm 234 may be slidably connected to the first bracket 232, and the other end of the first swing arm 234 may be rotatably connected to the main shaft 231 and engaged with the first synchronous gear 236. One end of the second swing arm 235 may be slidably connected to the second bracket 233, the other end of the second swing arm 235 may be rotatably connected to the main shaft 231 and engaged with the second synchronous gear 237, and the first synchronous gear 236 and the second synchronous gear 237 are engaged with each other. The first synchronous gear 236 and the second synchronous gear 237 are configured to synchronously rotate the first swing arm 234 and the second swing arm 235, to improve mechanism operation experience of the housing apparatus 20 and the electronic device 100.

In another embodiment, the first swing arm 234 may not be engaged with the first synchronous gear 236, and the first swing arm 234 and the first synchronous gear 236 may be sleeved on a same rotatable connecting shaft, and may be arranged at intervals in an extension direction of the rotatable connecting shaft. The second swing arm 235 may not be engaged with the second synchronous gear 237, and the second swing arm 235 and the second synchronous gear 237 may be sleeved on a same rotatable connecting shaft, and may be arranged at intervals in an extension direction of the rotatable connecting shaft. The first synchronous gear 236 and the second synchronous gear 237 are configured to synchronously rotate the first swing arm 234 and the second swing arm 235.

The first synchronous gear 236 and the second synchronous gear 237 are engaged with each other. The first synchronous gear 236 includes a first tooth part 2361 and a second tooth part 2362. A radius of a tip circle of the first tooth part 2361 is different from a radius of a tip circle of the second tooth part 2362. The first tooth part 2361 is engaged with a first rotating end of the first swing arm 234, and the second tooth part 2362 is engaged with the second synchronous gear 237.

The second synchronous gear 237 includes a third tooth part 2371 and a fourth tooth part 2372. A radius of a tip circle of the third tooth part 2371 is different from a radius of a tip circle of the fourth tooth part 2372. The third tooth part 2371 is engaged with the second tooth part 2362, and the fourth tooth part 2372 is engaged with a second rotating end of the second swing arm 235. The tip circle is a circle in which a tip is located. A radius of the tip circle is a distance from the top of a tooth to a rotation center.

In this implementation of this application, the first synchronous gear 236 includes two tooth parts: the first tooth part 2361 and the second tooth part 2362, and the second synchronous gear 237 includes two tooth parts: the third tooth part 2371 and the fourth tooth part 2372. Tip circles of the two tooth parts of the first synchronous gear 236 may be different in size, and tip circles of the two tooth parts of the second synchronous gear 237 may be different in size. This helps adjust sizes of different parts of the synchronous gear, adjust a rotation center of the first synchronous gear 236, and adjust a rotation center of the second synchronous gear 237 based on space of the foldable mechanism 23 and a structural requirement of the foldable mechanism 23, so that the first synchronous gear 236 and the second synchronous gear 237 occupy the space of the foldable mechanism 23 more flexibly, to help sufficiently utilize internal space of the foldable mechanism 23. It may be understood that, with miniaturization of the electronic device 100 and the foldable mechanism 23, the internal space of the foldable mechanism 23 is limited. In this application, the sizes of the tip circles of the two tooth parts of the first synchronous gear 236 are different, and the sizes of the tip circles of the two tooth parts of the second synchronous gear 237 are different, so that in limited space, a rotation center of the first rotating end 2341, the rotation center of the first synchronous gear 236, the rotation center of the second synchronous gear 237, and a rotation center of the second rotating end 2351 can also be properly configured, to maximize space utilization. For example, in some implementations, if display accommodating space in a folded state is limited, the tip circle of the second tooth part 2362 and the tip circle of the third tooth part 2371 may be set to be small in size, to prevent the second tooth part 2362 and the third tooth part 2371 from pressing against the flexible display in the folded state. When the foldable mechanism 23 moves, the tip circle of the first tooth part 2361 and the tip circle of the fourth tooth part 2372 may be set to be small in size, to avoid a door plate.

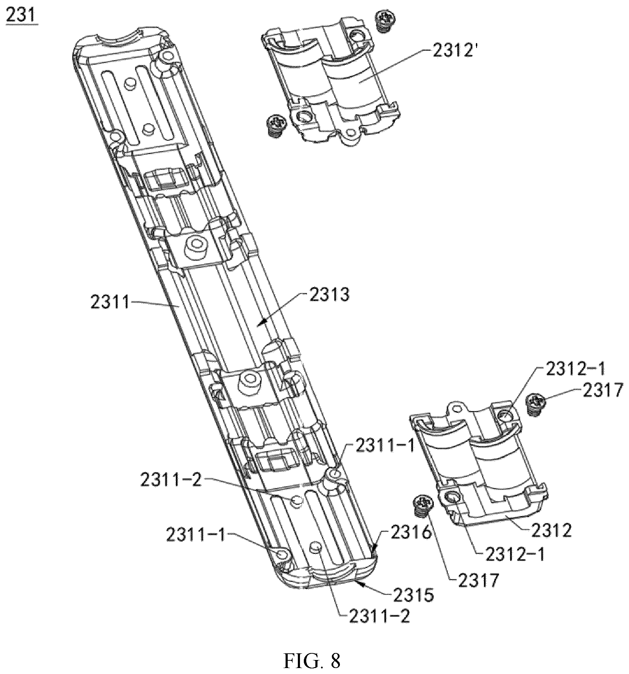

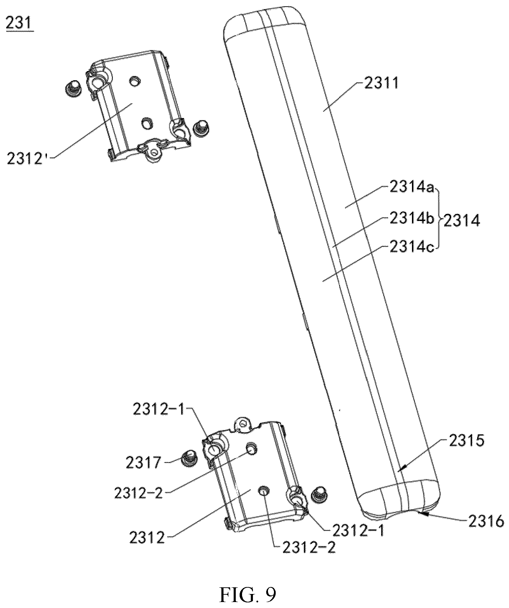

As shown in FIG. 8 and FIG. 9, FIG. 8 is a diagram of a partial exploded structure of the main shaft 231, and FIG. 9 is a diagram of the structure shown in FIG. 8 from another perspective. The main shaft 231 includes an outer cover 2311 and a fastening member 2312. The outer cover 2311 is bent to form inner space 2313 of the main shaft 231, and the inner space 2313 is located inside the outer cover 2311. The fastening member 2312 can be accommodated in the inner space 2313. There may be two fastening members, which are a fastening member 2312 and a fastening member 2312' respectively. The fastening member 2312 and the fastening member 2312' fit the first rotating assembly and the second rotating assembly respectively. The fastening member 2312 and the fastening member 2312' may be mechanical parts independent of each other, or may be two parts of an integrated mechanical part. A quantity and a structural form of the fastening member are not limited in embodiments of this application. Structures of the fastening member 2312 and the fastening member 2312' may be the same or similar, symmetric or partially symmetric, or different.

The fastening member 2312 is fastened to the outer cover 2311. For example, the fastening member 2312 is provided with a first fastening hole 2312-1, the outer cover 2311 is provided with a convex part, the convex part is in the inner space 2313, the convex part is provided with a second fastening hole 2311-1, and a fastener 2317 passes through the first fastening hole 2312-1 and the second fastening hole 2311-1 that are correspondingly provided to implement fastening of the fastening member 2312 and the outer cover 2311. The fastener 2317 may be a screw or a bolt, and a quantity of fasteners is not limited in this application, and may be set as required.

In some embodiments, the outer cover 2311 may be provided with a positioning post 2311-2, and the fastening member 2312 may be provided with a positioning hole 2312-2. When the outer cover 2311 and the fastening member 2312 are assembled, the positioning post 2311-2 may first extend into the positioning hole 2312-2 to implement preliminary pre-mounting of the outer cover 2311 and the fastening member 2312, and then the outer cover 2311 and the fastening member 2312 are fastened via the fastener 2317.

In embodiments of this application, a quantity and locations of first fastening holes 2312-1, second fastening holes 2311-1, positioning holes 2312-2, and positioning posts 2311-2 are not limited, and may be disposed based on structures and space of the outer cover 2311 and the fastening member 2312. FIG. 8 and FIG. 9 are merely schematic structures.

It may be understood that, a connection manner of the fastening member 2312 and the outer cover 2311 is not limited to fastening via a fastener, and may alternatively be fixed mounting through welding, bonding, fastening connection, or the like, to implement fastening of the fastening member 2312 and the outer cover 2311. In other implementations, the fastening member 2312 and the outer cover 2311 may alternatively be of an integrated structure.

In some embodiments, refer to FIG. 9. The outer cover 2311 of the main shaft 231 includes an appearance surface 2314 that backs on the inner space 2313, and the appearance surface 2314 is an outer surface of the outer cover 2311. For example, the appearance surface 2314 of the outer cover 2311 may include a first arc-shaped surface part 2314a, a planar part 2314b, and a second arc-shaped surface part 2314c, where the first arc-shaped surface part 2314a and the second arc-shaped surface part 2314c are respectively connected to two sides of the planar part 2314b. In some other embodiments, the appearance surface 2314 may alternatively be an arc-shaped surface or another smooth surface.

The appearance surface 2314 of the outer cover 2311 forms a shape similar to an arc-shaped surface or an arc-shaped surface, which helps improve appearance experience and holding experience of the electronic device 100 in a folded state. In addition, the middle part of the appearance surface 2314 may be the planar part 2314b, so that a thickness (a size in a direction perpendicular to the planar part 2314b) of the outer cover 2311 is small, an overall thickness of the housing apparatus 20 in an unfolded state is small, and an overall width of the housing apparatus 20 in a folded state is small. This is conducive to miniaturization and thinness of the electronic device 100.

For example, the main shaft 231 further includes a first side 2315 and a second side 2316 that are disposed opposite to each other. The first side is an appearance side of the main shaft 231, the second side 2316 is closer to the flexible display 10 than the first side 2315, and the second side 2316 is configured to carry the flexible display 10. It may be understood that the first side 2315 is an outer side of the outer cover 2311.

With reference to FIG. 1, FIG. 2, and FIG. 9 again, when the first housing 21 and the second housing 22 are unfolded relative to each other to an unfolded state, the first housing 21 and the second housing 22 cover the appearance surface 2314 of the outer cover 2311. In other words, when the housing apparatus 20 is in the unfolded state, the first housing 21 and the second housing 22 can shield the outer cover 2311 from a back side (namely, a side back to the flexible display 10) of the housing apparatus 20. In this case, the first housing 21 and the second housing 22 can also shield other components of the foldable mechanism 23 from the back side of the housing apparatus 20, so that the housing apparatus 20 implements self-shielding on the back side, to protect the foldable mechanism 23. In addition, the housing apparatus 20 and the electronic device 100 are complete in appearance, good in appearance experience, and good in waterproof and dustproof performance. In other words, an appearance surface seen from the back side of the electronic device 100 is an appearance surface of the first housing 21 and the second housing 22.

With reference to FIG. 3, FIG. 4A, and FIG. 9, when the first housing 21 and the second housing 22 are folded to the folded state, the appearance surface 2314 of the outer cover 2311 is exposed relative to the first housing 21 and the second housing 22. In this case, the first housing 21, the second housing 22, and the outer cover 2311 jointly form an appearance part of the electronic device 100. Therefore, the electronic device 100 can implement back-side self-shielding in the folded state. This helps improve appearance integrity, and achieves good waterproof and dustproof performance.

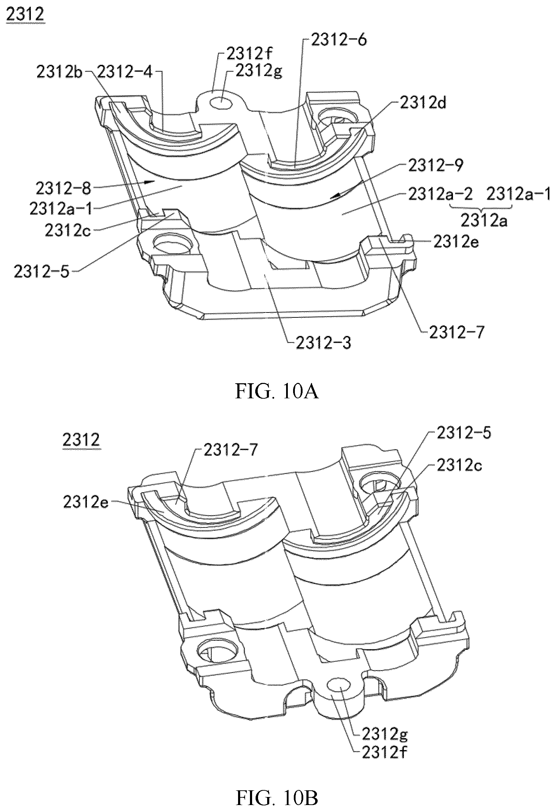

As shown in FIG. 10A and FIG. 10B, FIG. 10A is a diagram of a structure of the fastening member 2312 of the main shaft 231, and FIG. 10B is a diagram of a structure of the fastening member 2312 shown in FIG. 10A from another perspective. The fastening member 2312 includes a main part 2312-3, and a first protruding part 2312-4, a second protruding part 2312-5, a third protruding part 2312-6, and a fourth protruding part 2312-7 that are located on the main part 2312-3. The main part 2312-3 includes a surface 2312a, where the surface 2312a is a surface that is of the main part 2312-3 and that is away from the outer cover 2311. The surface 2312a of the main part 2312-3 includes a first partition surface 2312a-1 and a second partition surface 2312a-2. The first partition surface 2312a-1 may be bent, and the second partition surface 2312a-2 may be bent. Both the first partition surface 2312a-1 and the second partition surface 2312a-2 may be arc-shaped surfaces.

The first protruding part 2312-4 and the second protruding part 2312-5 may be disposed opposite to two inner side walls of the main part 2312-3, a first gap 2312b is formed between the first protruding part 2312-4 and the first partition surface 2312a-1, and a second gap 2312c is formed between the second protruding part 2312-5 and the first partition surface 2312a-1. The first protruding part 2312-4, the second protruding part 2312-5, and the first partition surface 2312a-1 jointly enclose first mounting space 2312-8. It may be understood that the first mounting space 2312-8 may include the first gap 2312b, the second gap 2312c, and space between the first gap 2312b and the second gap 2312c.

The third protruding part 2312-6 and the fourth protruding part 2312-7 may be disposed opposite to two inner side walls of the main part 2312-3, a third gap 2312d is formed between the third protruding part 2312-6 and the second partition surface 2312a-2, and a fourth gap 2312e is formed between the fourth protruding part 2312-7 and the second partition surface 2312a-2. The third protruding part 2312-6, the fourth protruding part 2312-7, and the second partition surface 2312a-2 jointly enclose second mounting space 2312-9. It may be understood that the second mounting space 2312-9 may include the third gap 2312d, the fourth gap 2312e, and space between the third gap 2312d and the fourth gap 2312e. In some embodiments, the fastening member 2312 includes a fastening part 2312f, the fastening part 2312f protrudes from an outer side wall of the main part 2312-3, and a through hole 2312g is provided on the fastening part 2312f. In some embodiments, the first protruding part 2312-4, the second protruding part 2312-5, the third protruding part 2312-6, and the fourth protruding part 2312-7 may be arc-shaped structures, and the formed first gap 2312b, second gap 2312c, third gap 2312d, and fourth gap 2312e may also be arc-shaped space.

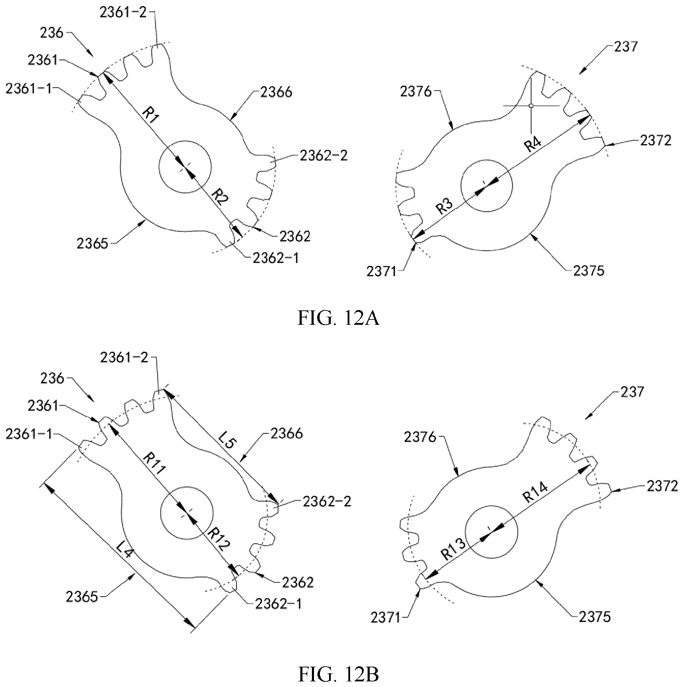

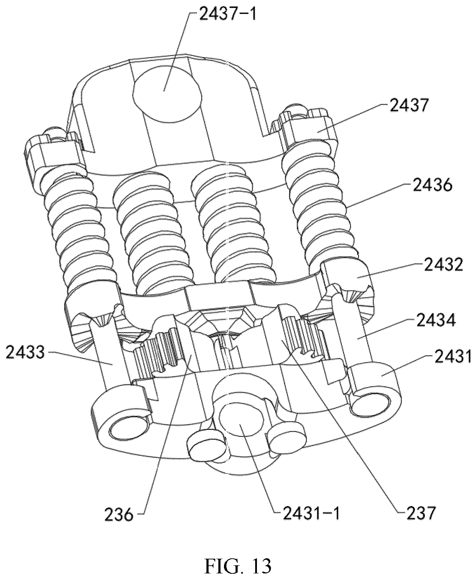

As shown in FIG. 11, FIG. 12A, and FIG. 13, FIG. 11 is a diagram of exploded structures of a damping assembly 243, the first synchronous gear 236, and the second synchronous gear 237, FIG. 12A is a diagram of structures of the first synchronous gear 236 and the second synchronous gear 237, and FIG. 13 is a diagram of a structure of the assembled damping assembly 243, the first synchronous gear 236, and the second synchronous gear 237. The main shaft 231 includes the damping assembly 243, and the damping assembly 243 is mounted on the outer cover 2311 of the main shaft 231. The damping assembly 243 includes a first clamping member 2431, a second clamping member 2432, a first rotatable connecting shaft 2433, a second rotatable connecting shaft 2434, a plurality of third rotatable connecting shafts 2435, a plurality of elastic pieces 2436, and a fastening element 2437. The second clamping member 2432 is located between the first clamping member 2431 and the fastening element 2437, the first synchronous gear 236 and the second synchronous gear 237 are located between the first clamping member 2431 and the second clamping member 2432, the elastic piece 2436 is located between the second clamping member 2432 and the fastening element 2437, and both the first clamping member 2431 and the fastening element 2437 are fastened to the outer cover 2311.

For example, the first clamping member 2431 may include a first mounting hole 2431-1 and a plurality of first through holes 2431-2, and the first mounting hole 2431-1 is used for fastening the outer cover 2311. The plurality of first through holes 2431-2 are provided at intervals. The plurality of first through holes 2431-1 may be arranged in a straight line, an arc line, a wavy line, or the like. In this embodiment of this application, an example in which there are four first through holes 2431-2 is used. Extension directions of the first mounting hole 2431-1 and the first through hole 2431-2 are different. That a surface that is of the first clamping member 2431 and that faces the second clamping member 2432 is a smooth surface may be understood as that no protruding structure is disposed on a surface on a side that is of the first clamping member 2431 and that faces the second clamping member 2432, and the surface on the side that is of the first clamping member 2431 and that faces the second clamping member 2432 may include a plurality of parts, and each part is smooth. This helps reduce rotation resistance.

The first clamping member 2431 further includes a body 2431-3 and a convex part 2431-4, and the convex part 2431-4 is located on a side that is of the body 2431-3 and that faces the second clamping member 2432. A surface that is of the body 2431-3 and that faces the second clamping member 2432 is a smooth surface, and a surface that is of the convex part 2431-4 and that faces the second clamping member 2432 is a smooth surface.

For example, the second clamping member 2432 includes a clamping plate 2432-1 and a plurality of bump groups 2432-2, and the plurality of bump groups 2432-2 are fastened on a same side surface of the clamping plate 2432-1 and face the first clamping member 2431. The clamping plate 2432-1 includes a plurality of second through holes 2432-3, and the plurality of second through holes 2432-3 are provided at intervals. The plurality of second through holes 2432-3 may be arranged in a straight line, an arc line, a wavy line, or the like. The plurality of bump groups 2432-2 are disposed in a one-to-one correspondence with the plurality of second through holes 2432-3. There may be four second through holes 2432-3 and four bump groups 2432-2. A quantity of second through holes 2432-3 and a quantity of bump groups 2432-2 are not limited in this application. Each bump group 2432-2 may include a plurality of bumps 2432-4. The plurality of bumps 2432-4 are arranged in an annular shape and are spaced away from each other. The plurality of bumps 2432-4 are disposed around the second through hole 2432-3. A first clamping slot 2432-5 is formed between two adjacent bumps 2432-4. The second clamping member 2432 may be an integrally formed mechanical part, to have high structural strength.

For example, the fastening element 2437 is located on a side that is of the elastic piece 2436 and that is away from the second clamping member 2432. The fastening element 2437 includes a second mounting hole 2437-1 and a plurality of third through holes 2437-2, and the second mounting hole 2437-1 is used for fastening the main shaft 231. The plurality of third through holes 2437-2 are provided at intervals, and extension directions of the second mounting hole 2437-1 and the third through holes 2437-2 are different. For example, the plurality of first through holes 2431-2, the plurality of second through holes 2432-3, and the plurality of third through holes 2437-2 may be the same in quantity, arrangement shape, and arrangement spacing. There may be four third through holes 2437-2, and the plurality of third through holes 2437-2 may be arranged in a straight line, an arc line, a wavy line, or the like.

For example, the elastic piece 2436 is located on a side that is of the second clamping member 2432 and that is away from the first clamping member 2431. The elastic piece 2436 may include a plurality of springs 2436-1. A quantity of springs 2436-1 is the same as a quantity of first through holes 2431-2. There may be four springs 2436-1. In some other embodiments, the elastic piece 2436 may alternatively be of an elastic material like an elastic rubber. This is not strictly limited in this application.

For example, a limiting flange 2433-1 is disposed at a top end of the first rotatable connecting shaft 2433, and an outer diameter of the limiting flange 2433-1 is greater than an outer diameter of a main body part of the first rotatable connecting shaft 2433. A limiting clamping slot 2433-2 is provided at a bottom end of the first rotatable connecting shaft 2433, the limiting clamping slot 2433-2 shrinks inward relative to an outer surface of the main body part of the first rotatable connecting shaft 2433, and a diameter of a slot bottom wall of the limiting clamping slot 2433-2 is less than an outer diameter of the main body part of the first rotatable connecting shaft 2433.

The first rotatable connecting shaft 2433 is inserted with the first clamping member 2431, the second clamping member 2432, one of the springs 2436-1, and the fastening element 2437. The first rotatable connecting shaft 2433 passes through one of the first through holes 2431-2 of the first clamping member 2431, one of the second through holes 2432-3 of the second clamping member 2432, inner space of one of the springs 2436-1, and one of the third through holes 2437-2 of the fastening element 2437. In addition, the limiting flange 2433-1 of the first rotatable connecting shaft 2433 is located on a side that is of the first clamping member 2431 and that is away from the second clamping member 2432 and presses against the first clamping member 2431, and the fastening element 2437 is clamped into the limiting clamping slot 2433-2 of the first rotatable connecting shaft 2433, so that the first clamping member 2431, the second clamping member 2432, one of the springs 2436-1, and the fastening element 2437 may maintain a fixed position relationship, and the spring 2436-1 is in a compressed state. A bottom end of the first rotatable connecting shaft 2433 may be further fastened to the fastening element 2437 through welding, bonding, or the like. For example, a limiting flange 2434-1 is disposed at a top end of the second rotatable connecting shaft 2434, and an outer diameter of the limiting flange 2434-1 is greater than an outer diameter of a main body part of the second rotatable connecting shaft 2434. A limiting clamping slot 2434-2 is provided at a bottom end of the second rotatable connecting shaft 2434, the limiting clamping slot 2434-2 shrinks inward relative to an outer surface of the main body part of the second rotatable connecting shaft 2434, and a diameter of a slot bottom wall of the limiting clamping slot 2434-2 is less than an outer diameter of the main body part of the second rotatable connecting shaft 2434. The second rotatable connecting shaft 2434 and the first rotatable connecting shaft 2433 may be the same in structure, and are of a same material, so that material types are reduced, and costs are reduced. In some other embodiments, a structure of the second rotatable connecting shaft 2434 may alternatively be different from a structure of the first rotatable connecting shaft 2433. This is not strictly limited in this application.

The second rotatable connecting shaft 2434 is inserted with the first clamping member 2431, the second clamping member 2432, one of the springs 2436-1, and the fastening element 2437. The second rotatable connecting shaft 2434 passes through one of the first through holes 2431-2 of the first clamping member 2431, one of the second through holes 2432-3 of the second clamping member 2432, inner space of one of the springs 2436-1, and one of the third through holes 2437-2 of the fastening element 2437. In addition, the limiting flange 2434-1 of the second rotatable connecting shaft 2434 is located on a side that is of the first clamping member 2431 and that is away from the second clamping member 2432 and presses against the first clamping member 2431, and the fastening element 2437 is clamped into the limiting clamping slot 2434-2 of the second rotatable connecting shaft 2434, so that the first clamping member 2431, the second clamping member 2432, one of the springs 2436-1, and the fastening element 2437 may maintain a fixed position relationship, and the spring 2436-1 is in a compressed state. A bottom end of the second rotatable connecting shaft 2434 may be further fastened to the fastening element 2437 through welding, bonding, or the like. For example, a limiting flange 2435-1 is disposed at a top end of the third rotatable connecting shaft 2435, and an outer diameter of the limiting flange 2435-1 is greater than an outer diameter of a main body part of the third rotatable connecting shaft 2435. A limiting clamping slot 2435-2 is provided at a bottom end of the third rotatable connecting shaft 2435, the limiting clamping slot 2435-2 shrinks inward relative to an outer surface of the main body part of the third rotatable connecting shaft 2435, and a diameter of a slot bottom wall of the limiting clamping slot 2435-2 is less than an outer diameter of the main body part of the third rotatable connecting shaft 2435. The third rotatable connecting shaft 2435 and the first rotatable connecting shaft 2433 may be the same in structure, and are of a same material, so that material types are reduced, and costs are reduced. In some other embodiments, a structure of the third rotatable connecting shaft 2435 may alternatively be different from a structure of the first rotatable connecting shaft 2433. This is not strictly limited in this application.

A quantity of third rotatable connecting shafts 2435 is the same as a quantity of synchronous gears (including the first synchronous gear 236 and the second synchronous gear 237, and more other synchronous gears), and the third rotatable connecting shafts 2435, the synchronous gears, and some springs 2436-1 in the elastic piece 2436 are disposed in a one-to-one correspondence. The third rotatable connecting shaft 2435 is inserted with the first clamping member 2431, one of the synchronous gears, the second clamping member 2432, one of the springs 2436-1, and the fastening element 2437. The third rotatable connecting shaft 2435 passes through one of the first through holes 2431-2 of the first clamping member 2431, one of the second through holes 2432-3 of the second clamping member 2432, a rotating shaft hole of the first synchronous gear 236 (or a rotating shaft hole of the second synchronous gear 237, or a rotating shaft hole of another synchronous gear, where one third rotatable connecting shaft 2435 corresponds to one synchronous gear), inner space of one of the springs 2436-1 and one of the third through holes 2437-2 of the fastening element 2437. In addition, the limiting flange 2435-1 of the third rotatable connecting shaft 2435 is located on a side that is of the first clamping member 2431 and that is away from the second clamping member 2432 and presses against the first clamping member 2431, and the fastening element 2437 is clamped into the limiting clamping slot 2435-2 of the third rotatable connecting shaft 2435, so that the first clamping member 2431, the second clamping member 2432, the synchronous gear, one of the springs 2436-1, and the fastening element 2437 may maintain a fixed position relationship, and the spring 2436-1 is in a compressed state. A bottom end of the third rotatable connecting shaft 2435 may be further fastened to the fastening element 2437 through welding, bonding, or the like.

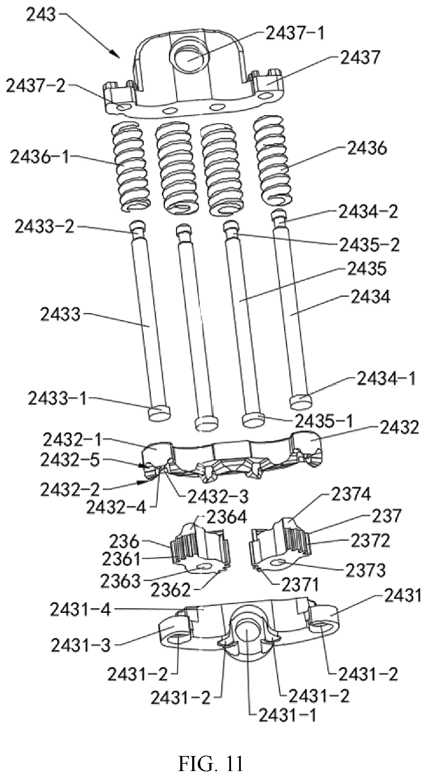

For example, refer to FIG. 11 and FIG. 12A. The first synchronous gear 236 and the second synchronous gear 237 are located between the first clamping member 2431 and the second clamping member 2432. The first synchronous gear 236 and the second synchronous gear 237 are engaged with each other. A radius R1 of a tip circle of the first tooth part 2361 of the first synchronous gear 236 is different from a radius R2 of a tip circle of the second tooth part 2362 of the first synchronous gear 236, and the second tooth part 2362 is engaged with the second synchronous gear 237. In some embodiments, the radius R1 of the tip circle of the first tooth part 2361 may be greater than the radius R2 of the tip circle of the second tooth part 2362. The radius R1 of the tip circle of the first tooth part 2361 of the first synchronous gear 236 is used as an example. The radius R1 of the tip circle of the first tooth part 2361 is a distance from a top of the first tooth part 2361 to a rotation center of the first tooth part 2361.

A radius R3 of a tip circle of the third tooth part 2371 of the second synchronous gear 237 is different from a radius R4 of a tip circle of the fourth tooth part 2372, and the third tooth part 2371 is engaged with the second tooth part 2362. In some embodiments, a radius R4 of a tip circle of the fourth tooth part 2372 may be greater than the radius R3 of the tip circle of the third tooth part 2371.

In another embodiment, it may also be designed that the radius R1 of the tip circle of the first tooth part 2361 is less than the radius R2 of the tip circle of the second tooth part 2362, and the radius R4 of the tip circle of the fourth tooth part 2372 is less than the radius R3 of the tip circle of the third tooth part 2371.

As shown in FIG. 12B, FIG. 12B is a diagram of structures of the first synchronous gear 236 and the second synchronous gear 237, and structures in FIG. 12A and FIG. 12B are the same, and are only for ease of identification. A radius R11 of an indexing circle of the first tooth part 2361 of the first synchronous gear 236 is different from a radius R12 of an indexing circle of the second tooth part 2362, and a radius R13 of an indexing circle of the third tooth part 2371 of the second synchronous gear 237 is different from a radius R14 of an indexing circle of the fourth tooth part 2372. The indexing circle is a product of a modulus and a number of teeth. The modulus is a basic parameter for calculating a geometric dimension of the gear. A size of the modulus indicates a thickness, a size, and a bearing capability of the gear. When the size of the tip circle changes, the size of the indexing circle changes accordingly.

The first synchronous gear 236 further includes a first rotating shaft hole 2363 and a plurality of first protrusions 2364. The plurality of first protrusions 2364 are located at an end of the first synchronous gear 236 and are disposed around the first rotating shaft hole 2363, and the plurality of first protrusions 2364 are arranged in an annular shape, are spaced from each other, and are disposed facing the second clamping member 2432.

The second synchronous gear 237 includes a second rotating shaft hole 2373 and a plurality of second protrusions 2374. The plurality of second protrusions 2374 are located at an end of the second synchronous gear 237 and are disposed around the second rotating shaft hole 2373, and the plurality of second protrusions 2374 are arranged in an annular shape, are spaced from each other, and are disposed facing the second clamping member 2432.

One third rotatable connecting shaft 2435 is inserted into the first rotating shaft hole 2363 of the first synchronous gear 236, to implement a rotatable connection between the first synchronous gear 236 and the main shaft 231. Another third rotatable connecting shaft 2435 is inserted into the second rotating shaft hole 2373 of the second synchronous gear 237, to implement a rotatable connection between the second synchronous gear 237 and the main shaft 231.

In some use states, one first protrusion 2364 of the first synchronous gear 236 and a plurality of bumps 2432-4 of the second clamping member 2432 are arranged in a staggered manner to form a clamping structure, and the plurality of first protrusions 2364 are correspondingly clamped into the plurality of first clamping slots 2432-5. Shapes and positions of the plurality of first protrusions 2364 of the first synchronous gear 236 adapt to shapes and positions of the corresponding plurality of first clamping slots 2432-5. One second protrusion 2374 of the second synchronous gear 237 and the plurality of bumps 2432-4 of the second clamping member 2432 are arranged in a staggered manner to form a clamping structure, and the plurality of second protrusions 2374 are correspondingly clamped into the plurality of first clamping slots 2432-5. Shapes and positions of the plurality of second protrusions 2374 of the second synchronous gear 237 adapt to shapes and positions of the corresponding plurality of first clamping slots 2432-5.

The first synchronous gear 236 may be an integrally formed mechanical part, to have high structural strength. The second synchronous gear 237 may be an integrally formed mechanical part, to have high structural strength. The first synchronous gear 236 and the second synchronous gear 237 may be the same in structure, and are of a same material, so that material types are reduced, and costs are reduced. In some other embodiments, structures of the first synchronous gear 236 and the second synchronous gear 237 may be different. This is not strictly limited in this application.

It may be understood that the damping assembly 243 in this application may have a plurality of implementation structures. The foregoing is merely a structure of the damping assembly 243 in an implementation. A specific structure of the damping assembly 243 is not limited in this application.

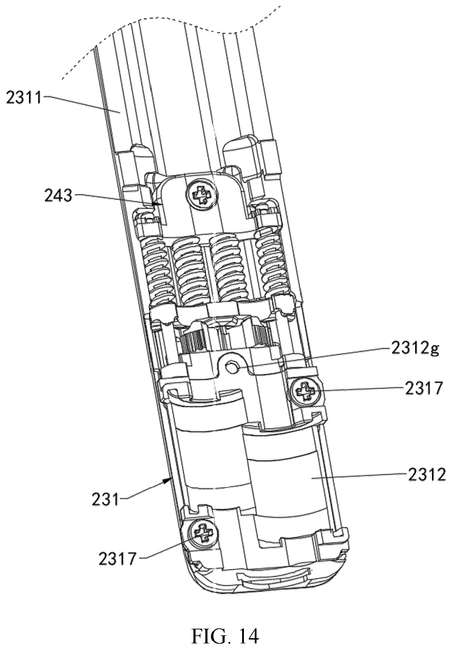

As shown in FIG. 10A, FIG. 10B, FIG. 13, and FIG. 14, FIG. 14 is a diagram of a partial structure of the main shaft 231, and the fastening member 2312, the damping assembly 243, and a part of the outer cover 2311 are included in FIG. 14. The fastening member 2312 of the main shaft 231 is mounted on the outer cover 2311, and the damping assembly 243 is mounted on the outer cover 2311. The fastening member 2312 is fastened to the outer cover 2311 via the fastener 2317. For details, refer to the foregoing description. Details are not described herein again.

The damping assembly 243 is mounted on the outer cover 2311, a first mounting hole 2431-1 of the first clamping member 2431 of the damping assembly 243 is provided corresponding to a through hole 2312g of the fastening member 2312, and the fastener passes through the first mounting hole 2431-1 and the through hole 2312g of the fastening member 2312, to implement fastening of the damping assembly 243 and the fastening member 2312. In addition, there may be a plurality of fasteners, and the fasteners pass through the second mounting hole 2437-1 of the fastening element 2437 to implement fastening of the damping assembly 243 and the outer cover 2311 of the main shaft 231. A connection manner between the damping assembly 243 and the outer cover 2311 is not limited to a connection using a fastener, and may also a connection using a bolt or buckle. Alternatively, the damping assembly 243 may be fastened to the outer cover 2311 directly without being fastened to the fastening member 2312.

In this application, both the first clamping member 2431 and the fastening element 2437 are fastened to the outer cover 2311. In a process of rotating the first swing arm 234 and the second swing arm 235, only the second clamping member 2432 moves, and neither the first clamping member 2431 nor the fastening element 2437 moves, so that a damping mechanism in this implementation of this application is stable.

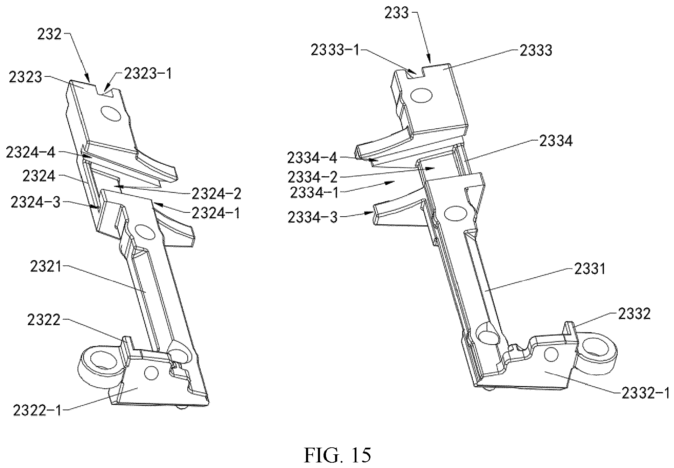

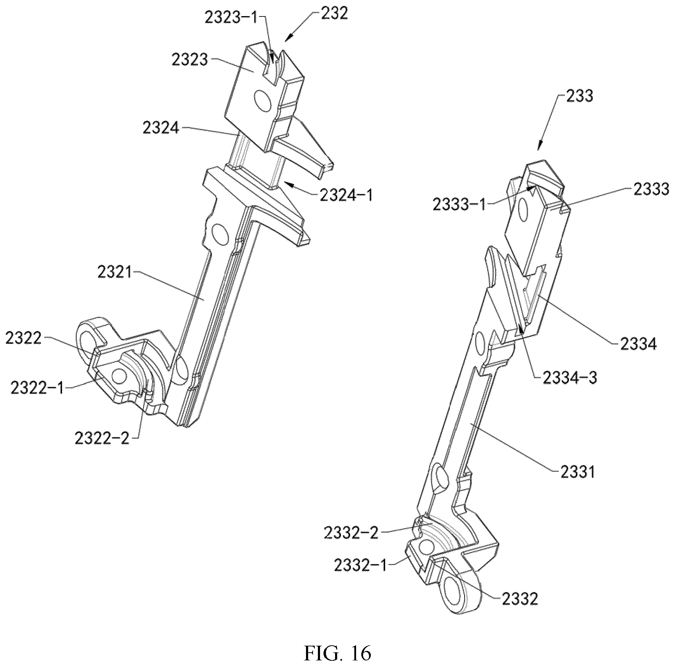

As shown in FIG. 15 and FIG. 16, FIG. 15 is a diagram of structures of the first bracket 232 and the second bracket 233, and FIG. 16 is a diagram of structures of the first bracket 232 and the second bracket 233 shown in FIG. 15 from another perspective. The first bracket 232 includes a first body 2321, and a first mounting part 2322, a second mounting part 2323, and a third mounting part 2324 that are located on the first body 2321. The first mounting part 2322 and the second mounting part 2323 are respectively located at two opposite ends of the first body 2321, and the third mounting part 2324 is located between the first mounting part 2322 and the second mounting part 2323. The first mounting part 2322 protrudes from the first body 2321, the first mounting part 2322 includes a first fitting part 2322-1 and a first arc-shaped bar 2322-2, and the first arc-shaped bar 2322-2 is located on a side that is of the first fitting part 2322-1 and that faces the third mounting part 2324. The first arc-shaped bar 2322-2 is an arc-shaped bar structure. The second mounting part 2323 includes a first arc-shaped slot 2323-1, the first arc-shaped slot 2323-1 includes an opening and a bottom wall that are disposed opposite to each other, and the opening and the bottom wall of the first arc-shaped slot 2323-1 extend in a direction in which the first mounting part 2322, the second mounting part 2323, and the third mounting part 2324 are arranged. The third mounting part 2324 includes a first sliding groove 2324-1. The first sliding groove 2324-1 includes a first main slot 2324-2, and a first side slot 2324-3 and a second side slot 2324-4 that are provided at two ends of the first main slot 2324-2. The first main slot 2324-2, the first side slot 2324-3, and the second side slot 2324-4 communicate with each other.

The second bracket 233 includes a second body 2331, and a fourth mounting part 2332, a fifth mounting part 2333, and a sixth mounting part 2334 that are located on the second body 2331. The fourth mounting part 2332 and the fifth mounting part 2333 are respectively located at two opposite ends of the second body 2331, and the sixth mounting part 2334 is located between the fourth mounting part 2332 and the fifth mounting part 2333. The fourth mounting part 2332 protrudes from the second body 2331, the fourth mounting part 2332 includes a second fitting part 2332-1 and a second arc-shaped bar 2332-2, and the second arc-shaped bar 2332-2 is located on a side that is of the second fitting part 2332-1 and that faces the sixth mounting part 2334. The second arc-shaped bar 2332-2 is an arc-shaped bar structure. The fifth mounting part 2333 includes a second arc-shaped slot 2333-1, the second arc-shaped slot 2333-1 includes an opening and a bottom wall that are disposed opposite to each other, and the opening and the bottom wall of the second arc-shaped slot 2333-1 extend in a direction in which the fourth mounting part 2332, the fifth mounting part 2333, and the sixth mounting part 2334 are arranged. The sixth mounting part 2334 includes a second sliding groove 2334-1. The second sliding groove 2334-1 includes a second main slot 2334-2, and a third side slot 2334-3 and a fourth side slot 2334-4 that are provided at two ends of the second main slot 2334-2. The second main slot 2334-2, the third side slot 2334-3, and the fourth side slot 2334-4 communicate with each other.

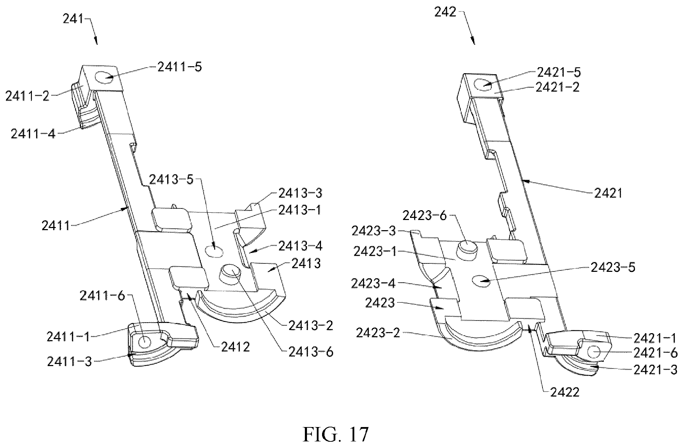

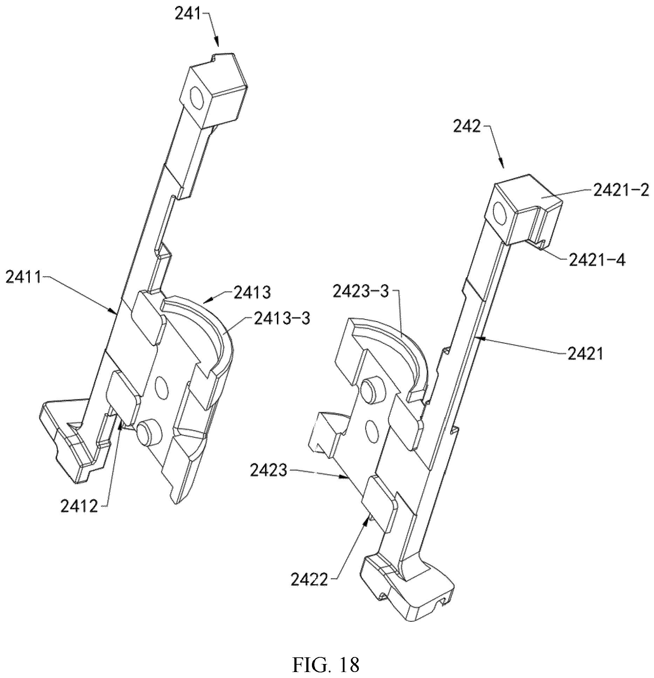

As shown in FIG. 17 and FIG. 18, FIG. 17 is a diagram of structures of the first moving member 241 and the second moving member 242, and FIG. 18 is a diagram of structures of the first moving member 241 and the second moving member 242 shown in FIG. 17 from another perspective. The first moving member 241 includes a first connection part 2411, a first connection arm 2412, and a first arc-shaped arm 2413, and the first connection arm 2412 is fastened between the first connection part 2411 and the first arc-shaped arm 2413. The first connection part 2411 includes a first end 2411-1 and a second end 2411-2 that are disposed opposite to each other, the first end 2411-1 is provided with a third arc-shaped slot 2411-3, and the second end 2411-2 is provided with a third arc-shaped bar 2411-4. The second end 2411-2 further includes a first assembly hole 2411-5. The first arc-shaped arm 2413 includes a first main arc arm 2413-1, and a fourth arc-shaped bar 2413-2 and a fifth arc-shaped bar 2413-3 that are located on two opposite sides of the first main arc arm 2413-1. The first main arc arm 2413-1 further includes a first groove 2413-4, a second assembly hole 2413-5, and a first limiting post 2413-6. The first groove 2413-4 is provided opposite to the first connection part 2411.

The second moving member 242 includes a second connection part 2421, a second connection arm 2422, and a second arc-shaped arm 2423, and the second connection arm 2422 is fastened between the second connection part 2421 and the second arc-shaped arm 2423. The second connection part 2421 includes a third end 2421-1 and a fourth end 2421-2 that are disposed opposite to each other, the third end 2421-1 is provided with a fourth arc-shaped slot 2421-3, and the fourth end 2421-2 is provided with a sixth arc-shaped bar 2421-4. The fourth end 2421-2 further includes a third assembly hole 2421-5, and the second arc-shaped arm 2423 includes a second main arc arm 2423-1, and a seventh arc-shaped bar 2423-2 and an eighth arc-shaped bar 2423-3 that are located on two opposite sides of the second main arc arm 2423-1. The second main arc arm 2423-1 further includes a second groove 2423-4, a fourth assembly hole 2423-5, and a second limiting post 2423-6. The second groove 2423-4 is provided opposite to the first connection part 2411.

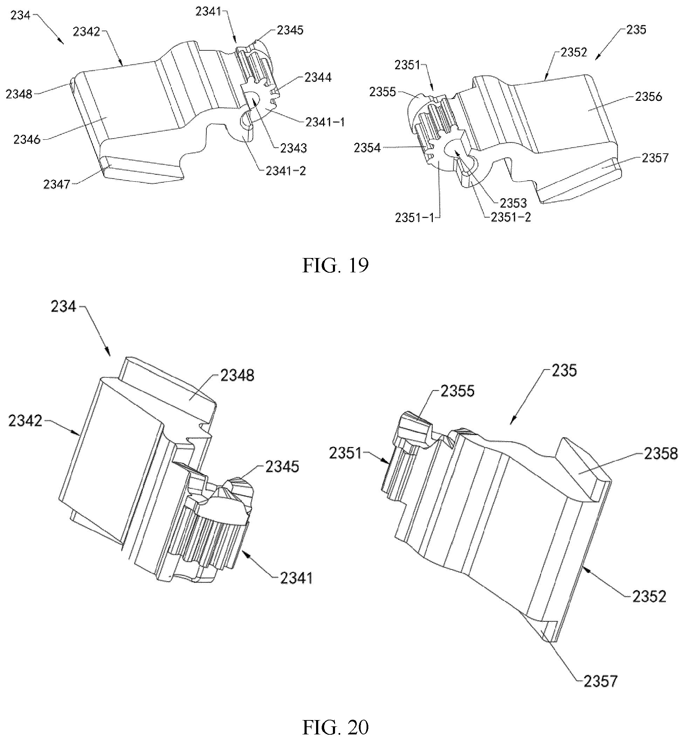

As shown in FIG. 19 and FIG. 20, FIG. 19 is a diagram of structures of the first swing arm 234 and the second swing arm 235, and FIG. 20 is a diagram of structures of the first swing arm 234 and the second swing arm 235 shown in FIG. 19 from another perspective. The first swing arm 234 includes a first rotating end 2341 and a first sliding end 2342, the first rotating end 2341 includes a third rotating shaft hole 2343, a fifth tooth part 2344, and a plurality of third protrusions 2345, where the fifth tooth part 2344 surrounds the third rotating shaft hole 2343, and the plurality of third protrusions 2345 surround the third rotating shaft hole 2343 and are located on a side of the fifth tooth part 2344. A side of the first rotating end 2341 includes a first pressing part 2341-1 and a second pressing part 2341-2, and the second pressing part 2341-2 protrudes from the first pressing part 2341-1. The first sliding end 2342 includes a first main sliding part 2346, and a first side part 2347 and a second side part 2348 that are located on two opposite sides of the first main sliding part 2346, and the first main sliding part 2346 is fastened to the first rotating end 2341. The first swing arm 234 may be an integrally formed mechanical part, to have high structural strength.

The second swing arm 235 includes a second rotating end 2351 and a second sliding end 2352. The second rotating end 2351 includes a fourth rotating shaft hole 2353, a sixth tooth part 2354, and a plurality of fourth protrusions 2355, where the sixth tooth part 2354 surrounds the fourth rotating shaft hole 2353, and the plurality of fourth protrusions 2355 surround the fourth rotating shaft hole 2353 and are located on a side of the sixth tooth part 2354. A side of the second rotating end 2351 includes a third pressing part 2351-1 and a fourth pressing part 2351-2, and the fourth pressing part 2351-2 protrudes from the third pressing part 2351-1. The second sliding end 2352 includes a second main sliding part 2356, and a third side part 2357 and a fourth side part 2358 that are located on two opposite sides of the second main sliding part 2356. The second main sliding part 2356 is fastened to the second rotating end 2351. The second swing arm 235 may be an integrally formed mechanical part, to have high structural strength.

The first swing arm 234 and the second swing arm 235 may be the same in structure, and are of a same material, so that material types are reduced, and costs are reduced. In some other embodiments, structures of the first swing arm 234 and the second swing arm 235 may be different. This is not strictly limited in this application.

As shown in FIG. 13, FIG. 19, and FIG. 21, FIG. 21 is a diagram of a structure in which the first swing arm 234 and the second swing arm 235 are assembled to the damping assembly 243. The first rotatable connecting shaft 2433 of the damping assembly 243 passes through the third rotating shaft hole 2343 of the first rotating end 2341 of the first swing arm 234, and the first rotating end 2341 of the first swing arm 234 is rotatably connected to the main shaft 231. The second rotatable connecting shaft 2434 of the damping assembly 243 passes through the fourth rotating shaft hole 2353 of the second rotating end 2351 of the second swing arm 235, and the second rotating end 2351 of the second swing arm 235 is rotatably connected to the main shaft 231.

In some implementations, the third rotating shaft hole 2343 of the first swing arm 234, the first rotating shaft hole 2363 of the first synchronous gear 236, the second rotating shaft hole 2373 of the second synchronous gear 237, and the fourth rotating shaft hole 2353 of the second swing arm 235 are arranged in an arc shape, so that space of the main shaft 231 can be fully utilized, and more internal space of the main shaft 231 can be released to accommodate the flexible display. This helps improve compactness of arrangement of mechanical parts of the electronic device 100, reduce a volume of the electronic device 100, and facilitate miniaturization and thinness of the electronic device 100.

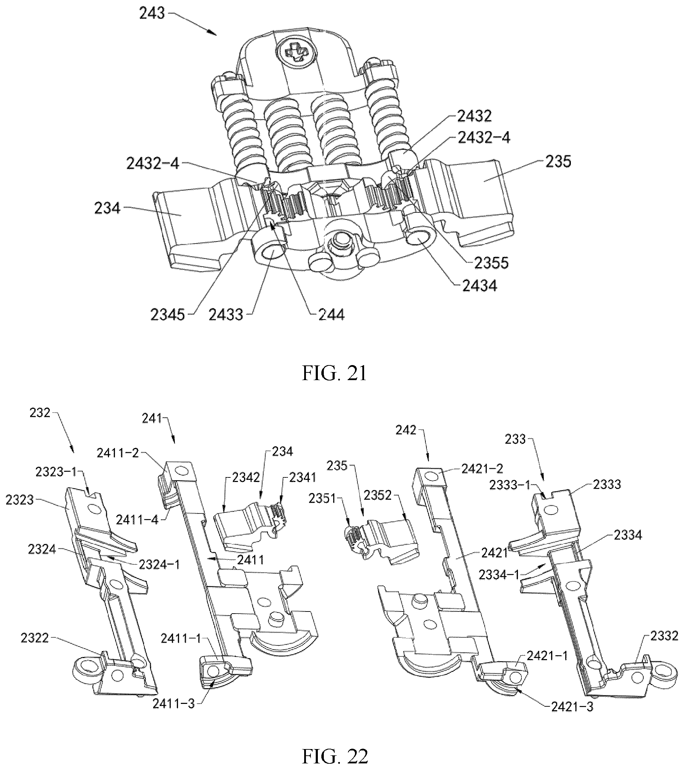

With reference to FIG. 11 and FIG. 21, in some use states, one third protrusion 2345 of the first swing arm 234 and a plurality of bumps 2432-4 of the second clamping member 2432 are arranged in a staggered manner to form a clamping structure, and the plurality of third protrusions 2345 are correspondingly clamped into the plurality of first clamping slots 2432-5. Shapes and positions of the plurality of third protrusions 2345 of the first swing arm 234 adapt to shapes and positions of the corresponding plurality of first clamping slots 2432-5. One fourth protrusion 2355 of the second swing arm 235 and the plurality of bumps 2432-4 of the second clamping member 2432 are arranged in a staggered manner to form a clamping structure, and the plurality of fourth protrusions 2355 are correspondingly clamped into the plurality of first clamping slots 2432-5. Shapes and positions of the plurality of fourth protrusions 2355 of the second swing arm 235 adapt to shapes and positions of the corresponding plurality of first clamping slots 2432-5.

In embodiments of this application, the elastic piece 2436 is compressed between the second clamping member 2432 and the fastening element 2437. Elastic force generated by the elastic piece 2436 drives the second clamping member 2432 to press the first swing arm 234, the second swing arm 235, the first synchronous gear 236, and the second synchronous gear 237. In embodiments of this application, a clamping structure between the second clamping member 2432, and the first swing arm 234, the second swing arm 235, the first synchronous gear 236, and the second synchronous gear 237 is used, so that the first swing arm 234, the second swing arm 235, the first synchronous gear 236, and the second synchronous gear 237 can stay at some positions. When the first rotating end 2341 of the first swing arm 234, the second rotating end 2351 of the second swing arm 235, the first synchronous gear 236, and the second synchronous gear 237 rotate relative to the first clamping member 2431 and the second clamping member 2432, relative positions of the first protrusion 2364 of the first synchronous gear 236, the second protrusion 2374 of the second synchronous gear 237, the third protrusion 2345 of the first swing arm 234, the fourth protrusion 2355 of the second swing arm 235, and the plurality of bumps 2432-4 of the second clamping member 2432 change, so that different clamping structures can be formed.

Specifically, when the first swing arm 234 moves relative to the second swing arm 235, the first rotating end 2341 of the first swing arm 234, the second rotating end 2351 of the second swing arm 235, the first synchronous gear 236, the second synchronous gear 237, the first clamping member 2431, and the second clamping member 2432 need to be switched from one clamping structure to another clamping structure. In a clamping structure switching process, the second clamping member 2432 is away from the first clamping member 2431, the elastic piece 2436 is further compressed, and elastic force generated by the elastic piece 2436 forms motion damping force, so that the first swing arm 234 and the second swing arm 235 need to move relative to each other with specific driving force. In short, the clamping structure between the second clamping member 2432, and the first swing arm 234, the second swing arm 235, the first synchronous gear 236, and the second synchronous gear 237 can provide motion damping force for relative motion of the first swing arm 234 and the second swing arm 235.

Refer to FIG. 11, FIG. 19, and FIG. 21, the second pressing part 2341-2 of the first rotating end 2341 presses against the body 2431-3 of the first clamping member 2431, a part of the first pressing part 2341-1 presses against the convex part 2431-4 of the first clamping member 2431, and a gap 244 exists between another part of the first pressing part 2341-1 and the body 2431-3 of the first clamping member 2431. In this implementation of this application, a gap exists between the first clamping member 2431 and a partial structure that is of the first rotating end 2341 and that faces the first clamping member 2431, so that a contact area can be reduced, and friction can be reduced. An area of contact between the end that is of the first rotating end 2341 and that faces the first clamping member 2431 and the first clamping member 2431 is excessively small, and consequently, there is no touch feeling during folding or unfolding. An area of contact between the end that is of the first rotating end 2341 and that faces the first clamping member 2431 and the first clamping member 2431 is excessively large, and consequently, folding or unfolding is uneasy. In this application, the area of contact between the end that is of the first rotating end 2341 and that faces the first clamping member 2431 and the first clamping member 2431 may be adjusted, to control a touch feeling of folding or unfolding the electronic device 100.

For a fitting relationship between the third pressing part 2351-1 and the fourth pressing part 2351-2 that are of the second rotating end 2351, and the first clamping member 2431, refer to the fitting relationship between the first pressing part 2341-1 and the second pressing part 2341-2 that are of the first rotating end 2341, and the first clamping member 2431. Details are not described herein again.

As shown in FIG. 16, FIG. 17, and FIG. 22, FIG. 22 is a diagram of exploded structures of the first bracket 232, the second bracket 233, the first moving member 241, the second moving member 242, the first swing arm 234, and the second swing arm 235. The first bracket 232 is rotatably connected to the first moving member 241. For example, the first mounting part 2322 of the first bracket 232 is rotatably connected to the first end 2411-1 of the first connection part 2411 of the first moving member 241, and the first arc-shaped bar 2322-2 of the first mounting part 2322 is located in the third arc-shaped slot 2411-3 of the first end 2411-1. The first arc-shaped bar 2322-2 of the first mounting part 2322 fits the third arc-shaped slot 2411-3 of the first end 2411-1 and can move in the third arc-shaped slot 2411-3 of the first end 2411-1, to implement a rotatable connection between the first bracket 232 and the first moving member 241. It may be understood that a radian of the first arc-shaped bar 2322-2 of the first mounting part 2322 may be consistent with a radian of the third arc-shaped slot 2411-3 of the first end 2411-1.

The second mounting part 2323 of the first bracket 232 is rotatably connected to the second end 2411-2 of the first connection part 2411 of the first moving member 241, the third arc-shaped bar 2411-4 at the second end 2411-2 is located in the first arc-shaped slot 2323-1 of the second mounting part 2323, and the third arc-shaped bar 2411-4 at the second end 2411-2 fits the first arc-shaped slot 2323-1 of the second mounting part 2323 and can move in the first arc-shaped slot 2323-1 of the second mounting part 2323, to implement a rotatable connection between the first bracket 232 and the first moving member 241. It may be understood that a radian of the third arc-shaped bar 2411-4 at the second end 2411-2 may be consistent with a radian of the first arc-shaped slot 2323-1 of the second mounting part 2323.

The second bracket 233 is rotatably connected to the second moving member 242. For example, the fourth mounting part 2332 of the second bracket 233 is rotatably connected to the third end 2421-1 of the second connection part 2421 of the second moving member 242, and the second arc-shaped bar 2332-2 of the fourth mounting part 2332 is located in the fourth arc-shaped slot 2421-3 of the third end 2421-1. The second arc-shaped bar 2332-2 of the fourth mounting part 2332 fits the fourth arc-shaped slot 2421-3 of the third end 2421-1 and can move in the fourth arc-shaped slot 2421-3 of the third end 2421-1, to implement a rotatable connection between the second bracket 233 and the second moving member 242. It may be understood that a radian of the second arc-shaped bar 2332-2 of the fourth mounting part 2332 may be consistent with a radian of the fourth arc-shaped slot 2421-3 of the third end 2421-1.

The fifth mounting part 2333 of the second bracket 233 is rotatably connected to the fourth end 2421-2 of the second connection part 2421 of the second moving member 242, the sixth arc-shaped bar 2421-4 at the fourth end 2421-2 is located in the second arc-shaped slot 2333-1 of the fifth mounting part 2333, and the sixth arc-shaped bar 2421-4 at the fourth end 2421-2 fits the second arc-shaped slot 2333-1 of the fifth mounting part 2333 and can move in the second arc-shaped slot 2333-1 of the fifth mounting part 2333, to implement a rotatable connection between the second bracket 233 and the second moving member 242. It may be understood that a radian of the sixth arc-shaped bar 2421-4 of the fourth end 2421-2 may be consistent with a radian of the second arc-shaped slot 2333-1 of the fifth mounting part 2333.

The foregoing only provides a rotatable connection manner between the first bracket 232 and the first moving member 241, and a ratable connection manner between the second bracket 233 and the second moving member 242. The first bracket 232 and the first moving member 241, and the second bracket 233 and the second moving member 242 may also be rotatably connected in a form of a physical shaft via a rotating shaft.

With reference to FIG. 15, FIG. 19, and FIG. 22, the first sliding end 2342 of the first swing arm 234 is slidably connected to the third mounting part 2324 of the first bracket 232. For example, the first main sliding part 2346 of the first sliding end 2342 is disposed corresponding to the first main slot 2324-2 of the third mounting part 2324, the first side part 2347 of the first sliding end 2342 is clamped into the first side slot 2324-3 of the third mounting part 2324, the second side part 2348 of the first sliding end 2342 is clamped into the second side slot 2324-4 of the third mounting part 2324, and the first sliding end 2342 can slide in the third mounting part 2324, to implement a slidable connection between the first swing arm 234 and the first bracket 232.

The second sliding end 2352 of the second swing arm 235 is slidably connected to the sixth mounting part 2334 of the second bracket 233. For example, the second main sliding part 2356 of the second sliding end 2352 is disposed corresponding to the second main slot 2334-2 of the sixth mounting part 2334, the third side part 2357 of the second sliding end 2352 is clamped into the third side slot 2334-3 of the sixth mounting part 2334, the fourth side part 2358 of the second sliding end 2352 is clamped into the fourth side slot 2334-4 of the sixth mounting part 2334, and the second sliding end 2352 can slide in the sixth mounting part 2334, to implement a slidable connection between the second swing arm 235 and the second bracket 233.

In some implementations, a sliding groove may alternatively be provided at the first sliding end 2342 of the first swing arm 234, a sliding structure may be disposed at the third mounting part 2324 of the first bracket 232, and the sliding structure of the third mounting part 2324 fits the sliding groove of the first swing arm 234 to implement a slidable connection between the first swing arm 234 and the first bracket 232. Alternatively, a sliding groove may be provided at the second sliding end 2352 of the second swing arm 235, a sliding structure may be disposed at the sixth mounting part 2334 of the second bracket 233, and the sliding structure of the sixth mounting part 2334 fits the sliding groove of the second swing arm 235 to implement a slidable connection between the second swing arm 235 and the second bracket 233. A slidable connection manner between the first swing arm 234 and the first bracket 232 and a slidable connection manner between the second swing arm 235 and the second bracket 233 are not described in this application.

With reference to FIG. 10A, FIG. 10B, FIG. 17, and FIG. 23, FIG. 23 is a diagram of a partial structure of the foldable mechanism 23. The first moving member 241 is rotatably connected to the main shaft 231, so that the first bracket 232 is connected to the main shaft 231. For example, the first arc-shaped arm 2413 of the first moving member 241 is rotatably connected to the first mounting space 2312-8 of the fastening member 2312 of the main shaft 231. The fourth arc-shaped bar 2413-2 of the first arc-shaped arm 2413 is clamped into a second gap 2312c of the first mounting space 2312-8, and the second gap 2312c may be arc-shaped space, and is configured to fit the fourth arc-shaped bar 2413-2, to implement a rotatable connection between the first moving member 241 and the main shaft 231. The fifth arc-shaped bar 2413-3 of the first arc-shaped arm 2413 is clamped into the first gap 2312b of the first mounting space 2312-8, and the first gap 2312b may be arc-shaped space, and is configured to fit the fifth arc-shaped bar 2413-3, to implement a rotatable connection between the first moving member 241 and the main shaft 231. The first main arc arm 2413-1 of the first arc-shaped arm 2413 is located in space between the first gap 2312b and the second gap 2312c. The first arc-shaped arm 2413 can rotate in the first mounting space 2312-8, to implement a rotatable connection between the first moving member 241 and the main shaft 231.

In this embodiment, the first moving member 241 fits the main shaft 231 to form a rotatable connection structure using a virtual shaft. This can reduce design difficulty of the foldable mechanism 23, has a low requirement on a size of the foldable mechanism 23, and facilitates lightness and thinness of the foldable mechanism 23. In some other embodiments, the first moving member 241 and the main shaft 231 may alternatively be rotatably connected by using a physical shaft. This is not strictly limited in embodiments of this application.

The second moving member 242 is rotatably connected to the main shaft 231, so that the second bracket 233 is connected to the main shaft 231. For example, the second arc-shaped arm 2423 of the second moving member 242 is rotatably connected to the second mounting space 2312-9 of the fastening member 2312 of the main shaft 231. The seventh arc-shaped bar 2423-2 of the second arc-shaped arm 2423 is clamped into a fourth gap 2312e of the second mounting space 2312-9, and the fourth gap 2312e may be arc-shaped space, and is configured to fit the seventh arc-shaped bar 2423-2, to implement a rotatable connection between the second moving member 242 and the main shaft 231. The eighth arc-shaped bar 2423-3 of the second arc-shaped arm 2423 is clamped into a third gap 2312d of the second mounting space 2312-9, and the third gap 2312d may be arc-shaped space, and is configured to fit the eighth arc-shaped bar 2423-3, to implement a rotatable connection between the second moving member 242 and the main shaft 231. The second main arc arm 2423-1 of the second arc-shaped arm 2423 is located in space between the third gap 2312d and the fourth gap 2312e, and the second arc-shaped arm 2423 can rotate in the second mounting space 2312-9, to implement a rotatable connection between the second moving member 242 and the main shaft 231.

In this embodiment, the second moving member 242 fits the main shaft 231 to form a rotatable connection structure using a virtual shaft. This can reduce design difficulty of the foldable mechanism 23, has a low requirement on a size of the foldable mechanism 23, and facilitates lightness and thinness of the foldable mechanism 23. In some other embodiments, the second moving member 242 and the main shaft 231 may alternatively be rotatably connected by using a physical shaft. This is not strictly limited in embodiments of this application.

As shown in FIG. 6, FIG. 23, and FIG. 24, FIG. 24 is a diagram of structures of the first door plate 238 and the second door plate 239. The first door plate 238 and the second door plate 239 are located on the second side 2316 of the main shaft 231. The first door plate 238 is of a plate-like structure. The first door plate 238 includes a first limiting hole 2382, a fifth assembly hole 2383, a sixth assembly hole 2384, a first plate edge 2385, and a second plate edge 2386. The first plate edge 2385 and the second plate edge 2386 are disposed opposite to each other. The first limiting hole 2382, the fifth assembly hole 2383, and the sixth assembly hole 2384 are located between the first plate edge 2385 and the second plate edge 2386. Positions and quantities of first limiting holes 2382, fifth assembly holes 2383, and sixth assembly holes 2384 on the first door plate 238 may be set according to a requirement. This is not limited in this application.

The second door plate 239 includes a second limiting hole 2392, a seventh assembly hole 2393, an eighth assembly hole 2394, a third plate edge 2395, and a fourth plate edge 2396. The third plate edge 2395 and the fourth plate edge 2396 are disposed opposite to each other. The second limiting hole 2392, the seventh assembly hole 2393, and the eighth assembly hole 2394 are located between the third plate edge 2395 and the fourth plate edge 2396. Positions and quantities of second limiting holes 2392, seventh assembly holes 2393, and eighth assembly holes 2394 on the second door plate 239 may be set according to a requirement. This is not limited in this application.

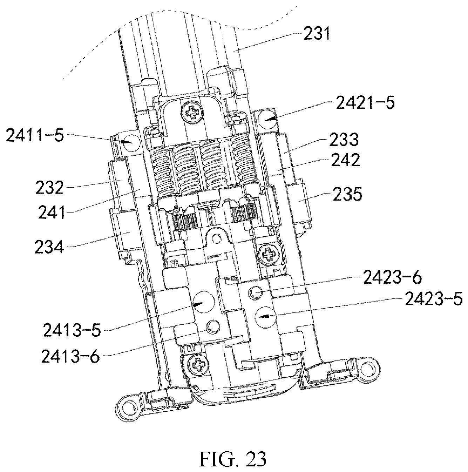

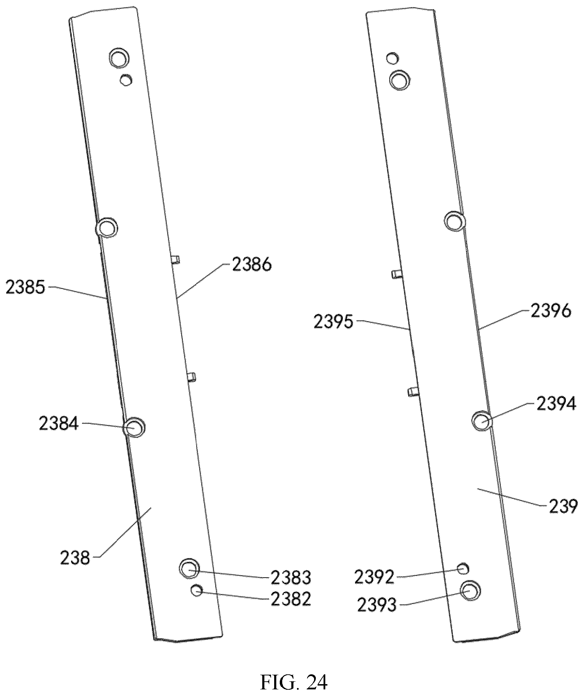

The first door plate 238 is fastened to the first moving member 241. In a process of mounting the first door plate 238, the first limiting post 2413-6 of the first moving member 241 passes through the first limiting hole 2382 of the first door plate 238, to implement preliminary positioning and mounting of the first door plate 238 and the first moving member 241. The fifth assembly hole 2383 of the first door plate 238 is provided corresponding to the second assembly hole 2413-5 of the first moving member 241, and a fastener (not shown in FIG. 23 and FIG. 24) passes through the fifth assembly hole 2383 and the second assembly hole 2413-5 for fastening. The sixth assembly hole 2384 of the first door plate 238 is provided corresponding to the first assembly hole 2411-5 of the first moving member 241, and a fastener (not shown in FIG. 23 and FIG. 24) passes through the sixth assembly hole 2384 and the first assembly hole 2411-5, to fasten the first door plate 238 and the first moving member 241.

The second door plate 239 is fastened to the second moving member 242. In a process of mounting the second door plate 239, the second limiting post 2423-6 of the second moving member 242 passes through the second limiting hole 2392 of the second door plate 239, to implement preliminary positioning and mounting of the second door plate 239 and the second moving member 242. The seventh assembly hole 2393 of the second door plate 239 is provided corresponding to the fourth assembly hole 2423-5 of the second moving member 242, and a fastener (not shown in FIG. 23 and FIG. 24) passes through the seventh assembly hole 2393 and the fourth assembly hole 2423-5 for fastening. The eighth assembly hole 2394 of the second door plate 239 is provided corresponding to the third assembly hole 2421-5 of the second moving member 242, and a fastener (not shown in FIG. 23 and FIG. 24) passes through the eighth assembly hole 2394 and the third assembly hole 2421-5, to fasten the second door plate 239 and the second moving member 242.

When the first moving member 241 and the second moving member 242 are unfolded or folded relative to each other, the first door plate 238 and the second door plate 239 can be driven to be unfolded or folded relative to each other. When the first door plate 238 and the second door plate 239 are unfolded relative to each other, the first door plate 238 and the second door plate 239 are configured to jointly carry a flexible display, to form mechanical support for the flexible display. In a process in which the first door plate 238 and the second door plate 239 are folded relative to each other, space for accommodating the flexible display is avoided.

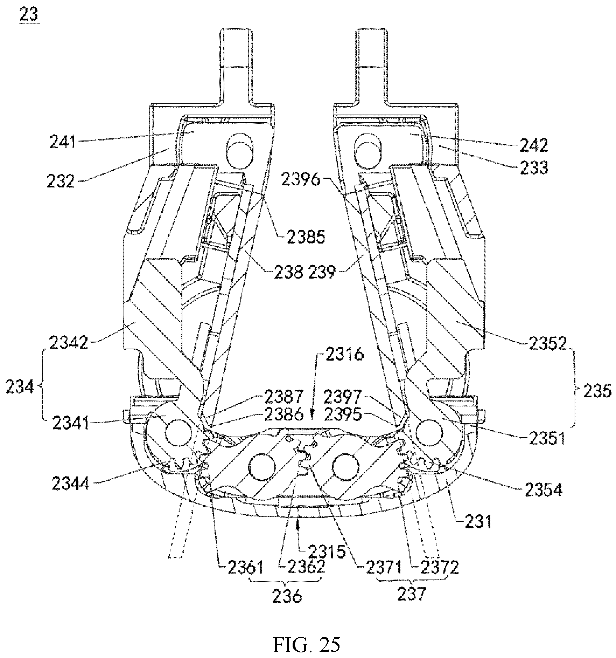

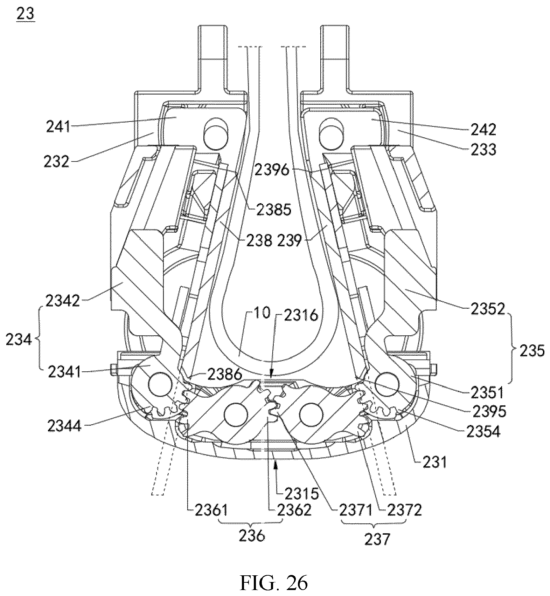

As shown in FIG. 7, FIG. 25, and FIG. 26, FIG. 25 is a diagram of a structure of the foldable mechanism 23 shown in FIG. 7 in a folded state. FIG. 26 is a diagram of a structure of the assembled foldable mechanism 23 shown in FIG. 25 and the flexible display 10. The first rotating end 2341 of the first swing arm 234 is engaged with the first tooth part 2361 of the first synchronous gear 236, and the second rotating end 2351 of the second swing arm 235 is engaged with the fourth tooth part 2372 of the second synchronous gear 237. The second tooth part 2362 of the first synchronous gear 236 is engaged with the third tooth part 2371 of the second synchronous gear 237. In embodiments of this application, the first rotating end 2341 of the first swing arm 234 and the second rotating end 2351 of the second swing arm 235 are connected through the first synchronous gear 236 and the second synchronous gear 237, so that a rotation angle of the first rotating end 2341 of the first swing arm 234 and a rotation angle of the second rotating end 2351 of the second swing arm 235 have a same size and opposite directions, and rotation actions of the first swing arm 234 and the second swing arm 235 are kept synchronous relative to the main shaft 231, that is, the first swing arm 234 and the second swing arm 235 are synchronously close to or away from each other.

Because the first sliding end 2342 of the first swing arm 234 is slidably connected to the first bracket 232, and the second sliding end 2352 of the second swing arm 235 is slidably connected to the second bracket 233, in a process in which the first bracket 232 and the second bracket 233 rotate relative to the main shaft 231, the first swing arm 234 affects a rotation angle of the first bracket 232, and the second swing arm 235 affects a rotation angle of the second bracket 233, so that rotation actions of the first bracket 232 and the second bracket 233 relative to the main shaft 231 are kept synchronous, that is, the first bracket 232 and the second bracket 233 are synchronously close to each other or away from each other, to improve mechanism operation experience of the housing apparatus 20 and the electronic device 100.

With reference to FIG. 12A and FIG. 25, in some embodiments, a radius R1 of a tip circle of the first tooth part 2361 may be greater than a radius R2 of a tip circle of the second tooth part 2362, and a radius R4 of a tip circle of the fourth tooth part 2372 may be greater than a radius R3 of a tip circle of the third tooth part 2371. In the same accommodating space, a greater radius of the synchronous gear indicates a smaller quantity of synchronous gears, and a smaller accumulated transmission error of the synchronous gear (compared with a case of a smaller radius of the synchronous gear, a smaller radius of the synchronous gear indicates a larger quantity of synchronous gears that can be disposed, but a larger accumulated transmission error of the synchronous gear). However, when the radius of the synchronous gear is larger, in a process of folding the foldable mechanism, the synchronous gear with a larger radius presses against the flexible display, and consequently, the flexible display is damaged. In this embodiment of this application, the radius R1 of the tip circle of the first tooth part 2361 is set to be greater than the radius R2 of the tip circle of the second tooth part 2362, and the radius R4 of the tip circle of the fourth tooth part 2372 is set to be greater than the radius R3 of the tip circle of the third tooth part 2371, so that sizes of the first synchronous gear 236 and the second synchronous gear 237 at different positions can be flexibly adjusted. The first synchronous gear 236 with a greater sum of R1 and R2 and the second synchronous gear 237 with a greater sum of R3 and R4 are used, so that a quantity of synchronous gears can be reduced, and an accumulated transmission error of the synchronous gear can be reduced. In other words, synchronous gears are used as few as possible, so that the swing arm 234 and the second swing arm 235 move synchronously, and the first bracket 232 and the second bracket 233 move synchronously. In addition, the tip circle of the second tooth part 2362 and the tip circle of the third tooth part 2371 are set to be small in size, to avoid a case in which the flexible display is damaged as the second tooth part 2362 of the first synchronous gear 236 and the third tooth part 2371 of the second synchronous gear 237 press against the flexible display (in a process of folding the foldable mechanism 23, the second tooth part 2362 of the first synchronous gear 236 moves in a direction close to the second side 2316 of the main shaft 231 and is close to the flexible display, and the third tooth part 2371 of the second synchronous gear 237 moves in a direction close to the second side 2316 of the main shaft 231 and is close to the flexible display. If the tip circle of the second tooth part 2362 and the tip circle of the third tooth part 2371 are set to be large in size, the flexible display 10 is pressed) when the foldable mechanism 23 is in a folded state. This can increase display accommodating space.

In addition, in this application, the tip circle of the first tooth part 2361 is greater in size, and the first tooth part 2361 whose tip circle is greater in size is engaged with the first swing arm 234; and the tip circle of the fourth tooth part 2372 is greater in size, and the fourth tooth part 2372 whose tip circle is greater in size is engaged with the second swing arm 235. Disposing of the first tooth part 2361 whose tip circle is greater in size and the fourth tooth part 2372 whose tip circle is greater in size helps reduce a quantity of synchronous gears and improve motion accuracy. In other words, in embodiments of this application, as few synchronous gears as possible may be used to provide as large display accommodating space as possible. In this way, when the electronic device 100 tends to be miniaturized, it can be ensured that the first bracket 232 and the second bracket 233 of the foldable mechanism 23 can be folded or unfolded synchronously in limited space. A smaller quantity of synchronous gears indicates a larger size of the synchronous gear and a smaller accumulated transmission error of the synchronous gear, which helps improve motion accuracy.

For example, when the foldable mechanism 23 is in the unfolded state, a vertical projection, on a plane on which the first door plate 238 is located, of the first synchronous gear 236 at least partially overlaps the first door plate 238, and a vertical projection, on a plane on which the second door plate 239 is located, of the second synchronous gear 237 at least partially overlaps the second door plate 239.

When the foldable mechanism 23 is in the unfolded state, a tooth that is of the second tooth part 2362 and that is away from the first side 2315 of the main shaft 231 is engaged with a tooth that is of the third tooth part 2371 and that is away from the first side 2315 of the main shaft 231, and the second tooth part 2362 and the third tooth part 2371 are close to the first side 2315 of the main shaft 231. The first tooth part 2361 is away from the first side 2315 of the main shaft 231 and is close to the flexible display 10, and the fourth tooth part 2372 is away from the first side 2315 of the main shaft 231 and is close to the flexible display 10. When the foldable mechanism 23 is in the folded state, a tooth that is of the second tooth part 2362 and that is close to the first side 2315 of the main shaft 231 is engaged with a tooth that is of the third tooth part 2371 and that is close to the first side 2315 of the main shaft 231, and the second tooth part 2362 and the third tooth part 2371 are away from the first side 2315 of the main shaft 231 and close to the flexible display 10. The first tooth part 2361 is close to the first side 2315 of the main shaft 231 and away from the flexible display 10, and the fourth tooth part 2372 is close to the first side 2315 of the main shaft 231 and away from the flexible display 10. When the foldable mechanism 23 is folded from the unfolded state to the folded state, the second tooth part 2362 moves in a direction close to the second side 2316 of the main shaft 231, the third tooth part 2371 moves in a direction close to the second side 2316 of the main shaft 231, the first tooth part 2361 moves in a direction close to the first side 2315 of the main shaft 231, and the fourth tooth part 2372 rotates in a direction close to the first side 2315 of the main shaft 231, to avoid the first door plate 238, the second door plate 239, and the flexible display 10. When the foldable mechanism 23 is unfolded from the folded state to the unfolded state, the second tooth part 2362 rotates in a direction close to the first side 2315 of the main shaft 231, the third tooth part 2371 rotates in a direction close to the first side 2315 of the main shaft 231, the first tooth part 2361 rotates in a direction away from the first side 2315 of the main shaft 231, and the fourth tooth part 2372 rotates in a direction away from the first side 2315 of the main shaft 231.

In this implementation of this application, the tip circle of the second tooth part 2362 and the tip circle of the third tooth part 2371 are set to be small in size, to avoid a case in which the flexible display 10 is damaged as the second tooth part 2362 and the third tooth part 2371 press against the flexible display 10 when the foldable mechanism 23 is folded from the unfolded state to the folded state. In addition, in this application, the radius of the tip circle of the second tooth part 2362 and the radius of the tip circle of the third tooth part 2371 may be set to be small, to increase the display accommodating space of the foldable mechanism 23 in the folded state (in the process of folding the foldable mechanism 23, the second tooth part 2362 of the first synchronous gear 236 moves in a direction close to the second side 2316 of the main shaft 231 and is close to the flexible display, and the third tooth part 2371 of the second synchronous gear 237 moves in a direction close to the second side 2316 of the main shaft 231 and is close to the flexible display. If the tip circle of the second tooth part 2362 and the tip circle of the third tooth part 2371 are large in size, space occupied by the second tooth part 2362 and the third tooth part 2371 is large, and consequently, the display accommodating space of the foldable mechanism 23 is small). In this case, even though the foldable mechanism 23 trends to be miniaturized, there may be sufficient space for accommodating the display, to avoid a case in which quality and user experience of the electronic device 100 are affected as the flexible display 10 in the folded state has a small bending radian and further has a crease when the foldable mechanism 23 is miniaturized.

If the first tooth part 2361 and the second tooth part 2362 with different sizes, and the third tooth part 2371 and the fourth tooth part 2372 with different sizes are not designed, the first synchronous gear 236 adopts tooth parts of a same size, and the second synchronous gear 237 adopts tooth parts of a same size. This increases space of the foldable mechanism 23 occupied by the first synchronous gear 236 and the second synchronous gear 237. In addition, the first synchronous gear 236 and the second synchronous gear 237 press against the flexible display 10 or reduce space occupied by the flexible display 10.

In some embodiments of this application, the first door plate 238 is fastened to the first moving member 241, and the second door plate 239 is fastened to the second moving member 242. In a process in which the first moving member 241 rotates relative to the main shaft 231 and rotates relative to the first bracket 232, the first door plate 238 is driven to move. In a process in which the second moving member 242 rotates relative to the main shaft 231 and rotates relative to the second bracket 233, the second door plate 239 is driven to move. The first door plate 238 and the second door plate 239 can be folded or unfolded relative to each other. The first door plate 238 is fastened to the first moving member 241, and the second door plate 239 is fastened to the second moving member 242. Therefore, in a relative unfolding or folding process of the foldable mechanism 23, the first door plate 238 does not rotate relative to the first moving member 241, and the second door plate 239 does not rotate relative to the second moving member 242. This can avoid a case in which the first tooth part 2361 whose tip circle is greater in size presses against the first door plate 238 and obstructs movement of the first door plate 238, or can avoid a case in which the fourth tooth part 2372 whose tip circle is greater in size presses against the second door plate 239 and obstructs movement of the second door plate 239 during relative folding or unfolding of the foldable mechanism 23, so that the first door plate 238 and the second door plate 239 can avoid the first tooth part 2361 and the fourth tooth part 2372 in a process in which the foldable mechanism 23 is folded or unfolded relatively.

In some embodiments, when the foldable mechanism 23 is in the folded state, a rotation center of the first rotating end 2341 is located on a side that is of a plane on which the first door plate 238 is located and that is away from the flexible display 10, and a rotation center of the second rotating end 2351 is located on a side that is of a plane on which the second door plate 239 is located and that is away from the flexible display 10. For example, the first rotating end 2341 of the first swing arm 234 and the first door plate 238 are used as an example. In this implementation of this application, the rotation center of the first rotating end 2341 is disposed on a side that is of the first door plate 238 and that is away from the flexible display 10. This helps form water drop-shaped display accommodating space in the folded state, and helps increase the display accommodating space. In a process of relatively folding from the unfolded state to the folded state, a rotation angle of the first door plate 238 is generally greater than that of the first swing arm 234. If the rotation center of the first rotating end 2341 is on a side that is of the first door plate 238 and that faces the flexible display 10, the first door plate 238 needs to rotate at a greater angle (compared with that in a case in which the rotation center of the first rotating end 2341 is on the side that is of the first door plate 238 and that is away from the flexible display 10) when the electronic device 100 is folded to the same state. This reduces the display accommodating space. In addition, if the rotation center of the first rotating end 2341 is on a side that is of the first door plate 238 and that faces the flexible display 10, position interference between the first swing arm 234 and the first door plate 238 is more likely to occur, and a higher avoidance requirement is imposed between the first door plate 238 and the first swing arm 234. In this implementation of this application, the rotation center of the first rotating end 2341 is always disposed to be on the side that is of the first door plate 238 and that is away from the flexible display 10, and therefore, there is a low probability that interference occurs between the first rotating end 2341 and the first door plate 238.

In some embodiments, the second plate edge 2386 of the first door plate 238 includes a first avoidance structure 2387, and the third plate edge 2395 of the second door plate 239 includes a second avoidance structure 2397. For example, the first avoidance structure 2387 may be a slope, and the second avoidance structure 2397 may be a slope. When the foldable mechanism 23 is in the unfolded state, the second plate edge 2386 is close to the second door plate 239, and the third plate edge 2395 is close to the first door plate 238. The first avoidance structure 2387 is located on the side that is of the first door plate 238 and that is away from the flexible display, and the second avoidance structure 2397 is located on the side that is of the second door plate 239 and that is away from the flexible display. The first avoidance structure 2387 and the second avoidance structure 2397 are configured to avoid affecting folding or unfolding of the foldable mechanism 23 due to collision between the first door plate 238 and the second door plate 239, and the first tooth part 2361 with a greater size and the fourth tooth part 2372 with a greater size in a process in which the foldable mechanism 23 is relatively folded or unfolded. In another implementation, the first avoidance structure 2387 may be an L-shaped concave part, and the second avoidance structure 2397 may be an L-shaped concave part. Specific structures of the first avoidance structure 2387 and the second avoidance structure 2397 are not limited in this application.

With reference to FIG. 7, FIG. 12B, and FIG. 25, the first synchronous gear 236 further includes a first non-tooth part 2365 and a second non-tooth part 2366. The first tooth part 2361 and the second tooth part 2362 are spaced apart, and both the first non-tooth part 2365 and the second non-tooth part 2366 are located between the first tooth part 2361 and the second tooth part 2362 and are spaced apart relative to each other, the first non-tooth part 2365 is closer to the first side 2315 than the second non-tooth part 2366, the second non-tooth part 2366 is closer to the second side 2316 than the first non-tooth part 2365, and a radian of the first non-tooth part 2365 is greater than a radian of the second non-tooth part 2366. The radian of the first non-tooth part 2365 is set to be greater than the radian of the second non-tooth part 2366, so that when the foldable mechanism 23 is in the unfolded state, a plurality of teeth of the second tooth part 2362 press against the bottom of the outer cover 2311. This helps reduce space occupied by the first synchronous gear 236 in the unfolded state in a thickness direction of the electronic device 100.

In some embodiments, a tooth that is of the first tooth part 2361 and that is connected to the first non-tooth part 2365 is a first tooth 2361-1, a tooth that is of the second tooth part 2362 and that is connected to the first non-tooth part 2365 is a second tooth 2362-1, a tooth that is of the first tooth part 2361 and that is connected to the second non-tooth part 2366 is a third tooth 2361-2, and a tooth that is of the second tooth part 2362 and that is connected to the second non-tooth part 2366 is a fourth tooth 2362-2. The first tooth 2361-1 and the second tooth 2362-1 are connected to both ends of the first non-tooth part 2365, and the third tooth 2361-2 and the fourth tooth 2362-2 are connected to both ends of the second non-tooth part 2366. A spacing L4 between a tip of the first tooth 2361-1 and a tip of the second tooth 2362-1 is greater than a spacing L5 between a tip of the third tooth 2361-2 and a tip of the fourth tooth 2362-2, to avoid a case in which a plurality of teeth of the second tooth part 2362 press against the bottom of the outer cover 2311 when the foldable mechanism 23 is in the unfolded state. This helps reduce space occupied by the first synchronous gear 236 in the unfolded state in the thickness direction of the electronic device 100.

The second synchronous gear 237 includes a third non-tooth part 2375 and a fourth non-tooth part 2376. For structures of the third non-tooth part 2375 and the fourth non-tooth part 2376, refer to the first non-tooth part 2365 and the second non-tooth part 2366. Details are not described herein again.

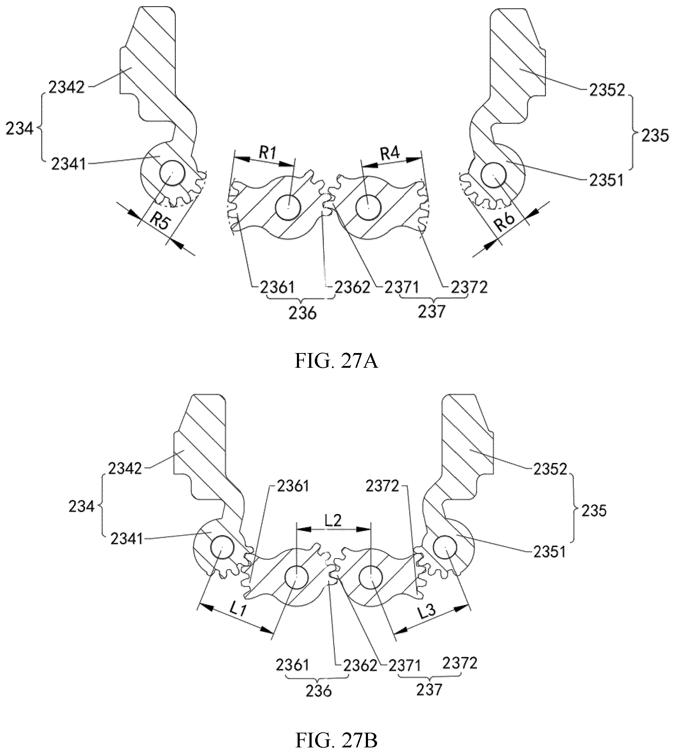

As shown in FIG. 27A, FIG. 27A is a diagram of exploded structures of the first swing arm 234, the first synchronous gear 236, the second synchronous gear 237, and the second swing arm 235. In some embodiments, a radius R1 of a tip circle of the first tooth part 2361 is greater than a radius R5 of a tip circle of the first rotating end 2341, and a radius R4 of a tip circle of the fourth tooth part 2372 is greater than a radius R6 of a tip circle of the second rotating end 2351. In a process of folding or unfolding the foldable mechanism 23, a rotation angle of the first tooth part 2361 is less than a rotation angle of the first swing arm 234, and a rotation angle of the fourth tooth part 2372 is less than a rotation angle of the second swing arm 235. This helps avoid a case in which movement of the first door plate 238 and the second door plate 239 is obstructed when the rotation angle of the first tooth part 2361 whose tip circle is greater in size and the rotation angle of the fourth tooth part 2372 whose tip circle is greater in size are excessively large in a rotation process.

In some embodiments, a radius of an indexing circle of the first tooth part 2361 is greater than a radius of an indexing circle of the first rotating end 2341, and a radius of an indexing circle of the fourth tooth part 2372 is greater than a radius of an indexing circle of the second rotating end 2351. When the size of the tip circle changes, the size of the indexing circle changes accordingly.

Another synchronous gear may be further disposed between the first synchronous gear 236 and the second synchronous gear 237, that is, the first synchronous gear 236 and the second synchronous gear 237 are indirectly engaged with each other. The another synchronous gear between the first synchronous gear 236 and the second synchronous gear 237 may adopt a design of two tooth parts with different tip circles may be used, or a design of a tooth part with a same tip circle. This is not limited in this application.

FIG. 27B is a diagram of a combined structure of the first swing arm 234, the first synchronous gear 236, the second synchronous gear 237, and the second swing arm 235 according to an implementation of this application. A spacing from a rotation center of the first rotating end 2341 to a rotation center of the first synchronous gear 236 is a first spacing L1, a spacing from a rotation center of the first synchronous gear 236 to a rotation center of the second synchronous gear 237 is a second spacing L2, and a spacing from a rotation center of the second rotating end 2351 to a rotation center of the second synchronous gear 237 is a third spacing L3, where the first spacing L1 is greater than the second spacing L2, and the third spacing L3 is greater than the second spacing. For example, the first spacing L1 is greater than the second spacing L2. This helps reserve sufficient space for disposing the first rotating end 2341 and the first tooth part 2361 of the first synchronous gear 236. A size of a tip circle of the first tooth part 2361 may be increased according to a need to reduce a rotation angle of the first tooth part 2361 in a folding or unfolding process of the foldable mechanism 23, and prevent the first tooth part 2361 from touching the first door plate 238 in a rotation process. In addition, the spacing from the rotation center of the first rotating end 2341 to the rotation center of the first synchronous gear 236 is set to be large, so that when the foldable mechanism 23 is in a folded state, the rotation center of the first rotating end 2341 is located on a side that is of a plane on which the first door plate 238 is located and that is away from the flexible display 10. This helps avoid collision between the first tooth part 2361 and the first door plate 238, and increase display accommodating space of the foldable mechanism 23.

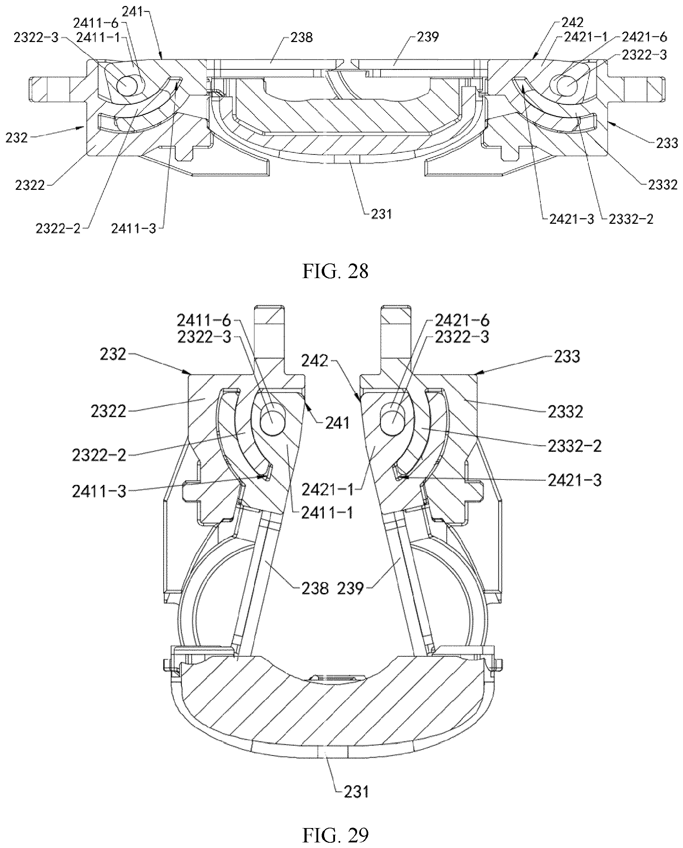

As shown in FIG. 28 and FIG. 29, FIG. 28 is a cross-sectional view of the structure shown in FIG. 6 at B-B. FIG. 29 is a diagram of a structure of the structure shown in FIG. 28 in another use state. The structure shown in FIG. 28 is in an unfolded state, and the structure shown in FIG. 29 is in a folded state. In some embodiments, the first mounting part 2322 of the first bracket 232 is rotatably connected to the first end 2411-1 of the first moving member 241. When the foldable mechanism 23 is relatively unfolded from the folded state to the unfolded state, the first arc-shaped bar 2322-2 of the first mounting part 2322 partially rotates out of the third arc-shaped slot 2411-3 at the first end 2411-1. When the foldable mechanism 23 is relatively folded from the unfolded state to the folded state, the first arc-shaped bar 2322-2 of the first mounting part 2322 rotates into the third arc-shaped slot 2411-3 at the first end 2411-1. In this implementation of this application, the first arc-shaped bar 2322-2 of the first mounting part 2322 rotates in the third arc-shaped slot 2411-3 at the first end 2411-1 to implement a rotatable connection with a simple connection manner between the first bracket 232 and the first moving member 241. In another implementation, the first bracket 232 and the first moving member 241 may alternatively be rotatably connected through a pin shaft or in another manner. This is not limited in this application.

In some embodiments, with reference to FIG. 16, FIG. 17, FIG. 28, and FIG. 29, the first moving member 241 is slidably connected to the first bracket 232. The first end 2411-1 of the first moving member 241 is provided with a first hole 2411-6, and the first hole 2411-6 and the third arc-shaped slot 2411-3 are spaced part. The first mounting part 2322 of the first bracket 232 is provided with a first shaft 2322-3, the first shaft 2322-3 passes through the first hole 2411-6, and the first shaft 2322-3 can slide in the first hole 2411-6. In this application, the first shaft 2322-3 can fit the first hole 2411-6, to prevent the first arc-shaped bar 2322-2 of the first bracket 232 from being detached when moving in the third arc-shaped slot 2411-3 of the first moving member 241. In addition, relative folding or unfolding of the first bracket 232 and the first moving member 241 is not affected.

It may be understood that the first shaft 2322-3 and the first mounting part 2322 may be of an integrated structure, or a hole may be provided on the first mounting part 2322, and the first shaft 2322-3 is inserted into the hole of the first mounting part, so that the first shaft 2322-3 is fastened to the first mounting part 2322 of the first bracket 232.

The second moving member 242 is slidably connected to the second bracket 233. The second moving member 242 is provided with a second hole 2421-6, and the second bracket 233 is provided with a second shaft 2332-3. For a connection manner between the second shaft 2332-3 and the second hole 2421-6, refer to that between the first shaft 2322-3 and the first hole 2411-6. Details are not described herein again.

The fourth mounting part 2332 of the second bracket 233 is rotatably connected to the third end 2421-1 of the second moving member 242. When the foldable mechanism 23 is relatively unfolded from the folded state to the unfolded state, the second arc-shaped bar 2332-2 of the fourth mounting part 2332 partially rotates out of the fourth arc-shaped slot 2421-3 at the third end 2421-1. When the foldable mechanism 23 is relatively folded from the unfolded state to the folded state, the second arc-shaped bar 2332-2 of the fourth mounting part 2332 rotates into the fourth arc-shaped slot 2421-3 at the third end 2421-1. In this implementation of this application, the second arc-shaped bar 2332-2 of the fourth mounting part 2332 rotates in the fourth arc-shaped slot 2421-3 at the third end 2421-1 to implement a rotatable connection with a simple connection manner between the second bracket 233 and the second moving member 242. In another implementation, the second bracket 233 and the second moving member 242 may alternatively be rotatably connected through a pin shaft or in another manner. This is not limited in this application.

It may be understood that the first moving member 241 may be rotatably connected to the first bracket 232, or the first moving member 241 may be slidably connected to the first bracket 232, or the first moving member 241 is rotatably connected to the first bracket 232 and is slidably connected to the first bracket 232. The second moving member 242 may be rotatably connected to the second bracket 233, or the second moving member 242 may be slidably connected to the second bracket 233, or the second moving member 242 is rotatably connected to the second bracket 233 and is slidably connected to the second bracket 233.

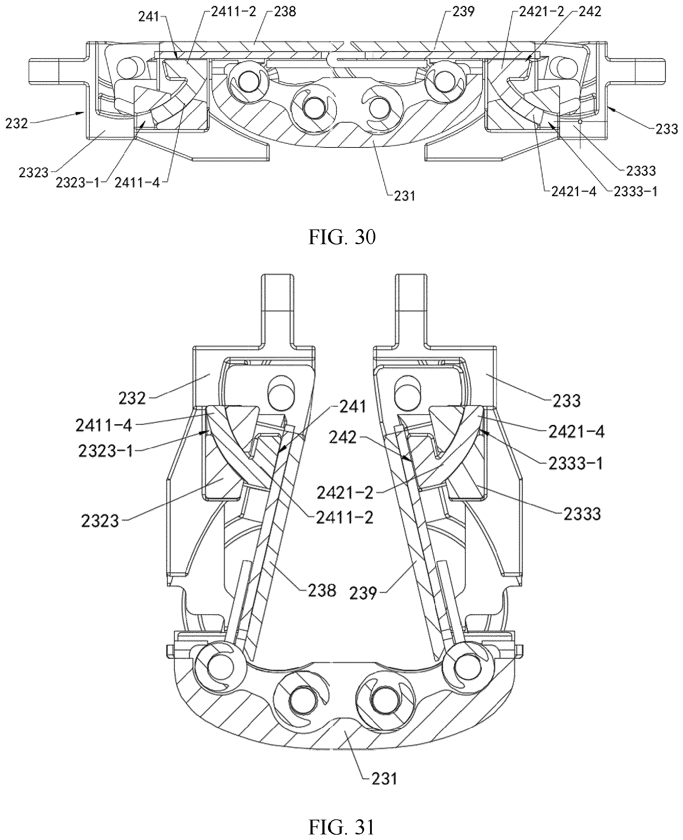

As shown in FIG. 30 and FIG. 31, FIG. 30 is a cross-sectional view of the structure shown in FIG. 6 at C-C. FIG. 31 is a diagram of the structure shown in FIG. 30 in a folded state.

The second mounting part 2323 of the first bracket 232 is rotatably connected to the second end 2411-2 of the first moving member 241. When the foldable mechanism 23 is relatively unfolded from the folded state to an unfolded state, the third arc-shaped bar 2411-4 at the second end 2411-2 partially rotates out of the first arc-shaped slot 2323-1 of the second mounting part 2323. When the foldable mechanism 23 is relatively folded from the unfolded state to the folded state, the third arc-shaped bar 2411-4 at the second end 2411-2 rotates into the first arc-shaped slot 2323-1 of the second mounting part 2323. In this implementation of this application, the third arc-shaped bar 2411-4 at the second end 2411-2 rotates in the first arc-shaped slot 2323-1 of the second mounting part 2323 to implement a rotatable connection with a simple connection manner between the first bracket 232 and the first moving member 241. In another implementation, the first bracket 232 and the first moving member 241 may alternatively be rotatably connected through a pin shaft or in another manner. This is not limited in this application.

The fifth mounting part 2333 of the second bracket 233 is rotatably connected to the fourth end 2421-2 of the second moving member 242. When the foldable mechanism 23 is relatively unfolded from the folded state to the unfolded state, the sixth arc-shaped bar 2421-4 at the fourth end 2421-2 partially rotates out of the second arc-shaped slot 2333-1 of the fifth mounting part 2333. When the foldable mechanism 23 is relatively folded from the unfolded state to the folded state, the sixth arc-shaped bar 2421-4 at the fourth end 2421-2 rotates into the second arc-shaped slot 2333-1 of the fifth mounting part 2333. In this implementation of this application, the sixth arc-shaped bar 2421-4 at the fourth end 2421-2 rotates in the second arc-shaped slot 2333-1 of the fifth mounting part 2333 to implement a rotatable connection with a simple connection manner between the second bracket 233 and the second moving member 242. In another implementation, the second bracket 233 and the second moving member 242 may alternatively be rotatably connected through a pin shaft or in another manner. This is not limited in this application.

In this application, the first mounting part 2322 of the first bracket 232 is rotatably connected to the first end 2411-1 of the first moving member 241, and the second mounting part 2323 of the first bracket 232 is rotatably connected to the second end 2411-2 of the first moving member 241, that is, two ends of the first bracket 232 and two ends of the first moving member 241 are provided with rotatable connecting structures and are rotatably connected, so that stability of a connection mechanism of the first bracket 232 and the first moving member 241 is high, and the connection mechanism can rotate stably in a folding or unfolding process, thereby ensuring stability of the foldable mechanism 23. The fourth mounting part 2332 of the second bracket 233 is rotatably connected to the third end 2421-1 of the second moving member 242, and the fifth mounting part 2333 of the second bracket 233 is rotatably connected to the fourth end 2421-2 of the second moving member 242, that is, two ends of the second bracket 233 and two ends of the second moving member 242 are provided with rotatable connecting structures and are rotatably connected, so that stability of a connection mechanism of the second bracket 233 and the second moving member 242 is high. The connection mechanism can rotate stably in the folding or unfolding process, thereby ensuring stability of the foldable mechanism 23.

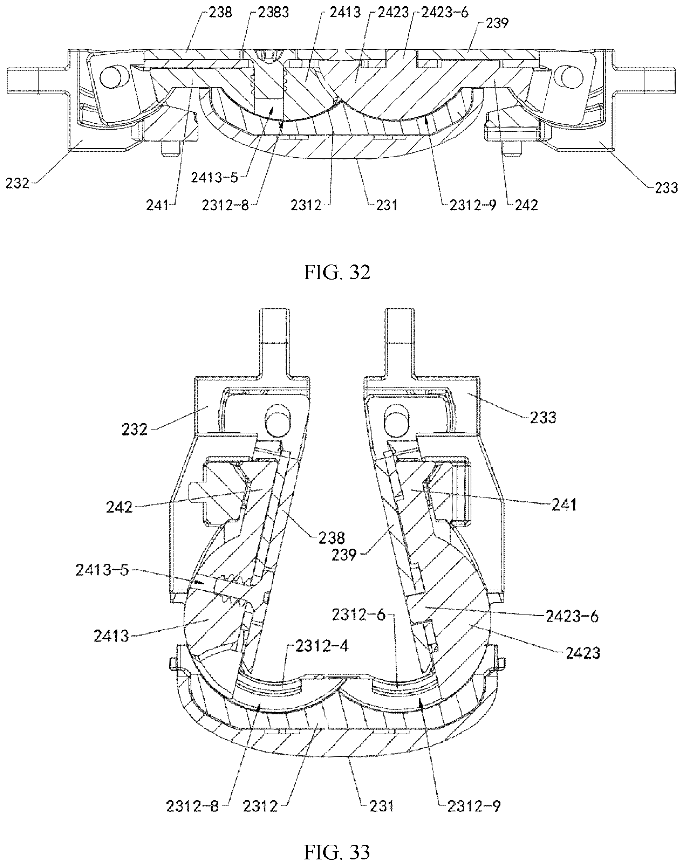

As shown in FIG. 32 and FIG. 33, FIG. 32 is a cross-sectional view of the structure shown in FIG. 6 at D-D. The structure of the structure shown in FIG. 32 in a folded state. The first arc-shaped arm 2413 of the first moving member 241 is rotatably connected to the fastening member 2312 of the main shaft 231. The first arc-shaped arm 2413 is mounted in the first mounting space 2312-8. When the foldable mechanism 23 is relatively folded from an unfolded state to the folded state, the first arc-shaped arm 2413 partially rotates out of the first mounting space 2312-8. When the foldable mechanism 23 is relatively unfolded from the folded state to the unfolded state, the first arc-shaped arm 2413 rotates into the first mounting space 2312-8.

In this embodiment, the first arc-shaped arm 2413 of the first moving member 241 fits the fastening member 2312 of the main shaft 231 to form a rotatable connection structure using a virtual shaft. The first moving member 241 and the main shaft 231 are rotatably connected by using a virtual shaft. This can reduce design difficulty of the foldable mechanism 23, has a low requirement on a size of the foldable mechanism 23, and facilitates lightness and thinness of the foldable mechanism 23. In some other embodiments, the first moving member 241 and the main shaft 231 may alternatively be rotatably connected by using a physical shaft. This is not strictly limited in embodiments of this application.

The second arc-shaped arm 2423 of the second moving member 242 is rotatably connected to the fastening member 2312 of the main shaft 231. The second arc-shaped arm 2423 is mounted in the second mounting space 2312-9. When the foldable mechanism 23 is relatively folded from the unfolded state to the folded state, the second arc-shaped arm 2423 partially rotates out of the second mounting space 2312-9. When the foldable mechanism 23 is relatively unfolded from the folded state to the unfolded state, the second arc-shaped arm 2423 rotates into the second mounting space 2312-9.

In this embodiment, the second arc-shaped arm 2423 of the second moving member 242 fits the fastening member 2312 of the main shaft 231 to form a rotatable connection structure using a virtual shaft. The second moving member 242 and the main shaft 231 are rotatably connected by using a virtual shaft. This can reduce design difficulty of the foldable mechanism 23, has a low requirement on a size of the foldable mechanism 23, and facilitates lightness and thinness of the foldable mechanism 23. In some other embodiments, the second moving member 242 and the main shaft 231 may alternatively be rotatably connected by using a physical shaft. This is not strictly limited in embodiments of this application.

Refer to FIG. 32 and FIG. 33. The fifth assembly hole 2383 of the first door plate 238 is provided corresponding to the second assembly hole 2413-5 of the first moving member 241, and a fastener passes through the fifth assembly hole 2383 and the second assembly hole 2413-5. The fastener may be a screw, a bolt, or the like. The second door plate 239 is fastened to the second moving member 242. In a process of unfolding or folding the foldable mechanism 23, the first door plate 238 and the second door plate 239 can move with the first moving member 241 and the second moving member 242.

In embodiments of this application, structures and interconnection relationships of the main shaft 231, the first bracket 232, the second bracket 233, the first swing arm 234, the second swing arm 235, the first moving member 241, the second moving member 242, the first clamping member 2431, the second clamping member 2432, the first rotatable connecting shaft 2433, the second rotatable connecting shaft 2434, a plurality of third rotatable connecting shafts 2435, a plurality of elastic pieces 2436, the fastening element 2437, the first door plate 238, and the second door plate 239 are merely an implementation of the foldable mechanism 23. The foldable mechanism 23 may alternatively be implemented in another manner, provided that the first synchronous gear 236 and the second synchronous gear 237 in this application are used. A radius R1 of a tip circle of the first tooth part 2361 of the first synchronous gear 236 is different from a radius R2 of a tip circle of the second tooth part 2362, and a radius R3 of a tip circle of the third tooth part 2371 of the second synchronous gear 237 is different from a radius R4 of a tip circle of the fourth tooth part 2372, which fall within the protection scope of this application. For example, in another implementation, the foldable mechanism 23 may alternatively include a third door plate, and the foldable mechanism with the third door plate may alternatively use designs of the first synchronous gear 236 and the second synchronous gear 237 in this application.

In this application, the radius R1 of the tip circle of the first tooth part 2361 of the first synchronous gear 236 is designed to be different from the radius R2 of the tip circle of the second tooth part 2362, and the radius R3 of the tip circle of the third tooth part 2371 of the second synchronous gear 237 is designed to be different from the radius R4 of the tip circle of the fourth tooth part 2372. This helps adjust a size of the first synchronous gear 236 and a size of the second synchronous gear 237 based on space of the foldable mechanism 23. In this case, the first synchronous gear 236 and the second synchronous gear 237 occupy the space of the foldable mechanism 23 flexibly, and can be adjusted in size at different parts according to a requirement. This helps sufficiently utilize internal space of the foldable mechanism 23. In addition, in some embodiments of this application, the radius R1 of the tip circle of the first tooth part 2361 may be set to be greater than the radius R2 of the tip circle of the second tooth part 2362, and the radius R4 of the tip circle of the fourth tooth part 2372 is set to be less than the radius R3 of the tip circle of the third tooth part 2371. This helps provide display accommodating space as large as possible with as few synchronous gears as possible. When the electronic device 100 tends to be miniaturized, it can be ensured that the first bracket 232 and the second bracket 233 of the foldable mechanism 23 can be folded or unfolded synchronously in limited space. A smaller quantity of synchronous gears indicates a larger size of the synchronous gear and a smaller accumulated transmission error of the synchronous gear, which helps improve motion accuracy.

The foregoing descriptions are merely specific implementations of this application, but are not intended to limit the protection scope of this application. Therefore, the protection scope of this application shall be subject to the protection scope of the claims.

## Claims

1. An electronic device (100), comprising a first housing (21), a second housing (22), a foldable mechanism (23), and a flexible display (10), wherein the first housing (21), the second housing (22), and the foldable mechanism (23) jointly carry the flexible display (10);
the foldable mechanism (23) comprises a main shaft (231), a first bracket (232), a second bracket (233), a first swing arm (234), a second swing arm (235), a first synchronous gear (236), and a second synchronous gear (237);
the first swing arm (234) comprises a first rotating end (2341) and a first sliding end (2342), the first rotating end (2341) is rotatably connected to the main shaft (231), the first sliding end (2342) is slidably connected to the first bracket (232), and the first housing (21) is fastened to the first bracket (232); and the second swing arm (235) comprises a second rotating end (2351) and a second sliding end (2352), the second rotating end (2351) is rotatably connected to the main shaft (231), the second sliding end (2352) is slidably connected to the second bracket (233), and the second housing (22) is fastened to the second bracket (233);
the first synchronous gear (236) and the second synchronous gear (237) are configured to synchronously move the first swing arm (234) and the second swing arm (235);
the first synchronous gear (236) is rotatably connected to the main shaft (231), the first synchronous gear (236) comprises a first tooth part (2361) and a second tooth part (2362), and a radius of a tip circle of the first tooth part (2361) is different from a radius of a tip circle of the second tooth part (2362); and
the second synchronous gear (237) is rotatably connected to the main shaft (231), the second synchronous gear (237) comprises a third tooth part (2371) and a fourth tooth part (2372), a radius of a tip circle of the third tooth part (2371) is different from a radius of a tip circle of the fourth tooth part (2372), and the third tooth part (2371) is engaged with the second tooth part (2362).

2. The electronic device (100) according to claim 1, wherein the first tooth part (2361) is engaged with the first rotating end (2341), and the fourth tooth part (2372) is engaged with the second rotating end (2351).

3. The electronic device (100) according to claim 1 or 2, wherein the main shaft (231) comprises a first side (2315) and a second side (2316) that are disposed opposite to each other, the first side (2315) is an appearance side of the main shaft (231), and the second side (2316) is closer to the flexible display (10) than the first side (2315); and the radius of the tip circle of the first tooth part (2361) is greater than the radius of the tip circle of the second tooth part (2362), and the radius of the tip circle of the fourth tooth part (2372) is greater than the radius of the tip circle of the third tooth part (2371); and
in a process in which the foldable mechanism (23) is folded from an unfolded state to a folded state, the second tooth part (2362) moves in a direction close to the second side (2316), and the third tooth part (2371) moves in a direction close to the second side (2316).

4. The electronic device (100) according to claim 3, wherein the radius of the tip circle of the first tooth part (2361) is greater than a radius of a tip circle of the first rotating end (2341), and the radius of the tip circle of the fourth tooth part (2372) is greater than a radius of a tip circle of the second rotating end (2351).

5. The electronic device (100) according to claim 3 or 4, wherein a spacing from a rotation center of the first rotating end (2341) to a rotation center of the first synchronous gear (236) is a first spacing (L1), a spacing from the rotation center of the first synchronous gear (236) to a rotation center of the second synchronous gear (237) is a second spacing (L2), and the first spacing (L1) is greater than the second spacing (L2).

6. The electronic device (100) according to any one of claims 3 to 5, wherein the first synchronous gear (236) comprises a first non-tooth part (2365) and a second non-tooth part (2366), the first tooth part (2361) and the second tooth part (2362) are spaced apart, both the first non-tooth part (2365) and the second non-tooth part (2366) are located between the first tooth part (2361) and the second tooth part (2362) and are spaced apart relative to each other, the first non-tooth part (2365) is closer to the first side (2315) than the second non-tooth part (2366), the second non-tooth part (2366) is closer to the second side (2316) than the first non-tooth part (2365), and a radian of the first non-tooth part (2365) is greater than a radian of the second non-tooth part (2366).

7. The electronic device (100) according to any one of claims 3 to 5, wherein the first synchronous gear (236) comprises a first non-tooth part (2365) and a second non-tooth part (2366), the first tooth part (2361) and the second tooth part (2362) are spaced apart, both the first non-tooth part (2365) and the second non-tooth part (2366) are located between the first tooth part (2361) and the second tooth part (2362) and are spaced apart relative to each other, the first non-tooth part (2365) is closer to the first side (2315) than the second non-tooth part (2366), and the second non-tooth part (2366) is closer to the second side (2316) than the first non-tooth part (2365); and
a tooth that is of the first tooth part (2361) and that is connected to the first non-tooth part (2365) is a first tooth (2361-1), a tooth that is of the second tooth part (2362) and that is connected to the first non-tooth part (2365) is a second tooth (2362-1), a tooth that is of the first tooth part (2361) and that is connected to the second non-tooth part (2366) is a third tooth (2361-2), a tooth that is of the second tooth part (2362) and that is connected to the second non-tooth part (2366) is a fourth tooth (2362-2), and a spacing between a tip of the first tooth (2361-1) and a tip of the second tooth (2362-1) is greater than a spacing between a tip of the third tooth (2361-2) and a tip of the fourth tooth (2362-2).

8. The electronic device (100) according to any one of claims 3 to 7, wherein the foldable mechanism (23) comprises a first door plate (238) and a second door plate (239), and the first door plate (238) and the second door plate (239) are located on the second side (2316); when the foldable mechanism (23) is in the unfolded state, a first support surface (2381) of the first door plate (238) is flush with a second support surface (2391) of the second door plate (239); and when the foldable mechanism (23) is in the folded state, the first support surface (2381) of the first door plate (238) and the second support surface (2391) of the second door plate (239) are disposed opposite to each other, and are away from each other in a direction close to the main shaft (231); and
when the foldable mechanism (23) is in the folded state, the rotation center of the first rotating end (2341) is located on a side that is of a plane on which the first door plate (238) is located and that is away from the flexible display (10), and a rotation center of the second rotating end (2351) is located on a side that is of a plane on which the second door plate (239) is located and that is away from the flexible display (10).

9. The electronic device (100) according to any one of claims 3 to 8, wherein the foldable mechanism (23) comprises the first door plate (238) and the second door plate (239), and the first door plate (238) and the second door plate (239) are located on the second side (2316); when the foldable mechanism (23) is in the unfolded state, the first support surface (2381) of the first door plate (238) is flush with the second support surface (2391) of the second door plate (239); and when the foldable mechanism (23) is in the folded state, the first support surface (2381) of the first door plate (238) and the second support surface (2391) of the second door plate (239) are disposed opposite to each other, and are away from each other in the direction close to the main shaft (231); and
when the foldable mechanism (23) is in the unfolded state, a vertical projection, on the plane on which the first door plate (238) is located, of the first synchronous gear (236) at least partially overlaps the first door plate (238), a vertical projection, on the plane on which the second door plate (239) is located, of the second synchronous gear (237) at least partially overlaps the second door plate (239), and in the process in which the foldable mechanism (23) is folded from the unfolded state to the folded state, the first tooth part (2361) moves toward the first side (2315), and the fourth tooth part (2372) moves toward the first side (2315).

10. The electronic device (100) according to any one of claims 3 to 9, wherein the main shaft (231) comprises an outer cover (2311), and the first side (2315) is an outer side of the outer cover (2311); the foldable mechanism (23) comprises a first clamping member (2431), a second clamping member (2432), a fastening element (2437), and an elastic piece (2436), wherein the second clamping member (2432) is located between the first clamping member (2431) and the fastening element (2437), the first synchronous gear (236) and the second synchronous gear (237) are located between the first clamping member (2431) and the second clamping member (2432), the elastic piece (2436) is located between the second clamping member (2432) and the fastening element (2437), and both the first clamping member (2431) and the fastening element (2437) are fastened to the outer cover (2311).

11. The electronic device (100) according to claim 10, wherein a surface that is of the first clamping member (2431) and that faces the second clamping member (2432) is a smooth surface; a plurality of bump groups (2432-2) that are spaced apart are disposed at an end that is of the second clamping member (2432) and that faces the first clamping member (2431), wherein each bump group (2432-2) comprises a plurality of bumps (2432-4), the plurality of bumps (2432-4) are arranged in an annular shape and are spaced apart, and a first clamping slot (2432-5) is formed between adjacent bumps (2432-4); and a plurality of first protrusions (2364) are disposed at an end that is of the first synchronous gear (236) and that faces the second clamping member (2432), and a plurality of second protrusions (2374) are disposed on a side that is of the second synchronous gear (237) and that faces the second clamping member (2432), wherein the plurality of first protrusions (2364) are clamped into the first clamping slots (2432-5) of one bump group (2432-2), and the plurality of second protrusions (2374) are clamped into the first clamping slots (2432-5) of another bump group (2432-2).

12. The electronic device (100) according to claim 10, wherein the first clamping member (2431) comprises a body (2431-3) and a convex part (2431-4), and the convex part (2431-4) is located on a side that is of the body (2431-3) and that faces the second clamping member (2432); and a side that is of the first rotating end (2341) and that faces the first clamping member (2431) comprises a first pressing part (2341-1) and a second pressing part (2341-2), wherein the second pressing part (2341-2) protrudes from the first pressing part (2341-1), the second pressing part (2341-2) presses against the body (2431-3), a part of the first pressing part (2341-1) presses against the convex part (2431-4), and a gap (244) exists between another part of the first pressing part (2341-1) and the body (2431-3).

13. The electronic device (100) according to claim 1 or 2, wherein the foldable mechanism (23) comprises a first moving member (241), the first moving member (241) is rotatably connected to the first bracket (232), and the first moving member (241) is rotatably connected to the main shaft (231), and the first moving member (241) is slidably connected to the first bracket (232).

14. The electronic device (100) according to claim 1 or 2, wherein the foldable mechanism (23) comprises a first moving member (241), the first moving member (241) is slidably connected to the first bracket (232), and the first moving member (241) is rotatably connected to the main shaft (231).

15. The electronic device (100) according to claim 13, wherein a third arc-shaped slot (2411-3) and a first hole (2411-6) that are spaced part are provided at an end of the first moving member (241), a first arc-shaped bar (2322-2) and a first shaft (2322-3) are disposed at an end of the first bracket (232), the first arc-shaped bar (2322-2) fits the third arc-shaped slot (2411-3) and is capable of moving in the third arc-shaped slot (2411-3), the first shaft (2322-3) passes through the first hole (2411-6), and the first shaft (2322-3) is capable of sliding in the first hole (2411-6).

## Patentansprüche

1. Elektronische Vorrichtung (100), umfassend ein erstes Gehäuse (21), ein zweites Gehäuse (22), einen Klappmechanismus (23) und ein flexibles Display (10), wobei das erste Gehäuse (21), das zweite Gehäuse (22) und der Klappmechanismus (23) das flexible Display (10) gemeinsam tragen;
der Klappmechanismus (23) eine Hauptwelle (231), eine erste Halterung (232), eine zweite Halterung (233), einen ersten Schwingarm (234), einen zweiten Schwingarm (235), ein erstes Synchronrad (236) und ein zweites Synchronrad (237) umfasst;
der erste Schwingarm (234) ein erstes Drehende (2341) und ein erstes Gleitende (2342) umfasst, wobei das erste Drehende (2341) drehbar mit der Hauptwelle (231) verbunden ist, das erste Gleitende (2342) gleitbar mit der ersten Halterung (232) verbunden ist und das erste Gehäuse (21) an der ersten Halterung (232) befestigt ist; und der zweite Schwingarm (235) ein zweites Drehende (2351) und ein zweites Gleitende (2352) umfasst, wobei das zweite Drehende (2351) drehbar mit der Hauptwelle (231) verbunden ist, das zweite Gleitende (2352) gleitbar mit der zweiten Halterung (233) verbunden ist und das zweite Gehäuse (22) an der zweiten Halterung (233) befestigt ist;
das erste Synchronrad (236) und das zweite Synchronrad (237) dazu konfiguriert sind, den ersten Schwingarm (234) und den zweiten Schwingarm (235) synchron zu bewegen;
das erste Synchronrad (236) drehbar mit der Hauptwelle (231) verbunden ist, das erste Synchronrad (236) einen ersten Zahnteil (2361) und einen zweiten Zahnteil (2362) umfasst und sich ein Radius eines Kopfkreises des ersten Zahnteils (2361) von einem Radius eines Kopfkreises des zweiten Zahnteils (2362) unterscheidet; und
das zweite Synchronrad (237) drehbar mit der Hauptwelle (231) verbunden ist, das zweite Synchronrad (237) einen dritten Zahnteil (2371) und einen vierten Zahnteil (2372) umfasst, sich ein Radius eines Kopfkreises des dritten Zahnteils (2371) von einem Radius eines Kopfkreises des vierten Zahnteils (2372) unterscheidet und der dritte Zahnteil (2371) mit dem zweiten Zahnteil (2362) in Eingriff ist.

2. Elektronische Vorrichtung (100) nach Anspruch 1, wobei der erste Zahnteil (2361) mit dem ersten Drehende (2341) in Eingriff ist und der vierte Zahnteil (2372) mit dem zweiten Drehende (2351) in Eingriff ist.

3. Elektronische Vorrichtung (100) nach Anspruch 1 oder 2, wobei die Hauptwelle (231) eine erste Seite (2315) und eine zweite Seite (2316), die einander gegenüberliegend angeordnet sind, umfasst, die erste Seite (2315) eine Sichtseite der Hauptwelle (231) ist und die zweite Seite (2316) näher an dem flexiblen Display (10) liegt als die erste Seite (2315); und der Radius des Kopfkreises des ersten Zahnteils (2361) größer ist als der Radius des Kopfkreises des zweiten Zahnteils (2362) und der Radius des Kopfkreises des vierten Zahnteils (2372) größer ist als der Radius des Kopfkreises des dritten Zahnteils (2371); und sich bei einem Vorgang, bei dem der Klappmechanismus (23) von einem aufgeklappten Zustand in einen eingeklappten Zustand geklappt wird, der zweite Zahnteil (2362) in eine Richtung nahe der zweiten Seite (2316) bewegt und sich der dritte Zahnteil (2371) in eine Richtung nahe der zweiten Seite (2316) bewegt.

4. Elektronische Vorrichtung (100) nach Anspruch 3, wobei der Radius des Kopfkreises des ersten Zahnteils (2361) größer ist als ein Radius eines Kopfkreises des ersten Drehendes (2341) und der Radius des Kopfkreises des vierten Zahnteils (2372) größer ist als ein Radius eines Kopfkreises des zweiten Drehendes (2351).

5. Elektronische Vorrichtung (100) nach Anspruch 3 oder 4, wobei ein Abstand von einem Drehzentrum des ersten Drehendes (2341) zu einem Drehzentrum des ersten Synchronrads (236) ein erster Abstand (L1) ist, ein Abstand von dem Drehzentrum des ersten Synchronrads (236) zu einem Drehzentrum des zweiten Synchronrads (237) ein zweiter Abstand (L2) ist und der erste Abstand (L1) größer ist als der zweite Abstand (L2).

6. Elektronische Vorrichtung (100) nach einem der Ansprüche 3 bis 5, wobei das erste Synchronrad (236) einen ersten Nicht-Zahnteil (2365) und einen zweiten Nicht-Zahnteil (2366) umfasst, der erste Zahnteil (2361) und der zweite Zahnteil (2362) voneinander beabstandet sind, sich sowohl der erste Nicht-Zahnteil (2365) als auch der zweite Nicht-Zahnteil (2366) zwischen dem ersten Zahnteil (2361) und dem zweiten Zahnteil (2362) befinden und relativ zueinander beabstandet sind, der erste Nicht-Zahnteil (2365) näher an der ersten Seite (2315) als der zweite Nicht-Zahnteil (2366) liegt, der zweite Nicht-Zahnteil (2366) näher an der zweiten Seite (2316) als der erste Nicht-Zahnteil (2365) liegt und ein Radiant des ersten Nicht-Zahnteils (2365) größer ist als ein Radiant des zweiten Nicht-Zahnteils (2366).

7. Elektronische Vorrichtung (100) nach einem der Ansprüche 3 bis 5, wobei das erste Synchronrad (236) einen ersten Nicht-Zahnteil (2365) und einen zweiten Nicht-Zahnteil (2366) umfasst, der erste Zahnteil (2361) und der zweite Zahnteil (2362) voneinander beabstandet sind, sich sowohl der erste Nicht-Zahnteil (2365) als auch der zweite Nicht-Zahnteil (2366) zwischen dem ersten Zahnteil (2361) und dem zweiten Zahnteil (2362) befinden und relativ zueinander beabstandet sind, der erste Nicht-Zahnteil (2365) näher an der ersten Seite (2315) als der zweite Nicht-Zahnteil (2366) liegt und der zweite Nicht-Zahnteil (2366) näher an der zweiten Seite (2316) als der erste Nicht-Zahnteil (2365) liegt; und
ein Zahn, der zu dem ersten Zahnteil (2361) gehört und der mit dem ersten Nicht-Zahnteil (2365) verbunden ist, ein erster Zahn (2361-1) ist; ein Zahn, der zu dem zweiten Zahnteil (2362) gehört und der mit dem ersten Nicht-Zahnteil (2365) verbunden ist, ein zweiter Zahn (2362-1) ist; ein Zahn, der zu dem ersten Zahnteil (2361) gehört und der mit dem zweiten Nicht-Zahnteil (2366) verbunden ist, ein dritter Zahn (2361-2) ist; ein Zahn, der zu dem zweiten Zahnteil (2362) gehört und der mit dem zweiten Nicht-Zahnteil (2366) verbunden ist, ein vierter Zahn (2362-2) ist und ein Abstand zwischen einer Spitze des ersten Zahns (2361-1) und einer Spitze des zweiten Zahns (2362-1) größer ist als ein Abstand zwischen einer Spitze des dritten Zahns (2361-2) und einer Spitze des vierten Zahns (2362-2).

8. Elektronische Vorrichtung (100) nach einem der Ansprüche 3 bis 7, wobei der Klappmechanismus (23) eine erste Türplatte (238) und eine zweite Türplatte (239) umfasst und sich die erste Türplatte (238) und die zweite Türplatte (239) auf der zweiten Seite (2316) befinden; wenn der Klappmechanismus (23) in dem ausgeklappten Zustand ist, eine erste Auflagefläche (2381) der ersten Türplatte (238) bündig mit einer zweiten Auflagefläche (2391) der zweiten Türplatte (239) ist; und wenn der Klappmechanismus (23) in dem eingeklappten Zustand ist, die erste Auflagefläche (2381) der ersten Türplatte (238) und die zweite Auflagefläche (2391) der zweiten Türplatte (239) einander gegenüberliegend angeordnet sind und in einer Richtung nahe der Hauptwelle (231) voneinander entfernt sind; und
wenn der Klappmechanismus (23) in dem eingeklappten Zustand ist, sich das Drehzentrum des ersten Drehendes (2341) auf einer Seite, die in einer Ebene liegt, auf der sich die erste Türplatte (238) befindet und die von dem flexiblen Display (10) abgewandt ist, befindet und ein Drehzentrum des zweiten Drehendes (2351) auf einer Seite, die in einer Ebene liegt, auf der sich die zweite Türplatte (239) befindet und die von dem flexiblen Display (10) abgewandt ist, befindet.

9. Elektronische Vorrichtung (100) nach einem der Ansprüche 3 bis 8, wobei der Klappmechanismus (23) die erste Türplatte (238) und die zweite Türplatte (239) umfasst und sich die erste Türplatte (238) und die zweite Türplatte (239) auf der zweiten Seite (2316) befinden; wenn der Klappmechanismus (23) in dem aufgeklappten Zustand ist, die erste Auflagefläche (2381) der ersten Türplatte (238) bündig mit der zweiten Auflagefläche (2391) der zweiten Türplatte (239) ist; und wenn der Klappmechanismus (23) in dem eingeklappten Zustand ist, die erste Auflagefläche (2381) der ersten Türplatte (238) und die zweite Auflagefläche (2391) der zweiten Türplatte (239) einander gegenüberliegend angeordnet sind und in der Richtung nahe der Hauptwelle (231) voneinander entfernt sind; und
wenn der Klappmechanismus (23) in dem ausgeklappten Zustand ist, eine vertikale Projektion auf der Ebene, auf der sich die erste Türplatte (238) befindet, des ersten Synchronrads (236) die erste Türplatte (238) zumindest teilweise überlappt; eine vertikale Projektion auf der Ebene, auf der sich die zweite Türplatte (239) befindet, des zweiten Synchronrads (237) die zweite Türplatte (239) zumindest teilweise überlappt; und während des Vorgangs, bei dem der Klappmechanismus (23) von dem ausgeklappten in den eingeklappten Zustand eingeklappt wird, sich der erste Zahnteil (2361) zu der ersten Seite (2315) hin bewegt und sich der vierte Zahnteil (2372) zu der ersten Seite (2315) hin bewegt.

10. Elektronische Vorrichtung (100) nach einem der Ansprüche 3 bis 9, wobei die Hauptwelle (231) eine Außenabdeckung (2311) umfasst und die erste Seite (2315) eine Außenseite der Außenabdeckung (2311) ist; der Klappmechanismus (23) ein erstes Klemmglied (2431), ein zweites Klemmglied (2432), ein Befestigungselement (2437) und ein elastisches Stück (2436) umfasst, wobei sich das zweite Klemmglied (2432) zwischen dem ersten Klemmglied (2431) und dem Befestigungselement (2437) befindet, sich das erste Synchronrad (236) und das zweite Synchronrad (237) zwischen dem ersten Klemmglied (2431) und dem zweiten Klemmglied (2432) befinden, sich das elastische Stück (2436) zwischen dem zweiten Klemmglied (2432) und dem Befestigungselement (2437) befindet und sowohl das erste Klemmglied (2431) als auch das Befestigungselement (2437) an der Außenabdeckung (2311) befestigt sind.

11. Elektronische Vorrichtung (100) nach Anspruch 10, wobei eine Fläche, die zu dem ersten Klemmglied (2431) gehört und die dem zweiten Klemmglied (2432) zugewandt ist, eine glatte Fläche ist; eine Vielzahl von voneinander beabstandeten Erhebungsgruppen (2432-2) an einem Ende, das zu dem zweiten Klemmglied (2432) gehört und das dem ersten Klemmglied (2431) zugewandt ist, angeordnet sind, wobei jede Erhebungsgruppe (2432-2) eine Vielzahl von Erhebungen (2432-4) umfasst, die Vielzahl von Erhebungen (2432-4) ringförmig angeordnet sind und voneinander beabstandet sind und ein erster Klemmschlitz (2432-5) zwischen benachbarten Erhebungen (2432-4) ausgebildet ist; und eine Vielzahl von ersten Vorsprüngen (2364) an einem Ende, das zu dem ersten Synchronrad (236) gehört und das dem zweiten Klemmglied (2432) zugewandt ist, angeordnet sind und eine Vielzahl von zweiten Vorsprüngen (2374) an einer Seite, die zu dem zweiten Synchronrad (237) gehört und die dem zweiten Klemmglied (2432) zugewandt ist, angeordnet sind, wobei die Vielzahl von ersten Vorsprüngen (2364) in die ersten Klemmschlitze (2432-5) einer Erhebungsgruppe (2432-2) eingeklemmt sind und die Vielzahl von zweiten Vorsprüngen (2374) in die ersten Klemmschlitze (2432-5) einer anderen Erhebungsgruppe (2432-2) eingeklemmt sind.

12. Elektronische Vorrichtung (100) nach Anspruch 10, wobei das erste Klemmglied (2431) einen Körper (2431-3) und einen konvexen Teil (2431-4) umfasst und sich der konvexe Teil (2431-4) auf einer Seite, die zu dem Körper (2431-3) gehört und die dem zweiten Klemmglied (2432) zugewandt ist, befindet; und eine Seite, die zu dem ersten Drehende (2341) gehört und die dem ersten Klemmglied (2431) zugewandt ist, einen ersten Pressteil (2341-1) und einen zweiten Pressteil (2341-2) umfasst, wobei der zweite Pressteil (2341-2) aus dem ersten Pressteil (2341-1) hervorsteht, der zweite Pressteil (2341-2) gegen den Körper (2431-3) drückt, ein Teil des ersten Pressteils (2341-1) gegen den konvexen Teil (2431-4) drückt und ein Spalt (244) zwischen einem anderen Teil des ersten Pressteils (2341-1) und dem Körper (2431-3) besteht.

13. Elektronische Vorrichtung (100) nach Anspruch 1 oder 2, wobei der Klappmechanismus (23) ein erstes bewegliches Glied (241) umfasst, das erste bewegliche Glied (241) drehbar mit der ersten Halterung (232) verbunden ist und das erste bewegliche Glied (241) drehbar mit der Hauptwelle (231) verbunden ist und das erste bewegliche Glied (241) verschiebbar mit der ersten Halterung (232) verbunden ist.

14. Elektronische Vorrichtung (100) nach Anspruch 1 oder 2, wobei der Klappmechanismus (23) ein erstes bewegliches Glied (241) umfasst, das erste bewegliche Glied (241) verschiebbar mit der ersten Halterung (232) verbunden ist und das erste bewegliche Glied (241) drehbar mit der Hauptwelle (231) verbunden ist.

15. Elektronische Vorrichtung (100) nach Anspruch 13, wobei ein dritter bogenförmiger Schlitz (2411-3) und eine erste Bohrung (2411-6), die voneinander beabstandet sind, an einem Ende des ersten beweglichen Glieds (241) bereitgestellt sind, ein erster bogenförmiger Stab (2322-2) und eine erste Welle (2322-3) an einem Ende der ersten Halterung (232) angeordnet sind, der erste bogenförmige Stab (2322-2) in den dritten bogenförmigen Schlitz (2411-3) passt und in der Lage ist, sich in dem dritten bogenförmigen Schlitz (2411-3) zu bewegen, die erste Welle (2322-3) durch die erste Bohrung (2411-6) verläuft und die erste Welle (2322-3) in der Lage ist, sich in der ersten Bohrung (2411-6) zu verschieben.

## Revendications

1. Dispositif électronique (100), comprenant un premier boîtier (21), un second boîtier (22), un mécanisme pliable (23), et un affichage flexible (10), dans lequel le premier boîtier (21), le second boîtier (22), et le mécanisme pliable (23) supportent conjointement l'affichage flexible (10) ;
le mécanisme pliable (23) comprend un arbre principal (231), un premier support (232), un second support (233), un premier bras oscillant (234), un second bras oscillant (235), un premier engrenage synchrone (236), et un second engrenage synchrone (237) ;
le premier bras oscillant (234) comprend une première extrémité rotative (2341) et une première extrémité coulissante (2342), la première extrémité rotative (2341) est connectée de manière rotative à l'arbre principal (231), la première extrémité coulissante (2342) est connectée de manière coulissante au premier support (232), et le premier boîtier (21) est fixé au premier support (232) ; et le second bras oscillant (235) comprend une seconde extrémité rotative (2351) et une seconde extrémité coulissante (2352), la seconde extrémité rotative (2351)est connectée de manière rotative à l'arbre principal (231), la seconde extrémité coulissante (2352) est connectée de manière coulissante au second support (233), et le second boîtier (22) est fixé au second support (233) ;
le premier engrenage synchrone (236) et le second engrenage synchrone (237) sont configurés pour déplacer de manière synchrone le premier bras oscillant (234) et le second bras oscillant (235) ;
le premier engrenage synchrone (236) est connecté de manière rotative à l'arbre principal (231), le premier engrenage synchrone (236) comprend une première partie dentée (2361) et une deuxième partie dentée (2362), et un rayon du cercle de tête de la première partie dentée (2361) est différent d'un rayon du cercle de tête de la deuxième partie dentée (2362) ; et
le second engrenage synchrone (237) est connecté de manière rotative à l'arbre principal (231), le second engrenage synchrone (237) comprend une troisième partie dentée (2371) et une quatrième partie dentée (2372), un rayon d'un cercle de tête de la troisième partie dentée (2371) est différent d'un rayon d'un cercle de tête de la quatrième partie dentée (2372), et la troisième partie dentée (2371) vient en prise avec la deuxième partie dentée (2362).

2. Dispositif électronique (100) selon la revendication 1, dans lequel la première partie dentée (2361) vient en prise avec la première extrémité rotative (2341), et la quatrième partie dentée (2372) vient en prise avec la seconde extrémité rotative (2351).

3. Dispositif électronique (100) selon la revendication 1 ou 2, dans lequel l'arbre principal (231) comprend un premier côté (2315) et un second côté (2316) qui sont disposés face à face, le premier côté (2315) est un côté apparent de l'arbre principal (231), et le second côté (2316) est plus proche de l'affichage flexible (10) que le premier côté (2315) ; et le rayon du cercle de tête de la première partie dentée (2361) est supérieur au rayon du cercle de tête de la deuxième partie dentée (2362), et le rayon du cercle de tête de la quatrième partie dentée (2372) est supérieur au rayon du cercle de tête de la troisième partie dentée (2371) ; et
dans un processus dans lequel le mécanisme pliable (23) est plié d'un état déplié à un état plié, la deuxième partie dentée (2362) se déplace dans une direction proche du second côté (2316), et la troisième partie dentée (2371) se déplace dans une direction proche du second côté (2316).

4. Dispositif électronique (100) selon la revendication 3, dans lequel le rayon du cercle de tête de la première partie dentée (2361) est supérieur à un rayon d'un cercle de tête de la première extrémité rotative (2341), et le rayon du cercle de tête de la quatrième partie dentée (2372) est supérieur à un rayon d'un cercle de tête de la seconde extrémité rotative (2351).

5. Dispositif électronique (100) selon la revendication 3 ou 4, dans lequel un espacement entre un centre de rotation de la première extrémité rotative (2341) et un centre de rotation du premier engrenage synchrone (236) est un premier espacement (L1), un espacement entre le centre de rotation du premier engrenage synchrone (236) et un centre de rotation du second engrenage synchrone (237) est un second espacement (L2), et le premier espacement (L1) est supérieur au second espacement (L2).

6. Dispositif électronique (100) selon l'une quelconque des revendications 3 à 5, dans lequel le premier engrenage synchrone (236) comprend une première partie non dentée (2365) et une seconde partie non dentée (2366), la première partie dentée (2361) et la deuxième partie dentée (2362) sont espacées, la première partie non dentée (2365) et la seconde partie non dentée (2366) sont situées entre la première partie dentée (2361) et la deuxième partie dentée (2362) et sont espacées l'une de l'autre, la première partie non dentée (2365) est plus proche du premier côté (2315) que la seconde partie non dentée (2366), la seconde partie non dentée (2366) est plus proche du second côté (2316) que la première partie non dentée (2365), et un radian de la première partie non dentée (2365) est supérieur à un radian de la seconde partie non dentée (2366).

7. Dispositif électronique (100) selon l'une quelconque des revendications 3 à 5, dans lequel le premier engrenage synchrone (236) comprend une première partie non dentée (2365) et une seconde partie non dentée (2366), la première partie dentée (2361) et la deuxième partie dentée (2362) sont espacées, la première partie non dentée (2365) et la seconde partie non dentée (2366) sont situées entre la première partie dentée (2361) et la deuxième partie dentée (2362) et sont espacées l'une de l'autre, la première partie non dentée (2365) est plus proche du premier côté (2315) que la seconde partie non dentée (2366), et la seconde partie non dentée (2366) est plus proche du second côté (2316) que la première partie non dentée (2365) ; et
une dent qui est de la première partie dentée (2361) et qui est connectée à la première partie non dentée (2365) est une première dent (2361-1), une dent qui est de la deuxième partie dentée (2362) et qui est connectée à la première partie non dentée (2365) est une deuxième dent (2362-1), une dent qui est de la première partie dentée (2361) et qui est connectée à la seconde partie non dentée (2366) est une troisième dent (2361-2), une dent qui est de la deuxième partie dentée (2362) et qui est connectée à la seconde partie non dentée (2366) est une quatrième dent (2362-2), et un espacement entre une tête de la première dent (2361-1) et une tête de la deuxième dent (2362-1) est supérieur à un espacement entre une tête de la troisième dent (2361-2) et une tête de la quatrième dent (2362-2).

8. Dispositif électronique (100) selon l'une quelconque des revendications 3 à 7, dans lequel le mécanisme pliable (23) comprend une première plaque de porte (238) et une seconde plaque de porte (239), et la première plaque de porte (238) et la seconde plaque de porte (239) sont situées sur le second côté (2316) ; lorsque le mécanisme pliable (23) est dans l'état déplié, une première surface d'appui (2381) de la première plaque de porte (238) est affleurante à une seconde surface d'appui (2391) de la seconde plaque de porte (239) ; et lorsque le mécanisme pliable (23) est dans l'état plié, la première surface d'appui (2381) de la première plaque de porte (238) et la seconde surface d'appui (2391) de la seconde plaque de porte (239) sont disposées face à face, et sont éloignées l'une de l'autre dans une direction proche de l'arbre principal (231) ; et
lorsque le mécanisme pliable (23) est dans l'état plié, le centre de rotation de la première extrémité rotative (2341) est situé sur un côté qui est d'un plan sur lequel la première plaque de porte (238) est située et qui est éloigné de l'affichage flexible (10), et un centre de rotation de la seconde extrémité rotative (2351)est situé sur un côté qui est d'un plan sur lequel la seconde plaque de porte (239) est située et qui est éloigné de l'affichage flexible (10).

9. Dispositif électronique (100) selon l'une quelconque des revendications 3 à 8, dans lequel le mécanisme pliable (23) comprend la première plaque de porte (238) et la seconde plaque de porte (239), et la première plaque de porte (238) et la seconde plaque de porte (239) sont situées sur le second côté (2316) ; lorsque le mécanisme pliable (23) est dans l'état déplié, la première surface d'appui (2381) de la première plaque de porte (238) est affleurante à la seconde surface d'appui (2391) de la seconde plaque de porte (239) ; et lorsque le mécanisme pliable (23) est dans l'état plié, la première surface d'appui (2381) de la première plaque de porte (238) et la seconde surface d'appui (2391) de la seconde plaque de porte (239) sont disposées face à face, et sont éloignées l'une de l'autre dans la direction proche de l'arbre principal (231) ; et
lorsque le mécanisme pliable (23) est dans l'état déplié, une projection verticale, sur le plan sur lequel la première plaque de porte (238) est située, du premier engrenage synchrone (236) chevauche au moins partiellement la première plaque de porte (238), une projection verticale, sur le plan sur lequel la seconde plaque de porte (239) est située, du second engrenage synchrone (237) chevauche au moins partiellement la seconde plaque de porte (239), et dans le processus au cours duquel le mécanisme pliable (23) est plié de l'état déplié à l'état plié, la première partie dentée (2361) se déplace vers le premier côté (2315), et la quatrième partie dentée (2372) se déplace vers le premier côté (2315).

10. Dispositif électronique (100) selon l'une quelconque des revendications 3 à 9, dans lequel l'arbre principal (231) comprend un couvercle extérieur (2311), et le premier côté (2315) est un côté extérieur du couvercle extérieur (2311) ; le mécanisme pliable (23) comprend un premier élément de serrage (2431), un second élément de serrage (2432), un élément de fixation (2437), et une pièce élastique (2436), dans lequel le second élément de serrage (2432) est situé entre le premier élément de serrage (2431) et l'élément de fixation (2437), le premier engrenage synchrone (236) et le second engrenage synchrone (237) sont situés entre le premier élément de serrage (2431) et le second élément de serrage (2432), la pièce élastique (2436) est située entre le second élément de serrage (2432) et l'élément de fixation (2437), et le premier élément de serrage (2431) et l'élément de fixation (2437) sont tous deux fixés au couvercle extérieur (2311).

11. Dispositif électronique (100) selon la revendication 10, dans lequel une surface qui est du premier élément de serrage (2431) et qui fait face au second élément de serrage (2432) est une surface lisse ; une pluralité de groupes de bosses (2432-2) qui sont espacés sont disposés au niveau d'une extrémité qui est du second élément de serrage (2432) et qui fait face au premier élément de serrage (2431), dans lequel chaque groupe de bosses (2432-2) comprend une pluralité de bosses (2432-4), la pluralité de bosses (2432-4) sont agencés en une forme annulaire et sont espacées, et une première fente de serrage (2432-5) est formée entre des bosses adjacentes (2432-4) ; et une pluralité de premières saillies (2364) sont disposées au niveau d'une extrémité qui est du premier engrenage synchrone (236) et qui fait face au second élément de serrage (2432), et une pluralité de secondes saillies (2374) sont disposées sur un côté qui est du second engrenage synchrone (237) et qui fait face au second élément de serrage (2432), dans lequel la pluralité de premières saillies (2364) sont serrées dans les premières fentes de serrage (2432-5) d'un groupe de bosses (2432-2), et la pluralité de secondes saillies (2374) sont serrées dans les premières fentes de serrage (2432-5) d'un autre groupe de bosses (2432-2).

12. Dispositif électronique (100) selon la revendication 10, dans lequel le premier élément de serrage (2431) comprend un corps (2431-3) et une partie convexe (2431-4), et la partie convexe (2431-4) est située sur un côté qui est du corps (2431-3) et qui fait face au second élément de serrage (2432) ; et un côté qui est de la première extrémité rotative (2341) et qui fait face au premier élément de serrage (2431) comprend une première partie de pression (2341-1) et une seconde partie de pression (2341-2), dans lequel la seconde partie de pression (2341-2) fait saillie à partir de la première partie de pression (2341-1), la seconde partie de pression (2341-2) appuie contre le corps (2431-3), une partie de la première partie de pression (2341-1) appuie contre la partie convexe (2431-4), et un espace (244) existe entre une autre partie de la première partie de pression (2341-1) et le corps (2431-3).

13. Dispositif électronique (100) selon la revendication 1 ou 2, dans lequel le mécanisme pliable (23) comprend un premier élément mobile (241), le premier élément mobile (241) est connecté de manière rotative au premier support (232), et le premier élément mobile (241) est connecté de manière rotative à l'arbre principal (231), et le premier élément mobile (241) est connecté de manière coulissante au premier support (232).

14. Dispositif électronique (100) selon la revendication 1 ou 2, dans lequel le mécanisme pliable (23) comprend un premier élément mobile (241), le premier élément mobile (241) est connecté de manière coulissante au premier support (232), et le premier élément mobile (241) est connecté de manière rotative à l'arbre principal (231).

15. Dispositif électronique (100) selon la revendication 13, dans lequel une troisième fente en forme d'arc (2411-3) et un premier trou (2411-6) qui sont espacés sont prévus au niveau d'une extrémité du premier élément mobile (241), une première barre en forme d'arc (2322-2) et un premier arbre (2322-3) sont disposés au niveau d'une extrémité du premier support (232), la première barre en forme d'arc (2322-2) s'insère dans la troisième fente en forme d'arc (2411-3) et est capable de se déplacer dans la troisième fente en forme d'arc (2411-3), le premier arbre (2322-3) traverse le premier trou (2411-6), et le premier arbre (2322-3) est capable de coulisser dans le premier trou (2411-6).
